# EUROPEAN PATENT APPLICATION

(11) **EP 4 401 488 A1**
(43) Date of publication of application: **17.07.2024**
(21) Application number: 22874789.5
(22) Date of filing: 23.09.2022
(51) Int. Cl.: H04W 72/04

(54) **COMMUNICATION METHOD AND APPARATUS**

(30) Priority: 30.09.2021 CN 202111166020
(71) Applicant: Huawei Technologies Co., Ltd., Shenzhen, Guangdong 518129 (CN)
(72) Inventor: ZHOU, Yue, Shenzhen, Guangdong 518129 (CN); CHEN, Ying, Shenzhen, Guangdong 518129 (CN); LUO, Hejia, Shenzhen, Guangdong 518129 (CN)
(74) Representative: Thun, Clemens
(86) International application number: PCT/CN2022/120882
(87) International publication number: WO 2023/051403

(57) **Abstract**

This application relates to the communication field, and discloses a communication method and apparatus, so that scheduling of a polarization manner can be more flexible, thereby improving spectral efficiency. The communication method includes: A second communication apparatus determines first indication information, and sends the first indication information, where the first indication information is carried in terminal-level information, the first indication information indicates a first polarization manner of a first communication apparatus, and the first polarization manner includes any one of left hand circular polarization, right hand circular polarization, linear polarization, or cross polarization multiplexing. In this way, the second communication apparatus can schedule a polarization manner of the first communication apparatus at a terminal level, that is, the second communication apparatus can adjust a polarization manner of the first communication apparatus, so that scheduling of the polarization manner of the first communication apparatus is more flexible, and a scheduling granularity is finer, thereby improving spectral efficiency.

## Description

This application claims priority to Chinese Patent Application No. 202111166020.2, filed with the China National Intellectual Property Administration on September 30, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

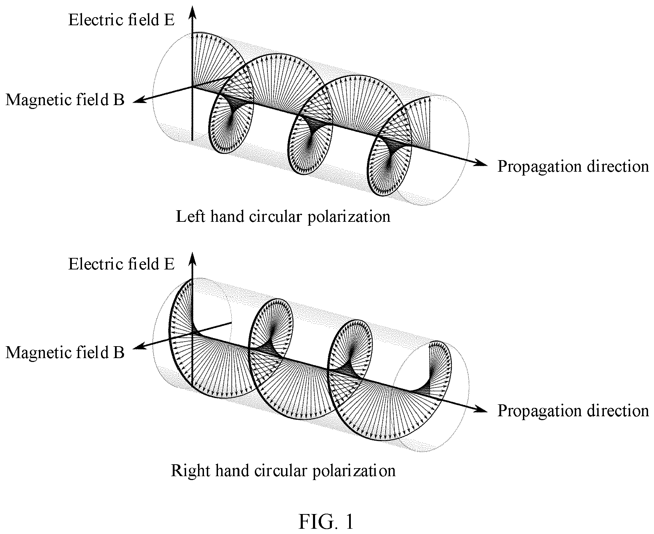

When an electromagnetic wave is propagated in space, if a direction of an electric field vector is fixed or rotates according to a specific rule, the electromagnetic wave is referred to as a polarized electromagnetic wave. If the direction of the electric field vector of the electromagnetic wave is perpendicular to a horizontal plane, the electromagnetic wave is referred to as a vertically polarized electromagnetic wave; or if the direction of the electric field vector of the electromagnetic wave is parallel to the horizontal plane, the electromagnetic wave is referred to as a horizontally polarized electromagnetic wave; or if the electric field vector of the electromagnetic wave changes to form a circle, the electromagnetic wave is referred to as a circularly polarized electromagnetic wave. As shown in FIG. 1, the circularly polarized electromagnetic wave may be classified into a left hand circularly polarized (left hand circularly polarized, LHCP) electromagnetic wave and a right hand circularly polarized (right hand circularly polarized, RHCP) electromagnetic wave based on a rotation direction of the circle formed by change of the electric field vector of the electromagnetic wave.

In a communication system, according to a polarization direction of an electromagnetic wave transmitted between devices, two devices may communicate with each other in different polarization manners. For example, a network device and a terminal device may communicate with each other in a vertical polarization manner, which specifically means that an electromagnetic wave transmitted between the network device and the terminal device is a vertically polarized electromagnetic wave.

Currently, in a process in which a network device schedules a polarization manner of a terminal device in a cell (cell), scheduling is still inflexible and spectral efficiency is low. Therefore, the process of scheduling the polarization manner of the terminal device further needs to be optimized.

### SUMMARY

This application provides a communication method and apparatus, so that scheduling of a polarization manner can be more flexible, thereby improving spectral efficiency.

To achieve the foregoing objectives, this application uses the following technical solutions.

According to a first aspect, this application provides a communication method. The method may be applied to a second communication apparatus. The second communication apparatus may be, for example, a network device. The network device is, for example, an access network device (for example, a base station or a satellite). The communication method includes: The second communication apparatus determines first indication information, and sends the first indication information, where the first indication information is carried in terminal-level information, the first indication information indicates a first polarization manner of a first communication apparatus, and the first polarization manner includes any one of left hand circular polarization, right hand circular polarization, linear polarization, or cross polarization multiplexing.

With reference to the communication method in the first aspect, it can be learned that the first indication information can be used to schedule the polarization manner of the first communication apparatus and is carried in the terminal-level information, such as radio resource control (radio resource control, RRC) signaling and downlink control information (downlink control information, DCI). In this way, the second communication apparatus can schedule the polarization manner of the first communication apparatus at a terminal level, that is, the second communication apparatus can adjust a polarization manner of the first communication apparatus, so that scheduling of the polarization manner of the first communication apparatus is more flexible, and a scheduling granularity is finer, thereby improving spectral efficiency.

The terminal-level information may also be referred to as terminal-level signaling, or referred to as user equipment (user equipment, UE) specific (UE specific) signaling, or referred to as UE-level information, or a similar concept. This is not limited in embodiments of this application.

In a possible implementation, the communication method according to the first aspect may further include: The second communication apparatus determines second indication information, and sends the second indication information, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing. In this way, based on the second indication information, the first communication apparatus can obtain the polarization manner of the neighboring cell in advance, that is, can obtain, in advance, the polarization manner used when signal quality of the neighboring cell is measured. In this case, during cell handover, the first communication apparatus can measure the signal quality of the neighboring cell based on the polarization manner of the neighboring cell indicated by the second indication information, and then implement cell handover. This can improve a cell handover success rate, avoid requesting the polarization manner of the neighboring cell again from the second communication apparatus during handover, and accelerate cell handover.

Linear polarization may include any one of horizontal polarization, vertical polarization, +45° polarization, and -45° polarization. Cross polarization multiplexing may include any one of horizontal and vertical cross polarization multiplexing, ±45° cross polarization multiplexing, and left hand circular polarization and right hand circular polarization cross polarization multiplexing (LHCP & RHCP Multiplexing). In other words, the first polarization manner may include any one of left hand circular polarization, right hand circular polarization, horizontal polarization, vertical polarization, +45° polarization, -45° polarization, horizontal and vertical cross polarization multiplexing, ±45° cross polarization multiplexing, and left hand circular polarization and right hand circular polarization cross polarization multiplexing. In addition, elements included in the polarization manner, of the neighboring cell, indicated by the second indication information are the same as those included in the first polarization manner. Details are not described herein again.

Optionally, the second indication information further indicates a polarization manner of a neighboring cell of a cell in which the first communication apparatus in a first status is located, the first status may include a connected (connected) state or an inactive (inactive) state, and the second indication information is carried in terminal-level information. In this way, based on the second indication information, the first communication apparatus in the connected state or the inactive state can obtain the polarization manner of the neighboring cell in advance, that is, can obtain, in advance, the polarization manner used when signal quality of the neighboring cell is measured. In this case, during cell handover, the first communication apparatus can measure the signal quality of the neighboring cell based on the polarization manner of the neighboring cell indicated by the second indication information, and then implement cell handover. This can improve a cell handover success rate, avoid requesting the polarization manner of the neighboring cell again from the second communication apparatus during handover, and accelerate cell handover.

Optionally, the second indication information further indicates a polarization manner of a neighboring cell of a cell in which the first communication apparatus in a second status is located, the second status may include an inactive state or an idle (idle) state, and the second indication information is carried in cell-level information. In this way, based on the second indication information, the first communication apparatus in the inactive state or the idle state can obtain the polarization manner of the neighboring cell in advance, that is, can obtain, in advance, the polarization manner used when signal quality of the neighboring cell is measured. In this case, during cell reselection, the first communication apparatus can measure the signal quality of the neighboring cell based on the polarization manner of the neighboring cell indicated by the second indication information, and then implement cell reselection. This can improve a cell reselection success rate, avoid requesting the polarization manner of the neighboring cell from the second communication apparatus again during reselection, and accelerate cell reselection. Optionally, the cell-level information may be a system information block (system information block, SIB).

In a possible implementation, the first indication information may include a mapping relationship between a plurality of synchronization signal and physical broadcast channel block (synchronization signal and PBCH block, SSB) indexes (indexes) and a plurality of polarization manners. In other words, the second communication apparatus can configure a correspondence between an SSB index and a polarization manner for the first communication apparatus in advance, and the second communication apparatus can further implicitly indicate the polarization manner of the first communication apparatus by using the SSB index. This can further simplify complexity of indicating the polarization manner of the first communication apparatus by the second communication apparatus.

In a possible implementation, the first indication information further indicates duration of the first polarization manner. In other words, the second communication apparatus can indicate duration in which the first communication apparatus works in the first polarization manner. After the duration indicated by the first indication information expires, the first communication apparatus can restore to a previous polarization manner. In this way, the second communication apparatus can no longer need to indicate, by using one piece of indication signaling, the first communication apparatus to restore to the previous polarization manner. This can reduce signaling overheads, avoid that the second communication apparatus waits for a long time for feedback, from the first communication apparatus, of the indication signaling, and further improve flexibility of scheduling the polarization manner of the first communication apparatus.

In a possible implementation, the first indication information is determined based on one or more of the following: a polarization manner supported by the first communication apparatus, channel state information (channel state information, CSI) of channels in different polarization manners measured by the first communication apparatus, a service requirement of the first communication apparatus, a polarization manner expected by the first communication apparatus, a weather condition between the first communication apparatus and the second communication apparatus, or a crosstalk (crosstalk) status between orthogonally polarized channels. In this way, the second communication apparatus can determine, with reference to a plurality of types of information, a polarization manner that is more appropriate for the first communication apparatus, and schedule the polarization manner for the first communication apparatus by using the first indication information. This can enable, in one aspect, the first communication apparatus to work in a better polarization manner, and improve communication quality, and reduce power consumption, in another aspect, scheduling of the polarization manner of the first communication apparatus can be more flexible, and a scheduling granularity is finer, thereby improving spectral efficiency.

In a possible implementation, the terminal-level information may be RRC signaling.

Optionally, the terminal-level information may alternatively be any one of a media access control control element (media access control control element, MAC CE), a channel state information reference signal (channel state information reference signal, CSI-RS), DCI, or the like.

In a possible implementation, the first indication information may be one or more of a carrier (carrier) of the CSI-RS, and a resource element (resource element, RE), and the one or more of the carrier and the resource element indicate the first polarization manner. The carrier may also be understood as a carrier wave, and this is not limited herein.

In a possible implementation, the communication method according to the first aspect may further include: The second communication apparatus determines third indication information, and sends the third indication information, where the third indication information indicates a polarization manner of an adj acent beam of a beam on which the first communication apparatus is located, and the polarization manner of the adjacent beam may include one or more of left hand circular polarization, right hand circular polarization, linear polarization, or cross polarization multiplexing. In this way, based on the third indication information, the first communication apparatus can obtain the polarization manner of the adjacent beam in advance, that is, can obtain, in advance, the polarization manner used when signal quality of the adjacent beam is measured. Therefore, during beam handover, the first communication apparatus can measure the signal quality of the adjacent beam based on the polarization manner of the adjacent beam indicated by the third indication information, and then implement beam handover. This can improve a beam handover success rate, avoid requesting the polarization manner of the adjacent beam from the second communication apparatus during handover, and accelerate beam handover.

In a possible implementation, the first indication information indicates a first polarization manner corresponding to a first resource of the first communication apparatus, and the first resource includes a time-frequency domain resource. In this way, resource elements corresponding to different polarization manners but have a same time-frequency resource can be allocated to different first communication apparatuses. This can avoid interference between the communication apparatuses, improve resource utilization, improve communication efficiency, and improve resource scheduling flexibility.

According to a second aspect, this application provides a communication method. The method may be applied to a first communication apparatus. The first communication apparatus may be, for example, a terminal device. The terminal device is, for example, a mobile phone, a car, or an internet of things (internet of things, IoT) device. The communication method includes: The first communication apparatus receives first indication information from a second communication apparatus, where the first indication information indicates a first polarization manner of the first communication apparatus, the first polarization manner includes any one of left hand circular polarization, right hand circular polarization, linear polarization, or cross polarization multiplexing, and the first indication information is carried in terminal-level information. The first communication apparatus communicates with the second communication apparatus based on the first polarization manner.

In a possible implementation, the communication method according to the second aspect may further include: The first communication apparatus receives second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information. Optionally, the cell-level information may be an SIB.

In a possible implementation, the first indication information may include a mapping relationship between a plurality of SSB indexes and a plurality of polarization manners.

In a possible implementation, the first indication information further indicates duration of the first polarization manner.

In a possible implementation, the first indication information is determined based on one or more of the following: a polarization manner supported by the first communication apparatus, channel state information of channels in different polarization manners measured by the first communication apparatus, a service requirement of the first communication apparatus, a polarization manner expected by the first communication apparatus, a weather condition between the first communication apparatus and the second communication apparatus, or a crosstalk status between orthogonally polarized channels.

In a possible implementation, the terminal-level information may be RRC signaling.

Optionally, the terminal-level information may alternatively be any one of a MAC CE, a CSI-RS, DCI, or the like.

In a possible implementation, the communication method according to the second aspect may further include: The first communication apparatus receives third indication information from the second communication apparatus, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing.

In a possible implementation, the first indication information indicates a first polarization manner corresponding to a first resource of the first communication apparatus, and the first resource includes a time-frequency domain resource.

It should be noted that, for technical effect of the communication method according to the second aspect, refer to the technical effect of the communication method according to the first aspect. Details are not described herein again.

According to a third aspect, this application provides a communication method. The method may be applied to a second communication apparatus. The second communication apparatus may be, for example, an access network device (for example, a base station). The communication method includes: The second communication apparatus determines fourth indication information, and sends the fourth indication information, where the fourth indication information indicates a second polarization manner of a first beam, and the second polarization manner includes any one of left hand circular polarization, right hand circular polarization, linear polarization, or cross polarization multiplexing.

With reference to the communication method according to the third aspect, it can be learned that the fourth indication information can indicate the second polarization manner of the first beam. In this way, the second communication apparatus can schedule a polarization manner of a first communication apparatus at a beam level, that is, the second communication apparatus can adjust a polarization manner of the first communication apparatus in a beam, so that scheduling of the polarization manner of the first communication apparatus is more flexible, and a scheduling granularity is finer, thereby improving spectral efficiency.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the communication method according to the third aspect may further include: The second communication apparatus sends a first mapping relationship, where the first mapping relationship includes a mapping relationship between at least one SSB index and at least one polarization manner, or the first mapping relationship includes a mapping relationship between at least one CSI-RS time-frequency location and at least one polarization manner.

In a possible implementation, the fourth indication information is carried in any one of RRC, DCI, or a MAC CE.

In a possible implementation, the communication method according to the third aspect may further include: The second communication apparatus determines second indication information, and sends the second indication information, where the second indication information indicates a polarization manner of a neighboring cell of a cell in which a first communication apparatus is located, and the polarization manner of the neighboring cell may include one or more of left hand circular polarization, right hand circular polarization, linear polarization, or cross polarization multiplexing. In this way, based on the second indication information, the first communication apparatus can obtain the polarization manner of the neighboring cell in advance, that is, can obtain, in advance, the polarization manner used when signal quality of the neighboring cell is measured. In this case, during cell handover, the first communication apparatus can measure the signal quality of the neighboring cell based on the polarization manner of the neighboring cell indicated by the second indication information, and then implement cell handover. This can improve a cell handover success rate, avoid requesting the polarization manner of the neighboring cell again from the second communication apparatus during handover, and accelerate cell handover.

Linear polarization may include any one of horizontal polarization, vertical polarization, +45° polarization, and -45° polarization. Cross polarization multiplexing may include any one of horizontal and vertical cross polarization multiplexing, ±45° cross polarization multiplexing, and left hand circular polarization and right hand circular polarization cross polarization multiplexing. In other words, the second polarization manner may include any one of left hand circular polarization, right hand circular polarization, horizontal polarization, vertical polarization, +45° polarization, -45° polarization, horizontal and vertical cross polarization multiplexing, ±45° cross polarization multiplexing, and left hand circular polarization and right hand circular polarization cross polarization multiplexing. In addition, elements included in the polarization manner, of the neighboring cell, indicated by the second indication information are the same as those included in the second polarization manner. Details are not described herein again.

Optionally, the second indication information further indicates a polarization manner of a neighboring cell of a cell in which the first communication apparatus in a first status is located, the first status may include a connected state or an inactive state, and the second indication information is carried in terminal-level information. In this way, based on the second indication information, the first communication apparatus in the connected state or the inactive state can obtain the polarization manner of the neighboring cell in advance, that is, can obtain, in advance, the polarization manner used when signal quality of the neighboring cell is measured. In this case, during cell handover, the first communication apparatus can measure the signal quality of the neighboring cell based on the polarization manner of the neighboring cell indicated by the second indication information, and then implement cell handover. This can improve a cell handover success rate, avoid requesting the polarization manner of the neighboring cell again from the second communication apparatus during handover, and accelerate cell handover.

Optionally, the second indication information further indicates a polarization manner of a neighboring cell of a cell in which the first communication apparatus in a second status is located, the second status may include an inactive state or an idle state, and the second indication information is carried in cell-level information. In this way, based on the second indication information, the first communication apparatus in the inactive state or the idle state can obtain the polarization manner of the neighboring cell in advance, that is, can obtain, in advance, the polarization manner used when signal quality of the neighboring cell is measured. Therefore, during cell reselection, the first communication apparatus can measure the signal quality of the neighboring cell based on the polarization manner of the neighboring cell indicated by the second indication information, and then implement cell reselection. This can improve a cell reselection success rate, avoid requesting the polarization manner of the neighboring cell from the second communication apparatus again during reselection, and accelerate cell reselection.

In a possible implementation, the fourth indication information further indicates duration of the second polarization manner. In other words, the second communication apparatus can indicate duration in which all first communication apparatuses in the first beam work in the second polarization manner. After the duration indicated by the fourth indication information expires, all the first communication apparatuses in the first beam can restore to a previous polarization manner. In this way, the second communication apparatus can no longer need to indicate, by using one piece of indication signaling, the first communication apparatus in the first beam to restore to the previous polarization manner. This can reduce signaling overheads, and further improve flexibility of scheduling the polarization manner of the first communication apparatus.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam. In this way, the second communication apparatus can determine, with reference to a plurality of types of information, a polarization manner that is more appropriate for all the first communication apparatuses in the first beam, and schedule the polarization manner for all the first communication apparatuses in the first beam by using the fourth indication information. This can enable, in one aspect, all the first communication apparatuses in the first beam to work in a better polarization manner, improve communication quality, and reduce power consumption, in another aspect, scheduling of the polarization manner for all the first communication apparatuses in the first beam can be more flexible, and a scheduling granularity is finer, thereby improving spectral efficiency.

In a possible implementation, the communication method according to the third aspect may further include: The second communication apparatus determines third indication information, and sends the third indication information, where the third indication information indicates a polarization manner of an adj acent beam of a beam on which the first communication apparatus is located, and the polarization manner of the adjacent beam may include one or more of left hand circular polarization, right hand circular polarization, linear polarization, or cross polarization multiplexing. In this way, based on the third indication information, the first communication apparatus can obtain the polarization manner of the adjacent beam in advance, that is, can obtain, in advance, the polarization manner used when signal quality of the adjacent beam is used. Therefore, during beam handover, the first communication apparatus can measure the signal quality of the adjacent beam based on the polarization manner of the adjacent beam indicated by the third indication information, and then implement beam handover. This can improve a beam handover success rate, avoid requesting the polarization manner of the adjacent beam from the second communication apparatus during handover, and accelerate beam handover.

According to a fourth aspect, this application provides a communication method. The method may be applied to a first communication apparatus. The first communication apparatus may be, for example, a mobile phone, a car, or an internet of things device. The communication method includes: The first communication apparatus receives fourth indication information from a second communication apparatus, where the fourth indication information indicates a second polarization manner of a first beam, and the second polarization manner includes any one of left hand circular polarization, right hand circular polarization, linear polarization, or cross polarization multiplexing; and communicates with the second communication apparatus based on the second polarization manner.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the communication method according to the fourth aspect may further include: The first communication apparatus receives a first mapping relationship from the second communication apparatus, where the first mapping relationship includes a mapping relationship between at least one SSB index and at least one polarization manner, or the first mapping relationship includes a mapping relationship between at least one CSI-RS time-frequency location and at least one polarization manner.

In a possible implementation, the fourth indication information is carried in any one of RRC, DCI, or a MAC CE.

In a possible implementation, the communication method according to the fourth aspect may further include: The first communication apparatus receives second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information.

In a possible implementation, the fourth indication information further indicates duration of the second polarization manner.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

In a possible implementation, the communication method according to the fourth aspect may further include: The first communication apparatus receives third indication information, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing.

It should be noted that, for technical effect of the communication method according to the fourth aspect, refer to the technical effect of the communication method according to the third aspect. Details are not described herein again.

According to a fifth aspect, a second communication apparatus is provided. The second communication apparatus includes a processing module and a transceiver module. The processing module is configured to determine first indication information, where the first indication information is carried in terminal-level information, the first indication information indicates a first polarization manner of a first communication apparatus, and the first polarization manner includes any one of left hand circular polarization, right hand circular polarization, linear polarization, or cross polarization multiplexing. The transceiver module is configured to send the first indication information.

In some possible designs, the processing module is further configured to determine second indication information, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing. The transceiver module is further configured to send the second indication information.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information. Optionally, the cell-level information may be an SIB.

In a possible implementation, the first indication information may include a mapping relationship between a plurality of SSB indexes and a plurality of polarization manners.

In a possible implementation, the first indication information further indicates duration of the first polarization manner.

In a possible implementation, the first indication information is determined based on one or more of the following: a polarization manner supported by the first communication apparatus, CSI of channels in different polarization manners measured by the first communication apparatus, a service requirement of the first communication apparatus, a polarization manner expected by the first communication apparatus, a weather condition between the first communication apparatus and the second communication apparatus, or a crosstalk status between orthogonally polarized channels.

In a possible implementation, the terminal-level information may be RRC signaling.

Optionally, the terminal-level information may alternatively be any one of a MAC CE, a CSI-RS, DCI, or the like.

In a possible implementation, the first indication information may be one or more of a carrier of the CSI-RS and an RE, and the one or more of the carrier and the resource element indicate the first polarization manner.

In a possible implementation, the processing module is further configured to determine third indication information, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing. The transceiver module is further configured to send the third indication information.

In a possible implementation, the first indication information indicates a first polarization manner corresponding to a first resource of the first communication apparatus, and the first resource includes a time-frequency domain resource.

Optionally, the transceiver module may include a receiving module and a sending module. The receiving module is configured to implement a receiving function of the second communication apparatus according to the fifth aspect, and the sending module is configured to implement a sending function of the second communication apparatus according to the fifth aspect.

Optionally, the second communication apparatus according to the fifth aspect may further include a storage module, and the storage module stores a program or instructions. When the processing module executes the program or the instructions, the second communication apparatus can perform the communication method according to the first aspect.

It should be noted that the second communication apparatus according to the fifth aspect may be a network device. For example, the network device may be an access network device (like a base station or a satellite), or may be a chip (system) or another part or component disposed in the network device, or may be a second communication apparatus including the network device. This is not limited in this application.

In addition, for technical effect of the second communication apparatus according to the fifth aspect, refer to the technical effect of the communication method according to the first aspect. Details are not described herein again.

According to a sixth aspect, a first communication apparatus is provided. The first communication apparatus includes a transceiver module and a processing module. The transceiver module is configured to receive first indication information from a second communication apparatus, where the first indication information indicates a first polarization manner of the first communication apparatus, the first polarization manner includes any one of left hand circular polarization, right hand circular polarization, linear polarization, or cross polarization multiplexing, and the first indication information is carried in terminal-level information. The processing module is configured to communicate with the second communication apparatus in the first polarization manner.

In a possible implementation, the transceiver module is further configured to receive second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information. Optionally, the cell-level information may be an SIB.

In a possible implementation, the first indication information may include a mapping relationship between a plurality of SSB indexes and a plurality of polarization manners.

In a possible implementation, the first indication information further indicates duration of the first polarization manner.

In a possible implementation, the first indication information is determined based on one or more of the following: a polarization manner supported by the first communication apparatus, channel state information of channels in different polarization manners measured by the first communication apparatus, a service requirement of the first communication apparatus, a polarization manner expected by the first communication apparatus, a weather condition between the first communication apparatus and the second communication apparatus, or a crosstalk status between orthogonally polarized channels.

In a possible implementation, the terminal-level information may be RRC signaling.

Optionally, the terminal-level information may alternatively be any one of a MAC CE, a CSI-RS, DCI, or the like.

In a possible implementation, the transceiver module is further configured to receive third indication information from the second communication apparatus, where the third indication information indicates a polarization manner of an adjacent beam of a beam on which the first communication apparatus is located, and the polarization manner of the adj acent beam may include one or more of left hand circular polarization, right hand circular polarization, linear polarization, or cross polarization multiplexing.

In a possible implementation, the first indication information indicates a first polarization manner corresponding to a first resource of the first communication apparatus, and the first resource includes a time-frequency domain resource.

Optionally, the transceiver module may include a receiving module and a sending module. The receiving module is configured to implement a receiving function of the first communication apparatus according to the sixth aspect, and the sending module is configured to implement a sending function of the first communication apparatus according to the sixth aspect.

Optionally, the first communication apparatus according to the sixth aspect may further include a storage module, and the storage module stores a program or instructions. When the processing module executes the program or the instructions, the first communication apparatus can perform the communication method according to the second aspect.

It should be noted that the first communication apparatus according to the sixth aspect may be a terminal device. The terminal device may be, for example, a mobile phone, a car, or an internet of things device, or may be a chip (system) or another part or component disposed in the terminal device, or may be a first communication apparatus including the terminal device. This is not limited in this application.

In addition, for technical effect of the first communication apparatus according to the sixth aspect, refer to the technical effect of the communication method according to the second aspect. Details are not described herein again.

According to a seventh aspect, a second communication apparatus is provided. The second communication apparatus includes a processing module and a transceiver module. The processing module is configured to determine fourth indication information, where the fourth indication information indicates a second polarization manner of a first beam, and the second polarization manner includes any one of left hand circular polarization, right hand circular polarization, linear polarization, or cross polarization multiplexing. The transceiver module is configured to send the fourth indication information.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the transceiver module is further configured to send a first mapping relationship, where the first mapping relationship includes a mapping relationship between at least one SSB index and at least one polarization manner, or the first mapping relationship includes a mapping relationship between at least one CSI-RS time-frequency location and at least one polarization manner.

In a possible implementation, the fourth indication information is carried in any one of RRC, DCI, or a MAC CE.

In a possible implementation, the processing module is further configured to determine second indication information, where the second indication information indicates a polarization manner of a neighboring cell of a cell in which a first communication apparatus is located, and the polarization manner of the neighboring cell may include one or more of left hand circular polarization, right hand circular polarization, linear polarization, or cross polarization multiplexing. The transceiver module is further configured to send the second indication information.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information.

In a possible implementation, the fourth indication information further indicates duration of the second polarization manner.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

In a possible implementation, the processing module is further configured to determine third indication information, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing. The transceiver module is further configured to send the third indication information.

Optionally, the transceiver module may include a receiving module and a sending module. The receiving module is configured to implement a receiving function of the second communication apparatus according to the seventh aspect, and the sending module is configured to implement a sending function of the second communication apparatus according to the seventh aspect.

Optionally, the second communication apparatus according to the seventh aspect may further include a storage module, and the storage module stores a program or instructions. When the processing module executes the program or the instructions, the second communication apparatus can perform the communication method according to the third aspect.

It should be noted that the second communication apparatus according to the seventh aspect may be a network device. For example, the network device may be an access network device (like a base station or a satellite), or may be a chip (system) or another part or component disposed in the network device, or may be a second communication apparatus including the network device. This is not limited in this application.

In addition, for technical effect of the second communication apparatus according to the seventh aspect, refer to the technical effect of the communication method according to the third aspect. Details are not described herein again.

According to an eighth aspect, a first communication apparatus is provided. The first communication apparatus includes a transceiver module and a processing module. The transceiver module is configured to receive fourth indication information from a second communication apparatus, where the fourth indication information indicates a second polarization manner of a first beam, and the second polarization manner includes any one of left hand circular polarization, right hand circular polarization, linear polarization, or cross polarization multiplexing. The processing module is configured to communicate with the second communication apparatus based on the second polarization manner.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the transceiver module is further configured to receive second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

In a possible implementation, the fourth indication information is carried in any one of RRC, DCI, or a MAC CE.

In a possible implementation, the transceiver module is further configured to receive the second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information.

In a possible implementation, the fourth indication information further indicates duration of the second polarization manner.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

In a possible implementation, the transceiver module is further configured to receive third indication information, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing.

Optionally, the transceiver module may include a receiving module and a sending module. The receiving module is configured to implement a receiving function of the first communication apparatus according to the eighth aspect, and the sending module is configured to implement a sending function of the first communication apparatus according to the eighth aspect.

Optionally, the first communication apparatus according to the eighth aspect may further include a storage module, and the storage module stores a program or instructions. When the processing module executes the program or the instructions, the first communication apparatus can perform the communication method according to the fourth aspect.

It should be noted that the first communication apparatus according to the eighth aspect may be a terminal device. The terminal device may be, for example, a mobile phone, a car, or an internet of things device, or may be a chip (system) or another part or component disposed in the terminal device, or may be a first communication apparatus including the terminal device. This is not limited in this application.

In addition, for technical effect of the first communication apparatus according to the eighth aspect, refer to the technical effect of the communication method according to the fourth aspect. Details are not described herein again.

According to a ninth aspect, a communication apparatus is provided. The communication apparatus is configured to perform the communication method according to any one of the implementations of the first aspect to the fourth aspect.

In this application, the communication apparatus according to the ninth aspect may be a terminal device or a network device, or may be a chip (system) or another part or component disposed in the terminal device or the network device, or may be an apparatus including the terminal device or the network device. This is not limited in this application. The network device is configured to perform the communication method according to any possible implementations of the first aspect and the third aspect, and the terminal device is configured to perform the communication method according to any possible implementations of the second aspect and the fourth aspect.

It should be understood that the communication apparatus according to the ninth aspect includes a corresponding module, unit, or means (means) for implementing the communication method according to any one of the first aspect to the fourth aspect. The module, unit, or means may be implemented by hardware, or may be implemented by software, or may be implemented by hardware executing corresponding software. The hardware or software includes one or more modules or units configured to perform functions related to the foregoing communication methods.

According to a tenth aspect, a communication apparatus is provided. The communication apparatus includes a processor, and the processor is configured to perform the communication method according to any one of the possible implementations of the first aspect to the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design solution, the communication apparatus according to the tenth aspect may further include a memory. The memory and the processor may be integrated together, or may be disposed separately. The memory may be configured to store a computer program and/or data related to the communication method according to any one of the first aspect to the fourth aspect.

In this application, the communication apparatus according to the tenth aspect may be a terminal device or a network device, or may be a chip (system) or another part or component disposed in the terminal device or the network device, or may be an apparatus including the terminal device or the network device. This is not limited in this application. The network device is configured to perform the communication method according to any possible implementations of the first aspect and the third aspect, and the terminal device is configured to perform the communication method according to any possible implementations of the second aspect and the fourth aspect.

According to an eleventh aspect, a communication apparatus is provided. The communication apparatus includes a processor, the processor is coupled to a memory, and the processor is configured to execute a computer program stored in the memory, so that the communication apparatus performs the communication method according to any one of the possible implementations of the first aspect to the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be a terminal device or a network device, or may be a chip (system) or another part or component disposed in the terminal device or the network device, or may be an apparatus including the terminal device or the network device. This is not limited in this application. The network device is configured to perform the communication method according to any possible implementations of the first aspect and the third aspect, and the terminal device is configured to perform the communication method according to any possible implementations of the second aspect and the fourth aspect.

According to a twelfth aspect, a communication apparatus is provided. The communication apparatus includes a processor and an interface circuit. The interface circuit is configured to receive code instructions and transmit the code instructions to the processor. The processor is configured to run the code instructions to perform the communication method according to any one of the implementations of the first aspect to the fourth aspect.

In a possible design solution, the communication apparatus according to the twelfth aspect may further include a memory. The memory and the processor may be integrated together, or may be disposed separately. The memory may be configured to store a computer program and/or data related to the communication method according to any one of the first aspect to the fourth aspect.

In this application, the communication apparatus according to the twelfth aspect may be a terminal device or a network device, or may be a chip (system) or another part or component disposed in the terminal device or the network device, or may be an apparatus including the terminal device or the network device. This is not limited in this application. The network device is configured to perform the communication method according to any possible implementations of the first aspect and the third aspect, and the terminal device is configured to perform the communication method according to any possible implementations of the second aspect and the fourth aspect.

According to a thirteenth aspect, a communication apparatus is provided. The communication apparatus includes a processor and a storage medium. The storage medium stores instructions. When the instructions are run by the processor, the communication method according to any one of the possible implementations of the first aspect to the fourth aspect is implemented.

In this application, the communication apparatus according to the thirteenth aspect may be a terminal device or a network device, or may be a chip (system) or another part or component disposed in the terminal device or the network device, or may be an apparatus including the terminal device or the network device. This is not limited in this application. The network device is configured to perform the communication method according to any possible implementations of the first aspect and the third aspect, and the terminal device is configured to perform the communication method according to any possible implementations of the second aspect and the fourth aspect.

According to a fourteenth aspect, a processor is provided. The processor is configured to perform the communication method according to any one of the possible implementations of the first aspect to the fourth aspect.

According to a fifteenth aspect, a communication system is provided. The communication system includes a terminal device and a network device. The network device may include an access network device and a core network device. The network device is configured to perform the communication method according to any possible implementations of the first aspect and the third aspect, and the terminal device is configured to perform the communication method according to any possible implementations of the second aspect and the fourth aspect.

According to a sixteenth aspect, a computer-readable storage medium is provided. The computer-readable storage medium includes a computer program or instructions. When the computer program or the instructions are run by a processor, the communication method according to any one of the possible implementations of the first aspect to the fourth aspect is implemented.

According to a seventeenth aspect, a computer program product is provided. The computer program product includes instructions. When the instructions are run by a processor, the communication method according to any one of the possible implementations of the first aspect to the fourth aspect is implemented.

According to an eighteenth aspect, a chip is provided. The chip includes a processing logic circuit and an interface circuit. There may be one or more processing logic circuits, and there may be a plurality of interface circuits.

The interface circuit is configured to receive code instructions and transmit the code instructions to the processing logic circuit. The processing logic circuit is configured to run the code instructions to perform the communication method according to any one of the implementations of the first aspect to the fourth aspect.

Optionally, the chip may include a memory. The memory and the processing logic circuit may be integrated together, or may be disposed separately. The memory may be configured to store a computer program and/or data related to the communication method according to any one of the first aspect to the fourth aspect.

In this application, the chip according to the eighteenth aspect may be located in a terminal device or a network device, or may be located in a terminal device or a network device in a communication system. When being located in the network device, the chip is configured to perform the communication method according to any possible implementations of the first aspect and the third aspect. When being located in the terminal device, the chip is configured to perform the communication method according to any possible implementations of the second aspect and the fourth aspect.

For technical effect brought by any implementation of the fifth aspect to the eighteenth aspect, refer to the technical effect brought by corresponding implementations of any one of the first aspect to the fourth aspect. Details are not described herein again.

In this application, based on the implementations according to the foregoing aspects, the implementations may be combined to provide more implementations.

### BRIEF DESCRIPTION OF DRAWINGS

FIG. 1 is a schematic diagram of circular polarization according to an embodiment of this application;
FIG. 2 is a schematic diagram of four-color multiplexing according to an embodiment of this application;
FIG. 3 is a schematic diagram of an architecture of a communication system according to an embodiment of this application;
FIG. 4 is a schematic diagram of another architecture of a communication system according to an embodiment of this application;
FIG. 5 is a schematic diagram of a structure of a communication apparatus according to an embodiment of this application;
FIG. 6 is a schematic flowchart 1 of a communication method according to an embodiment of this application;
FIG. 7 is a schematic diagram of resource mapping in a beam with a combination of polarization manners according to an embodiment of this application;
FIG. 8 is a schematic diagram of virtual sub-beams formed in a beam by using RRM in a unit of UE in space according to an embodiment of this application;
FIG. 9 is a schematic diagram of a beam in a cell according to an embodiment of this application;
FIG. 10 is a schematic flowchart 2 of a communication method according to an embodiment of this application;
FIG. 11 is a schematic flowchart 3 of a communication method according to an embodiment of this application;
FIG. 12 is a schematic flowchart 4 of a communication method according to an embodiment of this application;
FIG. 13 is a schematic diagram of RRC status switching according to an embodiment of this application;
FIG. 14 is a schematic flowchart 5 of a communication method according to an embodiment of this application;
FIG. 15 is a schematic flowchart 6 of a communication method according to an embodiment of this application; and
FIG. 16 is a schematic diagram of a structure of a communication apparatus according to an embodiment of this application.

### DESCRIPTION OF EMBODIMENTS

For ease of understanding solutions in embodiments of this application, brief descriptions of conventional technologies are first provided.

### 1. Polarization manner

In a communication system, a polarization manner for communication between two devices may include linear polarization, circular polarization, and cross polarization multiplexing. Linear polarization may include horizontal polarization, vertical polarization, +45° polarization, and -45° polarization. Circular polarization may include left hand circular polarization and right hand circular polarization.

### 2. Cross polarization multiplexing

In a current communication system, to improve communication efficiency, two mutually orthogonally polarized electromagnetic waves may be used for communication. This manner may be referred to as cross polarization multiplexing (polarization multiplexing). Cross polarization multiplexing may also be referred to as polarization multiplexing or a similar concept. This is not limited in embodiments of this application.

Cross polarization multiplexing may include horizontal and vertical cross polarization multiplexing, ±45° cross polarization multiplexing, and left hand circular polarization and right hand circular polarization cross polarization multiplexing. For example, horizontal and vertical cross polarization multiplexing means that a network device and a terminal device may communicate with each other through both a horizontally polarized electromagnetic wave and a vertically polarized electromagnetic wave on a frequency band. In addition, a polarization manner of linear polarization, circular polarization, or like using an electromagnetic wave with one polarization direction may be referred to as a single polarization manner.

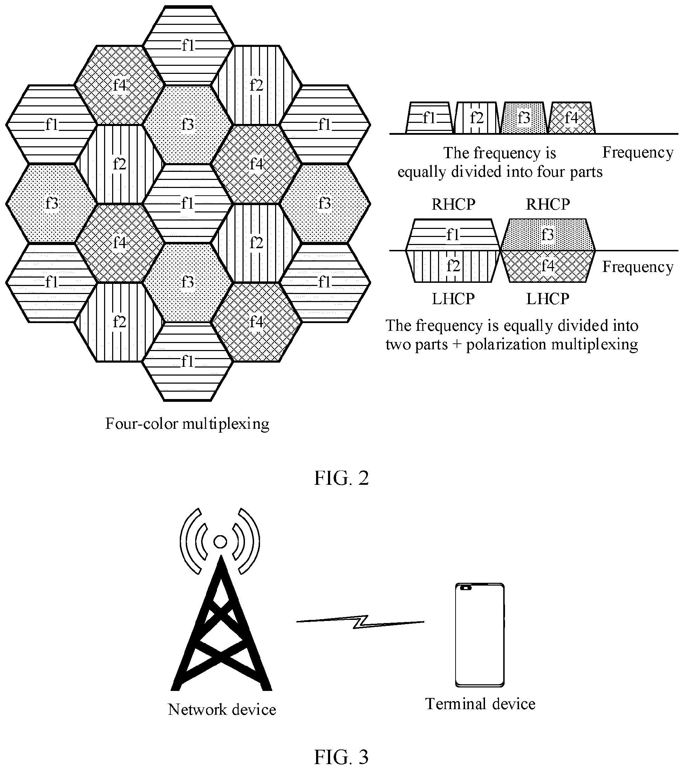

Current cross polarization multiplexing is applied to multi-color multiplexing. Four-color multiplexing is used as an example. FIG. 2 is a schematic diagram of four-color multiplexing according to an embodiment of this application. As shown in FIG. 2, in a cell of an access network device (for example, a satellite or a base station), four-color multiplexing may be implemented in a manner of frequency division, or four-color multiplexing may be implemented in a manner of frequency division and polarization division. The following describes the manners separately.

For four-color multiplexing implemented in the manner of frequency division, a frequency band used in the cell may be equally divided into four frequency bands, the four frequency bands respectively correspond to four beams f1, f2, f3, and f4, and the four beams are arranged in the cell according to a rule shown in FIG. 2.

For four-color multiplexing implemented in the manner of frequency division and polarization division, a frequency band used in the cell may be equally divided into two frequency bands, and the two frequency bands respectively correspond to two beams. One frequency band corresponds to f1 and f2, and the other frequency band corresponds to f3 and f4. In addition, f1 and f2 each use a different polarization manner, and f3 and f4 each use a different polarization manner. f1 uses RHCP, f2 uses LHCP, f3 uses RHCP, and f4 uses LHCP. The four beams are arranged in the cell according to a rule shown in FIG. 2.

It can be seen that when four-color multiplexing is implemented in the manner of frequency division and polarization division, spectrum resource utilization of the cell can be doubled, and communication efficiency can be improved.

Currently, a network device may schedule a polarization manner of a cell, so that terminal devices in the cell can work in a same good polarization manner. Specifically, when the network device schedules the polarization manner of the terminal devices to switch the polarization manner of the terminal devices, the network device usually indicates, by using an SIB, all the terminal devices in the cell to switch the polarization manner from one polarization manner to another polarization manner. However, this scheduling manner can be used only to perform scheduling on all the terminal devices in the cell, and cannot be used to perform scheduling on a specific terminal device. Therefore, scheduling is not flexible and spectral efficiency is low. In addition, because the SIB is periodic, each scheduling can be performed only in a next SIB periodicity. As a result, scheduling is delayed.

To resolve the foregoing problems, embodiments of this application provide technical solutions. The technical solutions include a communication system, a communication method and a communication apparatus that are applied to the communication system, and the like. The following describes the technical solutions provided in this application with reference to the accompanying drawings.

The technical solutions in embodiments of this application are applied to a wireless communication system. For example, the wireless communication system may be a 4th generation (4th generation, 4G) communication system (for example, a long term evolution (long term evolution, LTE) system), a 5th generation (5th generation, 5G) communication system (for example, a new radio (new radio, NR) system), or a future mobile communication system. The technical solutions in embodiments of this application are also applied to a satellite communication system or a non-terrestrial communication network (non-terrestrial network, NTN) communication system. The satellite communication system or the NTN communication system may be integrated with a wireless communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, a subscript form like W1 may be incorrectly written as a non-subscript form like W1. When a difference between the subscript and the non-subscript form is not emphasized, meanings to be expressed by the subscript and the non-subscript form are consistent.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Embodiments of this application provide the communication system. The communication system is applicable to communication between a second communication apparatus and a first communication apparatus. The communication system provided in embodiments of this application may include one or more second communication apparatuses and one or more first communication apparatuses. A quantity of second communication apparatuses and a quantity of first communication apparatuses in the communication system are not limited in embodiments of this application. In embodiments of this application, an example in which the first communication apparatus is a terminal device and the second communication apparatus is a network device is used to describe the solutions provided in embodiments of this application. This is uniformly described herein. Details are not described below again.

For example, FIG. 3 is a schematic diagram of an architecture of a communication system according to an embodiment of this application. As shown in FIG. 3, the communication system may include a network device and a terminal device, and the network device and the terminal device may be connected in a wireless manner. The network device may exchange data, control signaling, or the like with the terminal device.

Optionally, the communication system provided in embodiments of this application is also applicable to communication between network devices, communication between terminal devices, and communication between the internet of vehicles, the internet of things, and the industrial internet. Therefore, types of devices at two communication ends in the communication system are not limited in embodiments of this application.

Optionally, the network device in embodiments of this application is a device that connects the terminal device to a wireless network. The network device may be a node in a radio access network, or may be referred to as a base station, or may be referred to as a radio access network (radio access network, RAN) node (or device). The base station may be a distributed antenna system, and a radio frequency head end of the base station may communicate with a terminal device. For example, the network device may include an evolved NodeB (NodeB, eNB, or eNodeB, evolved NodeB) in an LTE system or an evolved LTE system (LTE-Advanced, LTE-A), for example, a conventional macro base station eNB and a micro base station eNB in a heterogeneous network scenario; or may include a next generation nodeB (next generation nodeB, gNB) in a 5G NR system, or may further include a transmitting and receiving point (transmitting and receiving point, TRP), a transmitting point (transmitting point, TP), a home base station (for example, home evolved NodeB, or home NodeB, HNB), a base band unit (base band unit, BBU), a baseband pool BBU pool, or a wireless fidelity (wireless fidelity, Wi-Fi) access point (access point, AP), a mobile switching center and a device that undertakes a base station function in device-to-device (Device-to-Device, D2D), vehicle-to-everything (vehicle-to-everything, V2X), machine-to-machine (machine-to-machine, M2M) communication; or a base station device in a 5G network or a network device in a future evolved public land mobile network (public land mobile network, PLMN). Alternatively, the network device may be a wearable device, a vehicle-mounted device, or the like; or may include a central unit (central unit, CU) and a distributed unit (distributed unit, DU) in a cloud access network (cloud radio access network, CloudRAN) system; or may include a network device in an NTN, that is, may be deployed on a high-altitude platform or a satellite. In the NTN, the network device may be used as a layer 1 (L1) relay (relay), or may be used as a base station, or may be used as a DU, or may be used as an integrated access and backhaul (integrated access and backhaul, IAB) node. This is not limited in embodiments of this application. Certainly, the network device may also be a node in a core network.

Optionally, the terminal device in embodiments of this application may be a device configured to implement a wireless communication function, for example, a terminal or a chip that may be used in the terminal. The terminal may be user equipment (user equipment, UE) in a 5G network or a future evolved PLMN, an access terminal, a terminal unit, a terminal station, a mobile station, a mobile console, a remote station, a remote terminal, a mobile device, a wireless communication device, a terminal agent or a terminal apparatus, various terminals (for example, a robot or a mechanical arm equipped with a wireless transmission module) in an industrial scenario, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), an unmanned aerial vehicle, a satellite terminal, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal (for example, an internet of vehicles device) in vehicle-to-everything (vehicle-to-everything, V2X), a terminal in device-to-device (Device-to-Device) communication, a terminal in machine-to-machine (machine-to-machine, M2M) communication, or the like. The terminal may be mobile or fixed.

Optionally, in embodiments of this application, the network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

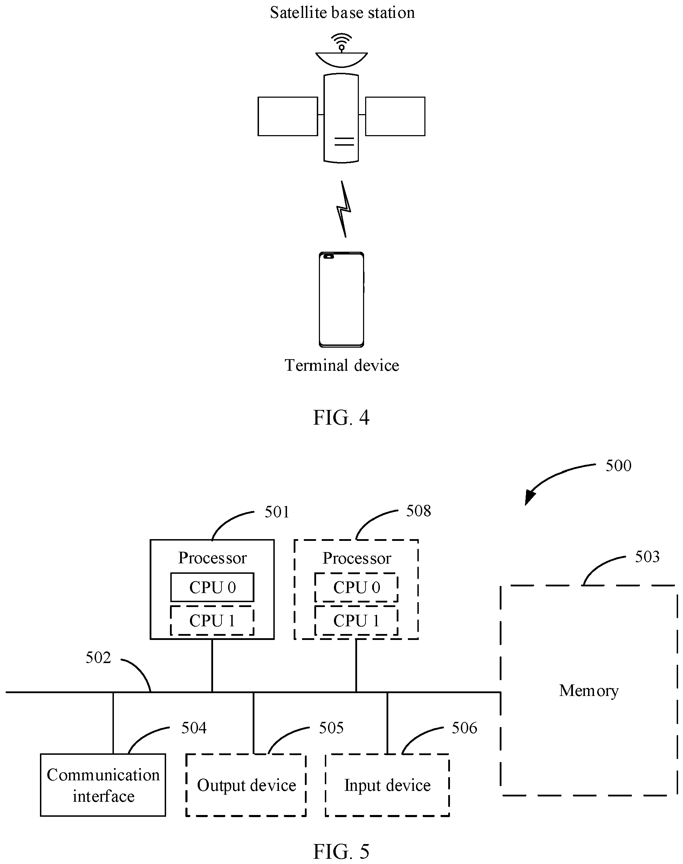

For example, when the technical solutions in embodiments of this application are applied to an NTN communication system, the communication system shown in FIG. 3 may be shown in FIG. 4. FIG. 4 is a schematic diagram of another architecture of the communication system according to an embodiment of this application. The communication system may include a satellite base station and a terminal device, and the satellite base station and the terminal device may be connected in a wireless manner. The satellite base station may exchange data, control signaling, or the like with the terminal device.

A specific structure of an execution body of the method provided in embodiments of this application is not specifically limited in embodiments of this application, provided that a program that records code for the method provided in embodiments of this application can be run to perform communication according to the method provided in embodiments of this application. For example, the execution body of the communication method provided in embodiments of this application may be a terminal device, a network device, or a function module that can invoke and execute a program in the terminal device or the network device.

In other words, a related function of the terminal device or the network device in embodiments of this application may be implemented by one device, or may be jointly implemented by a plurality of devices, or may be implemented by one or more function modules in one device. This is not specifically limited in embodiments of this application. It may be understood that the foregoing function may be a network element in a hardware device, may be a software function running on dedicated hardware, a combination of hardware and software, or a virtualized function instantiated on a platform (for example, a cloud platform).

For example, the related function of the terminal device or the network device in embodiments of this application may be implemented by a communication apparatus 500 in FIG. 5. FIG. 5 is a schematic diagram of a structure of the communication apparatus 500 according to an embodiment of this application. The communication apparatus 500 includes one or more processors 501, a communication line 502, and at least one communication interface (FIG. 5 uses only an example in which a communication interface 504 and one processor 501 are included for description). Optionally, the communication apparatus may further include a memory 503.

The processor 501 may be a central processing unit (central processing unit, CPU), a microprocessor, an application-specific integrated circuit (application-specific integrated circuit, ASIC), or one or more integrated circuits configured to control program execution of the solutions in this application.

The communication line 502 may include a channel, and is configured to connect different components. For example, the communication line 502 may be a bus, for example, an address bus, a data bus, or a control bus.

The communication interface 504 may be a transceiver module, and may be configured to communicate with another device or a communication network. For example, the transceiver module may be an apparatus like a transceiver or a transceiver machine. Optionally, the communication interface 504 may alternatively be a transceiver circuit located in the processor 501, and is configured to implement signal input and signal output of the processor.

The memory 503 may be an apparatus with a storage function. For example, the memory 503 may be a read-only memory (read-only memory, ROM) or another type of static storage device capable of storing static information and instructions, a random access memory (random access memory, RAM), or another type of dynamic storage device capable of storing information and instructions; or may be an electrically erasable programmable read-only memory (electrically erasable programmable read-only memory, EEPROM), a compact disc read-only memory (compact disc read-only memory, CD-ROM), other compact disc storage, optical disc storage (including a compressed optical disc, a laser disc, an optical disc, a digital versatile disc, a Blu-ray disc, or the like), a magnetic disk storage medium, or another magnetic storage device; or any other medium capable of carrying or storing desired program code in a form of instructions or a data structure and capable of being accessed by a computer. However, this is not limited. The memory may exist independently and is connected to the processor through the communication line 502. The memory may alternatively be integrated with the processor.

The memory 503 is configured to store computer-executable instructions for executing the solutions of this application, and the processor 501 controls execution of the computer-executable instructions. The processor 501 is configured to execute the computer-executable instructions stored in the memory 503, to implement the communication method provided in embodiments of this application.

Alternatively, in embodiments of this application, the processor 501 may implement a processing-related function in the communication method provided in the following embodiment of this application, and the communication interface 504 may be responsible for communicating with another device or communication network. This is not specifically limited in embodiments of this application.

The computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 508 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 500 may further include an output device 505 and an input device 506. The output device 505 communicates with the processor 501, and may display information in a plurality of manners.

The foregoing describes the communication system provided in this application. The following describes, with reference to the accompanying drawings, the communication method provided in embodiments of this application.

Based on a range of scheduled devices, the communication method provided in embodiments of this application may be classified into three types, including: scheduling a polarization manner of the terminal device at a terminal level, scheduling a polarization manner of the terminal device at a beam level, and scheduling a polarization manner of the terminal device at a cell level, which are sequentially described below.

This application provides an embodiment, to schedule the polarization manner of the terminal device at the terminal level.

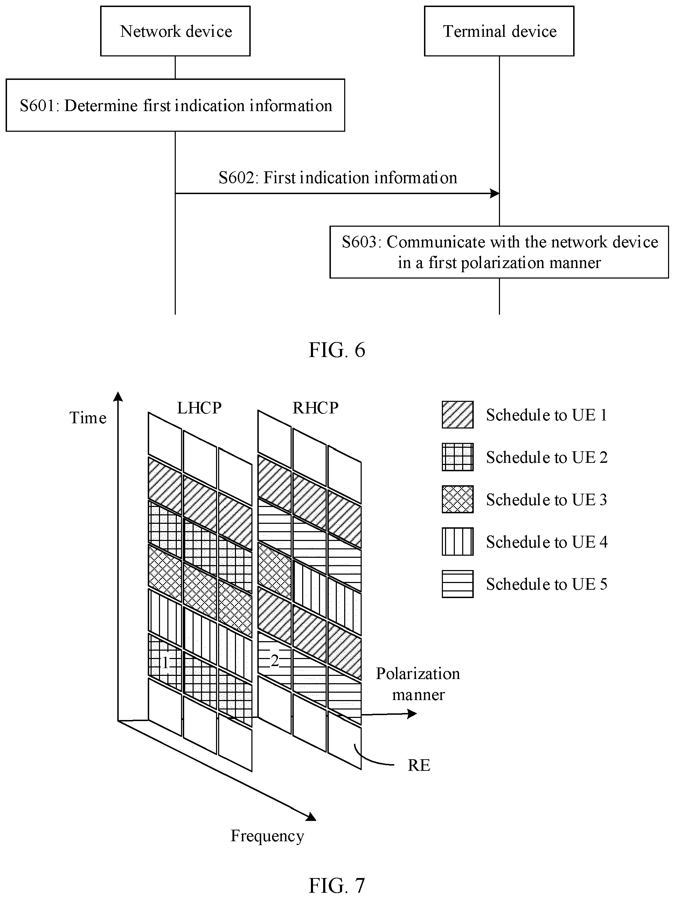

FIG. 6 is a schematic flowchart 1 of a communication method according to this embodiment of this application. The communication method is applied to the foregoing communication system, and may be performed by the terminal device or the network device in the foregoing communication system. According to the communication method, the polarization manner of the terminal device can be scheduled at the terminal level, that is, the network device can adjust the polarization manner of the terminal device, so that scheduling of the polarization manner of the terminal device is more flexible and a scheduling granularity is finer, thereby improving spectral efficiency. The method may include S601 to S603, which are sequentially described below.

S601: The network device determines first indication information.

The first indication information indicates a first polarization manner of the terminal device. In other words, the first indication information may indicate that a polarization manner of the terminal device is switched to a first polarization manner; or the first indication information may indicate that the terminal device works in a first polarization manner; or the first indication information may indicate that a polarization manner of the terminal device is a first polarization manner. It should be noted that, unless otherwise specified, meanings to be expressed in the several manners of expressing the first indication information are consistent, and may be mixed.

The first polarization manner may include any one of left hand circular polarization, right hand circular polarization, linear polarization, or cross polarization multiplexing. Linear polarization may include any one of horizontal polarization, vertical polarization, +45° polarization, and -45° polarization. Cross polarization multiplexing may include any one of horizontal and vertical cross polarization multiplexing, ±45° cross polarization multiplexing, and left hand circular polarization and right hand circular polarization cross polarization multiplexing. This is uniformly described herein. Details are not described below again.

S602: The network device sends the first indication information to the terminal device. Correspondingly, the terminal device receives the first indication information from the network device.

S603: The terminal device communicates with the network device in the first polarization manner.

That the terminal device communicates with the network device in the first polarization manner may be understood as that the terminal device works in the first polarization manner, or the terminal device switches the polarization manner to the first polarization manner.

For example, if the first polarization manner indicated by the first indication information is left hand circular polarization, the terminal device may work in the left hand circular polarization manner, to implement communication with the network device. If the first polarization manner indicated by the first indication information is left hand circular polarization and right hand circular polarization cross polarization multiplexing, the terminal device may work in the left hand circular polarization and right hand circular polarization cross polarization multiplexing polarization manner, to implement communication with the network device.

That the network device determines the first indication information in S601 may be implemented in the following Manner 1 to Manner 6, which are sequentially described below.

Manner 1: The network device determines the first indication information based on a polarization manner supported by the terminal device.

Optionally, the network device may determine, from the polarization manner supported by the terminal device, a polarization manner as the first polarization manner, to determine the first indication information.

It is assumed that the polarization manners supported by the terminal device include left hand circular polarization, right hand circular polarization, and left hand circular polarization and right hand circular polarization cross polarization multiplexing, and the network device determines the left hand circular polarization and right hand circular polarization cross polarization multiplexing as the first polarization manner, the network device may generate the first indication information, where the first indication information indicates that the terminal device works in left hand circular polarization and right hand circular polarization cross polarization multiplexing.

In Manner 1, before the network device determines the first indication information, Manner 1 may further include: The network device obtains the polarization manner supported by the terminal device. An implementation process in which the network device obtains the polarization manner supported by the terminal device may include the following steps:
Step 1.1: The network device sends UE capability request (UE capability enquire) information to the terminal device. Correspondingly, the terminal device receives the UE capability request information from the network device.
Step 1.2: The terminal device generates a UE capability report (UE capability reporting) based on the UE capability request information, and feeds back the UE capability report to the network device.

In step 1.1 and step 1.2, the UE capability request information indicates the terminal device to feed back the polarization manner supported by the terminal device. The UE capability report includes the polarization manner supported by the terminal device. The UE capability report may also be referred to as UE capability information (UE capability information). This is not limited herein.

For example, it is assumed that the polarization manner supported by the terminal device includes left hand circular polarization, right hand circular polarization, and left hand circular polarization and right hand circular polarization cross polarization multiplexing, the UE capability report generated by the terminal device may include that the terminal device supports left hand circular polarization, right hand circular polarization, and left hand circular polarization and right hand circular polarization cross polarization multiplexing.

Optionally, both the UE capability request information and the UE capability report may be carried in RRC signaling.

Optionally, the UE capability report may be carried on an uplink (uplink, UL) dedicated control channel (dedicated control channel, DCCH). In some possible embodiments, the UE capability report may be implemented by using a radio frequency (radio frequency, RF) parameter or a physical layer (physical layer, PHY) parameter in the UL-DCCH.

When the UE capability report is implemented by using the RF parameter in the UL-DCCH, a field in the RF parameter may indicate the polarization manner supported by the terminal device. For example, an information format of the RF parameter in the UL-DCCH may be as follows:

```
          RF-Parameters ::= SEQUENCE {
          supportedBandListNR SEQUENCE (SIZE (1..maxBands)) OF BandNR,
          supportedBandCombinationList BandCombinationList OPTIONAL,
          appliedFreqBandListFilter FreqBandList OPTIONAL
          Polarization ENUMERATED { LHCP, RHCP, L&RHCP Multiplexing} OPTIONAL,
          1
```

In the information format of the RF parameter, a polarization (Polarization) field in the RF parameter may indicate the polarization manner supported by the terminal device.

In some possible embodiments, a length of the polarization field in the RF parameter may be 2 bits. For example, Table 1 shows a correspondence between a polarization field and a polarization manner supported by the terminal device. Refer to Table 1. It can be learned that when the polarization field is 00, it may indicate that the terminal device supports left hand circular polarization; when the polarization field is 01, it may indicate that the terminal device supports right hand circular polarization; and when the polarization field is 10, it may indicate that the terminal device supports left hand circular polarization and right hand circular polarization cross polarization multiplexing.

**Table 1**

| Value of a polarization field | Polarization manner supported by a terminal device |
|---|---|
| 00 | Left hand circular polarization |
| 01 | Right hand circular polarization |
| 10 | Left hand circular polarization and right hand circular polarization cross polarization multiplexing |

In some other possible embodiments, an uplink polarization manner and a downlink polarization manner that are supported by the terminal device may be separately indicated. A length of a polarization field in the RF parameter may be 4 bits. For example, Table 2 shows another correspondence between a polarization field and a polarization manner supported by the terminal device. Refer to Table 2. It can be learned that when the polarization field is 0000, it may indicate that the terminal device supports uplink left hand circular polarization and downlink left hand circular polarization, and so on. For a correspondence between a value of another polarization field and a polarization manner supported by the terminal device, refer to Table 2. Details are not described herein again.

**Table 2**

| Value of a polarization field | Polarization manner supported by a terminal device |
|---|---|
| 0000 | Uplink left hand circular polarization, and downlink left hand circular polarization |
| 0001 | Uplink left hand circular polarization, and downlink right hand circular polarization |
| 0010 | Uplink left hand circular polarization, and downlink left hand circular polarization and right hand circular polarization cross polarization multiplexing |
| 0011 | Uplink right hand circular polarization, and downlink left hand circular polarization |
| 0100 | Uplink right hand circular polarization, and downlink right hand circular polarization |
| 0101 | Uplink right hand circular polarization, and downlink left hand circular polarization and right hand circular polarization cross polarization multiplexing |
| 0110 | Uplink left hand circular polarization and right hand circular polarization cross polarization multiplexing, and downlink left hand circular polarization |
| 0111 | Uplink left hand circular polarization and right hand circular polarization cross polarization multiplexing, and downlink right hand circular polarization |
| 1000 | Uplink left hand circular polarization and right hand circular polarization cross polarization multiplexing, and downlink left hand circular polarization and right hand circular polarization cross polarization multiplexing |

When the UE capability report is implemented by using the PHY parameter in the UL-DCCH, a field in the PHY parameter may indicate the polarization manner supported by the terminal device. For example, an information format of the PHY parameter in the UL-DCCH may be as follows:

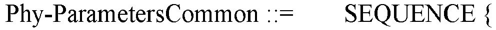

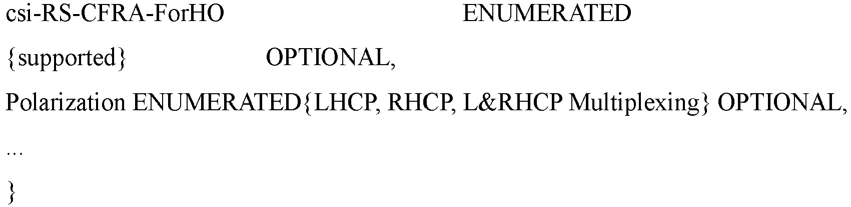

In the information format of the PHY parameter, a polarization (Polarization) field in the PHY parameter may indicate the polarization manner supported by the terminal device.

In some possible embodiments, a length of the polarization field in the PHY parameter may be 2 bits. For example, specific values are shown in Table 1.

In some other possible embodiments, a length of the polarization field in the PHY parameter may be 4 bits. For example, specific values are shown in Table 2.

It should be noted that the lengths of the polarization fields in both the RF parameter and the PHY parameter are merely examples. Lengths of the polarization fields in both the RF parameter and the PHY parameter are not limited in this embodiment of this application. During application, the lengths of the polarization fields in both the RF parameter and the PHY parameter may be set based on an actual requirement. In addition, in Table 1 and Table 2, the correspondence between the polarization field in the RF parameter or the PHY parameter and the polarization manner supported by the terminal device is also an example. A correspondence between the polarization field in the RF parameter or the PHY parameter and the polarization manner supported by the terminal device is not limited in this embodiment of this application. During application, the correspondence may be adjusted based on an actual requirement. The correspondence in Table 1 is used as an example. The correspondence in Table 1 may be adjusted to a correspondence in Table 3. The correspondence in Table 2 is similar. Details are not described again.

**Table 3**

| Value of a polarization field | Polarization manner supported by a terminal device |
|---|---|
| 10 | Left hand circular polarization |
| 00 | Right hand circular polarization |
| 01 | Left hand circular polarization and right hand circular polarization cross polarization multiplexing |

In addition, in Table 1 and Table 2, the polarization manner, supported by the terminal device, that can be indicated by the polarization field in the RF parameter or the PHY parameter is not limited to several types of left hand circular polarization, right hand circular polarization, and left hand circular polarization and right hand circular polarization cross polarization multiplexing. The polarization manner, supported by the terminal device, that can be indicated by the polarization field in the RF parameter or the PHY parameter may include one or more of left hand circular polarization, right hand circular polarization, horizontal polarization, vertical polarization, +45° polarization, -45° polarization, horizontal and vertical cross polarization multiplexing, ±45° cross polarization multiplexing, and left hand circular polarization and right hand circular polarization cross polarization multiplexing. For a specific indication principle, refer to indication principles in Table 1 and Table 2. Examples are not provided herein one by one. As types of polarization manners, supported by the terminal device, that can be indicated by the polarization field in the RF parameter or the PHY parameter increase, the length of the polarization field in the RF parameter or the PHY parameter may increase accordingly, to support indication of all these types.

It should be further noted that the RF parameter and the PHY parameter each may further include an uplink polarization field and a downlink polarization field. The uplink polarization field indicates an uplink polarization manner supported by the terminal device, and the downlink polarization field indicates a downlink polarization manner supported by the terminal device. For indication principles of the uplink polarization field and the downlink polarization field, refer to the indication principles in Table 1 and Table 2. Details are not described herein again. In this way, the terminal device can separately report, to the network device by using the UL-DCCH, the supported uplink polarization manner and downlink polarization manner, thereby improving report flexibility.

It may be understood that, in step 1.1 and step 1.2, when feeding back the UE capability report, the terminal device may configure a value of the polarization field in the RF parameter or the PHY parameter to a value corresponding to the polarization manner supported by the terminal device, to feed back the UE capability report to the network device. Table 1 is used as an example. It is assumed that the terminal device supports left hand circular polarization and right hand circular polarization cross polarization multiplexing, the terminal device may configure the polarization field in the RF parameter in the UL-DCCH to 10, and send the UL-DCCH to the network device, so as to feed back, to the network device, information that the terminal device supports left hand circular polarization and right hand circular polarization cross polarization multiplexing.

Manner 2: The network device determines the first indication information based on CSI of channels in different polarization manners measured by the terminal device.

Optionally, the network device may determine at least one available polarization manner based on the CSI of the channels in the different polarization manners measured by the terminal device; and then determine, from the at least one available polarization manner, one available polarization manner as the first polarization manner, and generate the first indication information.

For example, the CSI of the channels in the different polarization manners measured by the terminal device includes CSI of a channel in a polarization manner A and CSI of a channel in a polarization manner B. The network device may determine the at least one available polarization manner by determining the following conditions.

In a possible implementation, if a first condition is met, it may be determined that the polarization manner B is the available polarization manner. The first condition may include: The terminal device works in the polarization manner A, and a difference between a first measurement value of the CSI of the channel in the polarization manner B and a second measurement value of the CSI of the channel in the polarization manner A is greater than (or ≥) a first threshold; or the first condition may include: The terminal device works in the polarization manner A, the CSI of the channel in the polarization manner Ais less than (or ≤) a threshold 1, and the CSI of the channel in the polarization manner B is greater than (or ≥) a threshold 2. In other words, when channel quality in the polarization manner A is poorer than channel quality in the polarization manner B, the polarization manner B with better channel quality may be used as the first polarization manner, to indicate the terminal device to switch to a polarization manner with better channel quality, thereby improving communication efficiency.

The first measurement value and the second measurement value may be reference signal received power (reference signal received power, RSRP).

For example, if the polarization manner A is left hand circular polarization, the polarization manner B is right hand circular polarization, and the CSI of the channel in right hand circular polarization-the CSI of channel in the left hand circular polarization>the first threshold, it indicates that the CSI of the channel in left hand circular polarization and the CSI of the channel in right hand circular polarization meet the first condition, and it may be determined that left hand circular polarization is the available polarization manner, and left hand circular polarization is determined as the first polarization manner. The first indication information is generated, where the first indication information indicates that the polarization manner of the terminal device is left hand circular polarization. Values of the first threshold, the threshold 1, and the threshold 2 may all be determined by the network device or agreed on in a protocol. This is not limited herein.

In another possible implementation, if a second condition is met, it may be determined that polarization manner A and polarization manner B cross polarization multiplexing is the available polarization manner, that is, it is determined that the terminal device has a capability of enabling polarization multiplexing. The second condition includes: The terminal device works in a polarization manner A or a polarization manner B, and both CSI of a channel in the polarization manner A and CSI of a channel in the polarization manner B are greater than (or ≥) a second threshold. In this case, the network device may determine, based on a service requirement of the terminal device, whether the terminal device enables polarization multiplexing, that is, whether the terminal device works in polarization manner A and polarization manner B cross polarization multiplexing. For an implementation in which the network device determines, based on the service requirement of the terminal device, whether the terminal device enables polarization multiplexing, refer to related descriptions in the following Manner 3. Details are not described herein again.

For example, if the polarization manner A is left hand circular polarization, the polarization manner B is right hand circular polarization, and both the CSI of the channel in right hand circular polarization and the CSI of the channel in left hand circular polarization are greater than the second threshold, it may be determined that left hand circular polarization and right hand circular polarization cross polarization multiplexing is the available polarization manner, that is, it is determined that the terminal device has the capability of enabling polarization multiplexing. In this case, if the service requirement of the terminal device is large, for example, a throughput of the terminal device is greater than a throughput threshold, the network device may determine that the terminal device enables polarization multiplexing, that is, the network device determines that left hand circular polarization and right hand circular polarization cross polarization multiplexing is the first polarization manner, and generates the first indication information, where the first indication information indicates that the polarization manner of the terminal device is left hand circular polarization and right hand circular polarization cross polarization multiplexing, and indicates that the terminal device works in left hand circular polarization and right hand circular polarization cross polarization multiplexing. In this way, when the service requirement of the terminal device is large and channel quality of polarization multiplexing is good, polarization multiplexing can be enabled for the terminal device, to improve the throughput of the terminal device. A value of the second threshold may be determined by the network device or agreed on in a protocol. This is not limited herein.

In still another possible implementation, if a third condition is met, it may be determined that a polarization manner B is an available polarization manner, and polarization manner A and polarization manner B cross polarization multiplexing is an unavailable polarization manner, that is, channel quality of polarization multiplexing by the terminal device is poor. The third condition is: The terminal device works in polarization manner A and polarization manner B cross polarization multiplexing, CSI of a channel in the polarization manner A is less than (or ≤) a third threshold, and CSI of a channel in a polarization manner B is greater than (or ≥) the third threshold. In other words, in two orthogonally polarization manners (denoted as A and B) currently used by the terminal device, if channel quality of A is poor, the network device may indicate the terminal device to work in B, where channel quality of B is better, thereby improving communication efficiency of the terminal device.

For example, if the polarization manner A is left hand circular polarization, the polarization manner B is right hand circular polarization, the CSI of the channel in left hand circular polarization is less than the third threshold, and the CSI of the channel in right hand circular polarization is greater than the third threshold, the network device may determine that right hand circular polarization is the available polarization manner and left hand circular polarization and right hand circular polarization cross polarization multiplexing is an unavailable polarization manner, and determine right hand circular polarization as the first polarization manner, and generate first indication information, where the first indication information indicates that the polarization manner of the terminal device is right hand circular polarization, and indicates the terminal device to work in right hand circular polarization, thereby improving channel quality and communication efficiency. A value of the third threshold may be determined by the network device or agreed on in a protocol. This is not limited herein.

Both the polarization manner A and the polarization manner B are polarization manners supported by the terminal device. For types of the polarization manner A and the polarization manner B, refer to a type of the first polarization manner. Details are uniformly described herein. Details are not described below again.

In Manner 2, before determining the first indication information, the network device may further obtain the CSI of the channels in different polarization manners measured by the terminal device. The network device may obtain, by using the following steps, an implementation process of the CSI of the channels in the different polarization manners measured by the terminal device.

Step 2.1: The network device sends CSI request (CSI enquire) information to the terminal device. Correspondingly, the terminal device receives the CSI request information from the network device.

Step 2.2: The terminal device measures the CSI of the channels in the different polarization manners based on the CSI request information, to generate a CSI report.

Step 2.3: The terminal device sends a CSI report (CSI report) to the network device. Correspondingly, the network device receives the CSI report from the terminal device.

In step 2.1 to step 2.3, the CSI request information indicates the terminal device to feed back the CSI of the channels in the different polarization manners. The CSI report includes the CSI of the channels in the different polarization manners measured by the terminal device. The CSI request information may also be referred to as CSI report configuration (CSI report configure) information. This is not limited herein.

For example, it is assumed that the CSI request information indicates the terminal device to feed back CSI of a channel in left hand circular polarization and CSI of a channel in right hand circular polarization, the terminal device may measure the CSI of the channel in left hand circular polarization and the CSI of the channel in right hand circular polarization, and then generate the CSI report, where the CSI report includes the CSI of the channel in left hand circular polarization and the CSI of the channel in right hand circular polarization.

Optionally, in step 2.1 to step 2.3, the CSI request information may further indicate the terminal device to feed back the CSI of the channels in the different polarization manners periodically (periodic), semi-persistently (semi-persistent), or aperiodically (aperiodic).

For example, if the CSI request information further indicates the terminal device to periodically feed back the CSI of the channels in the different polarization manners, the terminal device may measure the CSI of the channels in the different polarization manners once every periodicity, and feed back, to the network device, the CSI report obtained in this measurement. A length of the periodicity may be configured by the network device for the terminal device, or may be agreed on in a protocol. This is not limited herein.

For another example, if the CSI request information further indicates the terminal device to aperiodically feed back the CSI of the channels in the different polarization manners, the terminal device may measure the CSI of the channels in the different polarization manners once, and feed back, to the network device, the CSI report obtained in this measurement.

For still another example, if the CSI request information further indicates the terminal device to semi-persistently feed back the CSI of the channels in the different polarization manners, the terminal device may measure the CSI of the channels in the different polarization manners once every half periodicity, and feed back, to the network device, the CSI report obtained in this measurement. A length of the half periodicity may be configured by the network device for the terminal device, or may be agreed on in a protocol. This is not limited herein.

Optionally, the CSI request information may be carried in RRC signaling. In some possible embodiments, the network device may configure a polarization measurement field in a CSI ReportConfig field to carry the CSI request information, so as to require the terminal device to feed back the CSI of the channels in the different polarization manners. An information format of the CSI ReportConfig field may be as follows:

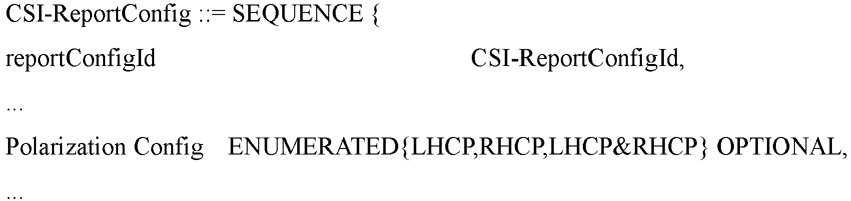

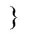

The polarization measurement (Polarization Config) field in the CSI ReportConfig field may indicate the terminal device to feed back the CSI of the channels in the different polarization manners.

In some possible embodiments, a length of the polarization measurement field in the CSI ReportConfig field may be 2 bits. For example, Table 4 shows a correspondence between a polarization measurement field in a CSI ReportConfig field and information fed back by a terminal device. Refer to Table 4. It can be learned that when the polarization measurement field is 00, it may indicate the terminal device to feed back CSI of a channel in left hand circular polarization; when the polarization measurement field is 01, it may indicate the terminal device to feed back CSI of a channel in right hand circular polarization; and when the polarization measurement field is 10, it may indicate the terminal device to feed back CSI of a channel in left hand circular polarization and CSI of a channel in right hand circular polarization.

**Table 4**

| Polarization measurement field | Indicate information fed back by a terminal device |
|---|---|
| 00 | CSI of a channel in left hand circular polarization |
| 01 | CSI of a channel in right hand circular polarization |
| 10 | CSI of a channel in left hand circular polarization and CSI of a channel in right hand circular polarization |

Optionally, the CSI report may be carried on a physical uplink control channel (physical uplink control channel, PUCCH) or a physical uplink shared channel (physical uplink shared channel, PUSCH). This is not limited herein.

According to an Xx protocol, the CSI report includes a part 1 and a part 2. In some possible embodiments, when the terminal device feeds back the CSI report, if the CSI request information indicates the terminal device to feed back CSI of channels in two polarization manners, when the terminal device feeds back the CSI report, the terminal device may perform the following steps.

The terminal device transmits, in the part 1 and the part 2 in the CSI report, CSI of a channel in one polarization manner, further configures two part fields in the CSI report, which are respectively a part 3 and a part 4, and transmits, in the part 3 and the part 4, CSI of a channel in the other polarization manner.

Alternatively, the terminal device transmits, in the part 1 in the CSI report, CSI of a channel in one polarization manner, and transmits, in the part 2 in the CSI report, CSI of a channel in the other polarization manner. It should be noted that, if the CSI of the channel in one polarization manner is transmitted in the part 1, the part 1 may no longer carry other information. In this case, information with a lower priority in the part 1 may be discarded. For example, if the terminal device does not perform multiple input multiple output (multiple input multiple output, MIMO) transmission, MIMO information is information with a lower priority, and the MIMO information may be discarded from the part 1 during transmission, so that the CSI of the channel in one polarization manner can be transmitted in the part.

Further, when the CSI of the channels in the two polarization manners is transmitted, the CSI of the channel in one polarization manner may be a change amount relative to the CSI of the channel in the other polarization manner. For example, when the CSI of the channel in one polarization manner is transmitted in the part 1 in the CSI report, and the CSI of the channel in the other polarization manner is transmitted in the part 2 in the CSI report, the CSI of the channel in the other polarization manner in the part 2 may be the change amount relative to the CSI of the channel in the polarization manner in the part 1. This can reduce overheads of the CSI report.

Manner 3: The network device determines the first indication information based on a service requirement of the terminal device.

The service requirement of the terminal device may include an uplink service throughput of the terminal device and/or a downlink service throughput of the terminal device. In addition, the service requirement herein may be a current service requirement of the terminal device. This is uniformly described herein. Details are not described below again.

Optionally, the network device may determine at least one available polarization manner based on the service requirement of the terminal device; and then determine, from the at least one available polarization manner, one available polarization manner as the first polarization manner, and generate the first indication information.

That the network device determines the at least one available polarization manner based on the service requirement of the terminal device may be implemented in the following possible manners:
Manner 3.1: If a fourth condition is met, it may be determined that downlink cross polarization multiplexing is an available polarization manner. The fourth condition may include: A current downlink polarization manner of the terminal device is a single polarization manner, and the downlink throughput of the terminal device is greater than (or ≥) a first throughput threshold. In this way, when a downlink service requirement of the terminal device is large, the network device can enable downlink polarization multiplexing for the terminal device, to improve a throughput of the terminal device.

For example, polarization manners supported by the terminal device include a left hand circular polarization manner, a right hand circular polarization manner, and left hand circular polarization and right hand circular polarization cross polarization multiplexing. If the downlink polarization manner of the terminal device is the left hand circular polarization manner, and the downlink throughput of the terminal device is greater than the first throughput threshold, it may be determined that downlink left hand circular polarization and right hand circular polarization cross polarization multiplexing is the available polarization manner, and downlink left hand circular polarization and right hand circular polarization cross polarization multiplexing is the first polarization manner. The first indication information is generated, where the first indication information indicates that the downlink polarization manner of the terminal device is left hand circular polarization and right hand circular polarization cross polarization multiplexing. A value of the first throughput threshold may be determined by the network device or agreed on in a protocol. This is not limited herein.

Manner 3.2: If a fifth condition is met, it may be determined that uplink cross polarization multiplexing is an available polarization manner. The fifth condition may include: A current uplink polarization manner of the terminal device is a single polarization manner, and the uplink throughput of the terminal device is greater than (or ≥) a second throughput threshold. In this way, when an uplink service requirement of the terminal device is large, the network device can enable uplink polarization multiplexing for the terminal device, to improve a throughput of the terminal device.

For an example in Manner 3.2, refer to the example in Manner 3.1. Details are not described herein again.

It may be understood that Manner 3.1 and Manner 3.2 may be performed together, so that the network device can enable uplink and downlink polarization multiplexing for the terminal device when both the uplink and downlink service requirements of the terminal device are large, thereby improving the throughput of the terminal device.

Manner 3.3: If a sixth condition is met, it may be determined that a downlink single polarization manner is an available polarization manner. The sixth condition may include: A current downlink polarization manner of the terminal device is cross polarization multiplexing, and the downlink throughput of the terminal device is less than (or ≤) a third throughput threshold. In this way, when a downlink service requirement of the terminal device is small, the network device can disable downlink polarization multiplexing for the terminal device, to further reduce power consumption of the terminal device.

For example, polarization manners supported by the terminal device include a left hand circular polarization manner, a right hand circular polarization manner, and left hand circular polarization and right hand circular polarization cross polarization multiplexing. If the downlink polarization manner of the terminal device is left hand circular polarization and right hand circular polarization cross polarization multiplexing, and the downlink throughput of the terminal device is less than the third throughput threshold, it may be determined that downlink left hand circular polarization manner is the available polarization manner, and the downlink left hand circular polarization manner is the first polarization manner. The first indication information is generated, where the first indication information indicates that the downlink polarization manner of the terminal device is the left hand circular polarization manner. A value of the third throughput threshold may be determined by the network device or agreed on in a protocol. This is not limited herein.

Manner 3.4: If a seventh condition is met, it may be determined that an uplink single polarization manner is an available polarization manner. The seventh condition may include: A current uplink polarization manner of the terminal device is cross polarization multiplexing, and the uplink throughput of the terminal device is less than (or ≤) a second throughput threshold. In this way, when an uplink service requirement of the terminal device is small, the network device can disable uplink polarization multiplexing for the terminal device, to avoid a waste of air interface resources and reduce power consumption of the terminal.

For an example in Manner 3.4, refer to the example in Manner 3.3. Details are not described herein again.

It may be understood that Manner 3.3 and Manner 3.4 may be performed together, so that the network device can disable uplink and downlink polarization multiplexing for the terminal device when both the uplink and downlink service requirements of the terminal device are small, thereby further reducing a throughput of the terminal device.

In Manner 3, before determining the first indication information, the network device may further obtain the service requirement of the terminal device. An implementation process in which the network device obtains the service requirement of the terminal device may include obtaining the uplink service throughput of the terminal device and/or the downlink service throughput of the terminal device.

Manner 4: The network device determines the first indication information based on a polarization manner expected by the terminal device.

The polarization manner expected by the terminal device may be a polarization manner that is desired to be scheduled by the network device to the terminal device and that is determined by the terminal device based on a service requirement of the terminal device.

Optionally, the network device may determine at least one available polarization manner based on the polarization manner expected by the terminal device; and then determine, from the at least one available polarization manner, one available polarization manner as the first polarization manner, and generate the first indication information.

Optionally, the network device determines the polarization manner expected by the terminal device as the available polarization manner. For example, if the polarization manner expected by the terminal device is left hand circular polarization, the network device may determine left hand circular polarization as the available polarization manner, determine left hand circular polarization as the first polarization manner, and generate the first indication information, where the first indication information indicates that the polarization manner of the terminal device is left hand circular polarization.

It may be understood that, when a polarization manner of the terminal device is left hand circular polarization and right hand circular polarization cross polarization, if the terminal device determines that a service throughput of the terminal device decreases, the terminal device may determine that the polarization manner expected by the terminal device is left hand circular polarization, and request the network device to use left hand circular polarization, thereby reducing device power consumption. For another example, when a polarization manner of the terminal device is left hand circular polarization, if the terminal device determines that a service throughput of the terminal device increases, the terminal device may determine that the polarization manner expected by the terminal device is left hand circular polarization and right hand circular polarization cross polarization, and request the network device to use left hand circular polarization and right hand circular polarization cross polarization, thereby improving the throughput. In this way, the terminal device can apply, based on the service requirement of the terminal device, to the network device for whether to use cross polarization multiplexing, so as to flexibly adjust between low power consumption and the high throughput, and improve spectrum efficiency of the polarization manner of the terminal device.

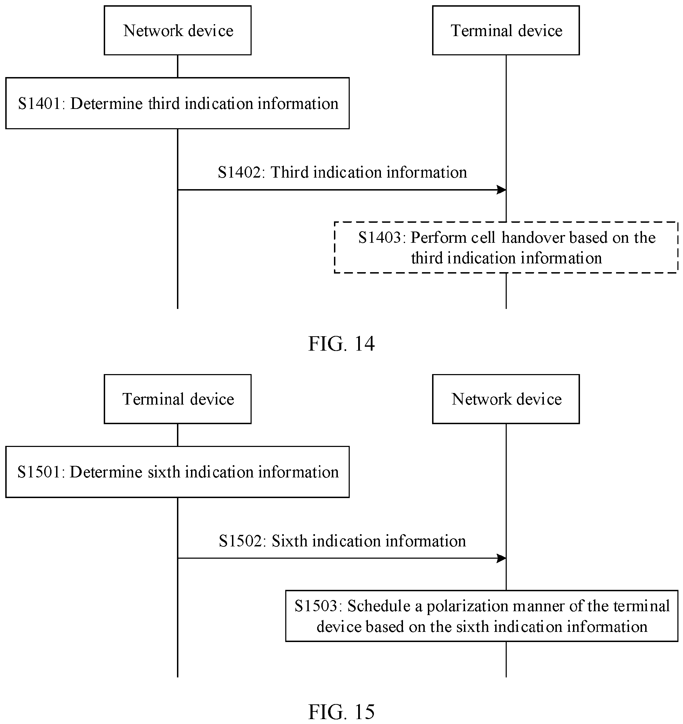

In Manner 4, before determining the first indication information, the network device may further obtain the polarization manner expected by the terminal device. For obtaining, by the network device, the polarization manner expected by the terminal device, refer to S1501 to S1503 in the following communication method shown in FIG. 15. Details are not described herein again. The polarization manner expected by the terminal device may be carried in various information, for example, a PUCCH or a PUSCH, and sent to the network device. This is not limited herein.

Manner 5: The network device determines the first indication information based on weather information.

The weather information may be a weather condition on a signal propagation path between the network device and the terminal device, and the weather condition may include a rainfall (snow) amount and/or a cloud layer thickness. In other words, the weather information may include a rainfall (snow) amount and/or a cloud layer thickness. This is uniformly described herein. Details are not described below again.

Optionally, the network device may determine at least one available polarization manner based on the weather information; and then determine, from the at least one available polarization manner, one available polarization manner as the first polarization manner, and generate the first indication information.

In a possible implementation, if an eighth condition is met, the network device may determine a single polarization manner as the available polarization manner. The eighth condition may include: The terminal device works in cross polarization multiplexing, and the rainfall (snow) amount is greater than (or ≥) a rainfall (snow) threshold, and/or the cloud layer thickness is greater than (or ≥) a thickness threshold. A value of the thickness threshold may be determined by the network device or agreed on in a protocol. This is not limited herein.

In other words, when the terminal device works in cross polarization multiplexing, and weather on the signal propagation path between the network device and the terminal device is poor, the network device may indicate the terminal device to work in the single polarization manner (for example, left hand circular polarization), to reduce signal interference and improve communication quality.

In Manner 5, before determining the first indication information, the network device may further obtain the weather information. That the network device obtains the weather information may be implemented as follows: The network device receives current meteorological information from a weather station, and determines, based on the current meteorological information and locations of both the network device and the terminal device, the weather information on the signal propagation path between the network device and the terminal device; or the network device receives current meteorological information from a weather station, and determines, based on the current meteorological information and a coverage area of the network device, the weather information on a signal propagation path of the coverage area of the network device.

Manner 6: The network device determines the first indication information based on a crosstalk status between orthogonally polarized channels.

The crosstalk status between the orthogonally polarized channels may include a crosstalk value between the orthogonally polarized channels, and the crosstalk value may also be referred to as a crosstalk degree. This is uniformly described herein. Details are not described below again. A manner of measuring the crosstalk degree between the orthogonally polarized channels may also be obtained by performing a mathematical operation on another parameter, for example, "cross polarization discrimination" or "isolation". A manner of measuring the crosstalk degree by using specific values of these quantities as thresholds is equivalent to that of measuring the crosstalk degree by using the crosstalk value. Details are not described herein again.

Manner 6 may include: The network device determines an available polarization manner and an unavailable polarization manner based on the crosstalk status between the orthogonally polarized channels, and then determines one of the available polarization manners as the first polarization manner by using one or more of the foregoing Manners 1 to 5, to determine the first indication information.

In a possible implementation, if a ninth condition is met, the network device may determine a single polarization manner as the available polarization manner, and determine cross polarization multiplexing as the unavailable polarization manner. The ninth condition may include: The crosstalk value between the orthogonally polarized channels corresponding to the terminal device is greater than (or ≥) a first crosstalk threshold. A value of the first crosstalk threshold may be determined by the network device or agreed on in a protocol. This is not limited herein. In this way, when crosstalk between the orthogonally polarized channels between the network device and the terminal device is severe, the network device may limit the polarization manner of the terminal device to the single polarization manner, thereby reducing signal interference and improving communication quality.

In another possible implementation, if a tenth condition is met, the network device may determine cross polarization multiplexing as the available polarization manner. The tenth condition may include: The crosstalk value between the orthogonally polarized channels is less than (or ≤) a second crosstalk threshold. A value of the second crosstalk threshold of the terminal device may be determined by the network device or agreed on in a protocol. This is not limited herein. In this way, when the crosstalk between the orthogonally polarized channels between the network device and the terminal device is not severe, the network device may adjust the polarization manner of the terminal device to cross polarization multiplexing, thereby improving a throughput.

In Manner 6, before determining the first indication information, the network device may further obtain crosstalk status information between the orthogonally polarized channels.

It may be understood that Manner 6 may be implemented in combination with one or more of the foregoing Manners 1 to 5. For a related combination manner, refer to the following examples including Manner 6 in Example 1 to Example 13.

In some possible embodiments, when a trigger condition is met, the network device may determine the first indication information based on the trigger condition. The trigger condition may include any one of the first condition to the ninth condition in Manner 2 to Manner 6, and the trigger condition may trigger the network device to schedule the polarization manner of the terminal device. In other words, if any one of the first condition to the ninth condition is met, the network device may determine the first indication information based on a process corresponding to the met condition, and schedule the polarization manner of the terminal device.

In this way, the network device can discover a problem in the polarization manner of the terminal device in time, and adjust a polarization manner of a terminal device in time, so that scheduling of the polarization manner of the terminal device is more flexible, and a scheduling granularity is finer, thereby improving spectral efficiency.

It may be understood that the foregoing Manner 1 to Manner 6 may be separately implemented, or may be implemented in combination. This is not limited in this embodiment of this application. A combination implementation of Manner 1 to Manner 3, Manner 5, and Manner 6 is described below by using several examples.

Example 1: When Manner 1, Manner 2, Manner 3, Manner 5, and Manner 6 are combined for implementation, the network device may determine, from the polarization manners supported by the terminal device, one polarization manner as the first polarization manner based on the CSI of the channels in the different polarization manners measured by the terminal device, the service requirement of the terminal device, the weather information, and the crosstalk status between the orthogonally polarized channels, to determine the first indication information.

That the network device determines, from the polarization manners supported by the terminal device, one polarization manner as the first polarization manner based on the CSI of the channels in the different polarization manners measured by the terminal device, the service requirement of the terminal device, the weather information, and the crosstalk status between the orthogonally polarized channels may include: The network device determines at least one available polarization manner (denoted as a first set) based on the CSI of the channels in the different polarization manners measured by the terminal device; the network device determines at least one available polarization manner (denoted as a second set) based on the service requirement of the terminal device; the network device determines at least one available polarization manner (denoted as a third set) based on the weather information; the network device determines at least one available polarization manner (denoted as a fourth set) based on the crosstalk status between the orthogonally polarized channels; and the network device uses, in polarization manners included in the first set to the fifth set, one of the polarization manners supported by the terminal device as the first polarization manner.

The network device may determine the at least one available polarization manner based on different information (including any one of the CSI of the channels in the different polarization manners measured by the terminal device, the service requirement of the terminal device, the weather information, and the crosstalk status between the orthogonally polarized channels). For details, refer to a process in which the network device determines the at least one available polarization manner in Manner 2 to Manner 6. Details are not described herein again.

In other words, when the foregoing plurality of manners are implemented in combination, the network device may separately determine a plurality of polarization manner sets based on different information, and use, as the first polarization manner, one of the polarization manners supported by the terminal device, in polarization manners included in the plurality of polarization manner sets.

Example 2: When Manner 1 and Manner 2 are combined for implementation, the network device may determine, from the polarization manners supported by the terminal device, one polarization manner as the first polarization manner based on the CSI of the channels in the different polarization manners measured by the terminal device, to determine the first indication information. For example, the network device may select, from one or more polarization manners when the CSI of the channels is greater than (or ≥) the CSI threshold, one of the polarization manners supported by the terminal device as the first polarization manner, to determine the first indication information.

It may be understood that, when Manner 1 to Manner 3, Manner 5, and Manner 6 are combined for implementation, a plurality of manners may be randomly selected for combination implementation. For a specific implementation process, refer to the foregoing examples. Examples are not provided herein one by one.

With reference to the foregoing descriptions of Manner 1 to Manner 6, it can be learned that the network device may determine the first indication information based on one or more of the polarization manner supported by the terminal device, the CSI of the channels in the different polarization manners measured by the terminal device, the service requirement of the terminal device, the polarization manner expected by the terminal device, the weather condition between the terminal device and the network device, and the crosstalk status between the orthogonally polarized channels. In other words, the first indication information may be determined based on one or more of the following: the polarization manner supported by the terminal device, the CSI of the channels in the different polarization manners measured by the terminal device, the service requirement of the terminal device, the polarization manner expected by the terminal device, the weather condition between the terminal device and the network device, or the crosstalk status between the orthogonally polarized channels.

It should be understood that, in Manner 1 to Manner 6, the network device may determine, with reference to a plurality of types of information, a polarization manner that is more appropriate for the terminal device, and schedule the polarization manner for the terminal device by using the first indication information. This can enable, in one aspect, the terminal device to work in a better polarization manner, improve communication quality, and reduce power consumption, in another aspect, scheduling of the polarization manner for the terminal device can be more flexible, and a scheduling granularity is finer, thereby improving spectral efficiency.

Optionally, the first polarization manner may include a first uplink polarization manner and/or a first downlink polarization manner. The first uplink polarization manner may include any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, and uplink left hand circular polarization or right hand circular polarization cross polarization multiplexing. The first downlink polarization manner may include any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, and downlink left hand circular polarization or right hand circular polarization cross polarization multiplexing. Similarly, a second polarization manner to a fourth polarization manner below may also be classified into an uplink polarization manner and a downlink polarization manner. For a division principle, refer to the foregoing first polarization manner. This is uniformly described herein. Details are not described below again.

It should be noted that, this embodiment of this application includes the foregoing Manner 1 to Manner 6 and the following Manner 7 to Manner 30. For a polarization manner that is not specified as an uplink polarization manner and/or a downlink polarization manner, the polarization manner is not limited in this embodiment of this application to an uplink polarization manner and/or a downlink polarization manner. In other words, the polarization manner that is not specified as the uplink polarization manner and/or the downlink polarization manner may be any one of an uplink polarization manner, a downlink polarization manner, or an uplink/downlink polarization manner. For example, left hand circular polarization may be uplink left hand circular polarization, downlink left hand circular polarization, or uplink and downlink left hand circular polarization. In this embodiment of this application, the first polarization manner, the second polarization manner, a third polarization manner, the fourth polarization manner, the polarization manner A, the polarization manner B, a polarization manner C, and a polarization manner D are similar. Details are not described again.

Optionally, the first indication information may further indicate duration of the first polarization manner.

The duration of the first polarization manner may be understood as a time length for the terminal device to continuously work in the first polarization manner. The duration of the first polarization manner may also be referred to as a timer of the first polarization manner. When the timer expires, the terminal device may restore a default polarization manner of a cell broadcast by the network device.

In this way, the network device can indicate the duration in which the terminal device works in the first polarization manner, and after the duration indicated by the first indication information expires, the terminal device can be restored to a previous polarization manner. The network device may no longer need to indicate, by using one piece of indication signaling, the terminal device to restore to the previous polarization manner. This can reduce signaling overheads, avoid that the network device waits for a long time for feedback of the terminal device on the indication signaling, and further improve flexibility of scheduling the polarization manner of the terminal device.

That the first indication information indicates the duration of the first polarization manner may be implemented in the following Manner 7 and Manner 8.

Manner 7: The first indication information may include duration information, and the duration information indicates the duration of the first polarization manner. For example, it is assumed that the first indication information indicates that the polarization manner of the terminal device is left hand circular polarization, and the duration information included in the first indication information is 5 seconds (second, s), the first indication information further indicates that the terminal device works in the left hand circular polarization manner for 5s. After 5s expire, the terminal device can be restored to the default polarization manner of the cell broadcast by the network device.

Manner 8: The first indication information may include a timer index (which may also be referred to as an index for short), and the timer index indicates the duration of the first polarization manner. It is assumed that a timer index 1 is determined based on timer configuration information to indicate that the duration of the first polarization manner is 5s, and it is assumed that the first indication information indicates that the polarization manner of the terminal device is left hand circular polarization, and the timer index included in the first indication information is 1. In this case, the first indication information further indicates that the terminal device works in the left hand circular polarization manner for 5s. After 5s expires, the terminal device can be restored to the default polarization manner of the cell broadcast by the network device.

A manner of obtaining the timer configuration information may include: The network device and the terminal device obtain the same timer configuration information through negotiation or in a manner of configuring by the network device for the terminal device. The timer configuration information may include a correspondence between at least one timer index and at least one timer, and the timer indicates the duration of the first polarization manner. For example, as shown in Table 5, Table 5 shows a one-to-one correspondence between three timer indexes and three timers. As shown in Table 5, timer indexes 1, 2, and 3 respectively correspond to timers 5s, 10s, and 15s.

**Table 5**

| Timer index | Timer |
|---|---|
| 1 | 5s |
| 2 | 10s |
| 3 | 15s |

It should be understood that, a quantity of bits for transmitting the timer index is usually less than a quantity of bits for transmitting the duration information. The timer index is introduced, which can reduce overheads of the first indication information.

Optionally, the network device may broadcast the default polarization manner of the cell. Correspondingly, the terminal device may accept the default polarization manner of the cell broadcast by the network device. For example, the network device may send the default polarization manner of the cell to all terminal devices in the cell by using an SIB. In this way, the terminal device can work in the default polarization manner, to communicate with the network device.

When broadcasting the default polarization manner of the cell, the network device may periodically broadcast the default polarization manner of the cell. A length of the periodicity herein may be determined by the network device or agreed on in a protocol. This is not limited herein.

Further, the network device may determine the default polarization manner based on polarization manners supported by all the terminal devices in the cell, and broadcast the default polarization manner.

For example, the network device may determine, as the default polarization manner based on the polarization manners supported by all the terminal devices in the cell, one of the polarization manners supported by all the terminal devices in the cell, and broadcast the default polarization manner; or the network device may determine, as the default polarization manner based on the polarization manners supported by all the terminal devices in the cell, one of the polarization manners supported by terminal devices whose proportion is greater than (or ≥) a first proportion (for example, 80%) in the cell, and broadcast the default polarization manner. The first proportion herein may be determined by the network device or agreed on in a protocol. This is not limited herein.

Further, the network device may periodically determine the default polarization manner based on the polarization manners supported by all the terminal devices in the cell, and broadcast the default polarization manner. A length of the periodicity herein may be determined by the network device or agreed on in a protocol. This is not limited herein.

Optionally, the network device may broadcast the timer configuration information. The timer configuration information may include a correspondence between at least one timer index and at least one timer, and the timer indicates the duration of the first polarization manner. For example, the network device may send the timer configuration information to all the terminal devices in the cell by using an SIB.

The timer configuration information may be implemented in the following two manners.

In a first manner, the timer configuration information includes a one-to-one correspondence between at least one timer index and at least one timer. As shown in Table 5, the timer indexes 1, 2, and 3 respectively correspond to the duration of the first polarization manner being 5s, 10s, and 15s.

In a second manner, the timer configuration information includes a correspondence between at least one timer index and at least one timer, where one or more indexes correspond to one timer.

Optionally, the network device may determine the default polarization manner of the cell based on CSI of channels in different polarization manners measured by all the terminal devices in the cell. For example, the network device may determine, from polarization manners supported by all the terminal devices in the cell, a polarization manner that meets a condition 1 as the default polarization manner. The condition 1 includes: CSI of a channel in a polarization manner is greater than (or ≥) a CSI threshold.

Optionally, the network device may determine the timer configuration information based on historical data.

Further, the network device may periodically determine the default polarization manner of the cell based on the CSI of the channels in the different polarization manners measured by all the terminal devices in the cell. A length of the periodicity herein may be determined by the network device or agreed on in a protocol. This is not limited herein.

Further, the network device may periodically determine the timer configuration information based on the historical data. A length of the periodicity herein may be determined by the network device or agreed on in a protocol. This is not limited herein.

Optionally, the network device may send default polarization indication information to the terminal device, where the default polarization indication information indicates the default polarization manner of the terminal device. The default polarization manner of the terminal device is a polarization manner of the terminal device when the network device does not indicate the polarization manner of the terminal device.

In this embodiment of this application, when the duration of the first polarization manner indicated by the first indication information expires, the terminal device may switch the polarization manner to a previous first polarization manner that is performed by the terminal device and whose duration is not indicated, that is, switch to a previous first polarization manner configured without a timer. In other words, the terminal device can be restored to a previous first polarization manner configured without a timer.

Alternatively, when the duration of the first polarization manner indicated by the first indication information expires, the terminal device may switch the polarization manner to the default polarization manner of the terminal device indicated by the network device. In other words, the terminal device may restore the default polarization manner of the terminal device.

Optionally, when a tenth condition is met, the network device may determine that cross polarization multiplexing is the first polarization manner; and the network device may further obtain first service requirement time of the terminal device, and determine the first indication information based on the first service requirement time. The first indication information indicates that the polarization manner of the terminal device is the first polarization manner (namely, cross polarization multiplexing), and the first indication information further indicates the duration of the first polarization manner. The duration of the first polarization manner may be greater than (or ≥) the first service requirement time.

The tenth condition may include: A current polarization manner of the terminal device is a single polarization manner, and a throughput of the terminal device is greater than (or ≥) a first throughput threshold. The first service requirement time is time in which the throughput of the terminal device is continuously greater than (or ≥) the first throughput threshold. For example, it is assumed that if time in which the throughput of the terminal device is continuously greater than the first throughput threshold in a future period of time is 10s, the first service requirement time is 10s. It indicates that a service throughput of the terminal device in the future 10s is large.

For example, the polarization manners supported by the terminal device include a left hand circular polarization manner, a right hand circular polarization manner, and left hand circular polarization and right hand circular polarization cross polarization multiplexing. If the polarization manner of the terminal device is the left hand circular polarization manner, and the throughput of the terminal device is greater than the first throughput threshold (that is, the tenth condition is met), the network device may determine that left hand circular polarization and right hand circular polarization cross polarization multiplexing is the first polarization manner. The network device may further obtain the first service requirement time of the terminal device. It is assumed that the first service requirement time is 10s, the network device may determine the first indication information based on the first service requirement time, where the first indication information indicates that the polarization manner of the terminal device is left hand circular polarization and right hand circular polarization cross polarization multiplexing, and the first indication information further indicates that the duration in which the terminal device works in left hand circular polarization and right hand circular polarization cross polarization multiplexing is 10s.

In this way, after the duration indicated by the first indication information expires, the terminal device can return from cross polarization multiplexing to the single polarization manner, so that the terminal device automatically disables cross polarization multiplexing when the first service requirement time of the terminal device ends, thereby reducing power consumption. In addition, the network device may no longer need to indicate, by using one piece of indication signaling, the terminal device to restore to the previous polarization manner. This can reduce signaling overheads, and avoid that the network device waits for a long time for feedback of the terminal device on the indication signaling.

Optionally, when an eleventh condition is met, the network device may determine that a single polarization manner is the first polarization manner; and the network device may further obtain second service requirement time of the terminal device, and determine the first indication information based on the second service requirement time. The first indication information indicates that the polarization manner of the terminal device is the first polarization manner (namely, the single polarization manner), and the first indication information further indicates the duration of the first polarization manner. The duration of the first polarization manner may be greater than (or ≥) the second service requirement time.

The eleventh condition may include: A current polarization manner of the terminal device is cross polarization multiplexing, and a throughput of the terminal device is less than (or ≤) a third throughput threshold. The second service requirement time is time in which the throughput of the terminal device is continuously less than (or ≤) the third throughput threshold. For example, it is assumed that if time in which the throughput of the terminal device is continuously less than the first throughput threshold in a future period of time is 10s, the second service requirement time is 10s. It indicates that a service throughput of the terminal device in the future 10s is small.

For example, the polarization manners supported by the terminal device include a left hand circular polarization manner, a right hand circular polarization manner, and left hand circular polarization and right hand circular polarization cross polarization multiplexing. If the polarization manner of the terminal device is left hand circular polarization and right hand circular polarization cross polarization multiplexing, and the throughput of the terminal device is less than the third throughput threshold (that is, the eleventh condition is met), the network device may determine that the left hand circular polarization manner is the first polarization manner. The network device may further obtain the second service requirement time of the terminal device. It is assumed that the second service requirement time is 10s, the network device may determine the first indication information based on the second service requirement time, where the first indication information indicates that the polarization manner of the terminal device is the left hand circular polarization manner, and the first indication information further indicates that the duration in which the terminal device works in the left hand circular polarization manner is 10s.

In this way, after the duration indicated by the first indication information expires, the terminal device can return from the single polarization manner to cross polarization multiplexing, so that the terminal device automatically wakes up cross polarization multiplexing when the second service requirement time of the terminal device ends, thereby improving the throughput. In addition, the network device may no longer need to indicate, by using one piece of indication signaling, the terminal device to restore to the previous polarization manner. This can reduce signaling overheads, and avoid that the network device waits for a long time for feedback of the terminal device on the indication signaling.

In this embodiment of this application, the first indication information may be carried in terminal-level information.

The terminal-level information may be understood as information sent by the network device for a specific terminal device. The first indication information is carried in the terminal-level information, and indicates that a device scheduled by using the first indication information is a terminal device.

Optionally, the terminal-level information may be any one of RRC signaling, a MAC CE, a CSI-RS, and DCI. In other words, the first indication information may be carried in any one of RRC signaling, a MAC CE, a CSI-RS, and DCI. The following separately describes possible implementations.

When the first indication information is carried in the RRC signaling, the first indication information may be carried in UE specific RRC signaling. For example, one or more bits in the UE specific RRC signaling may be used to carry the first indication information.

When the first indication information is carried in the MAC CE, the first indication information may be implemented by using an index of the MAC CE. For example, one or more bits corresponding to the index of the MAC CE may be used to carry the first indication information.

For example, Table 6 corresponds to a downlink shared channel (downlink shared channel, DL-SCH) logical channel identifier (logical channel ID, LCID) value (value), and Table 7 corresponds to an uplink shared channel (uplink shared channel, UL-SCH) LCID value. Refer to Table 6 and Table 7. When the first indication information indicates the first downlink polarization manner of the terminal device, one or more bits in reserved fields 01011 to 11011 in Table 6 may be used to carry the first indication information; when the first indication information indicates the first uplink polarization manner of the terminal device, one or more bits in reserved fields 01011 to 11001 in Table 7 may be used to carry the first indication information; or when the first indication information indicates the first downlink polarization manner and the first uplink polarization manner of the terminal device, one or more bits in reserved fields 01011 to 11011 in Table 6 and one or more bits in reserved fields 01011 to 11001 in Table 7 are used to carry the first indication information.

**Table 6**

| Index (index) | LCID value |
|---|---|
| 00000 | Common control channel (common control channel, CCCH) |
| 00001∼01010 | Identity of the logical channel (identity of the logical channel) |
| 01011∼11011 | Reserved (reserved) |
| 11100 | UE contention resolution identity (UE contention resolution identity) |
| 11101 | Timing advance command (timing advance command) |
| 11110 | Discontinuous reception (discontinuous reception, DRX) command (command) |
| 11111 | Padding (padding) |

**Table 7**

| Index | LCID value |
|---|---|
| 00000 | CCCH |
| 00001∼01010 | Identity of the logical channel |
| 01011∼11001 | Reserved |
| 11010 | Power headroom report (power headroom report) |
| 11011 | Cell radio network temporary identifier (cell radio network temporary identifier, C-RNTI) |
| 11100 | Truncated (truncated) buffer status report (buffer status report, BSR) |
| 11101 | Short (short) BSR |
| 11110 | Long (long) BSR |
| 11111 | Padding |

When the first indication information is carried in the DCI, the first indication information may be implemented by using control signaling carried in a DCI format (format). For example, the first indication information may be carried by using a DCI format X. One or more bits in a DCI format 1 may be used to carry the first indication information. A value of "X" in the DCI format X may be 0_0, 0_1, 1_0, 1_1, 2_0, or the like. With development of communication technologies, X may be more values. A value of X is not limited in this embodiment of this application.

When the first indication information is carried in the CSI-RS, a time-frequency distribution characteristic in the CSI-RS may be used to carry the first indication information. For example, the first indication information may be one or more of a carrier of the CSI-RS and a resource element, and the one or more of the carrier and the resource element may indicate the first polarization manner. The network device may configure, for the terminal device in advance, a correspondence between a plurality of polarization manners and one or more of a carrier of the CSI-RS and a resource element. When determining that the first indication information indicates the first polarization manner of the terminal device, the network device may indicate the first polarization manner of the terminal device by using the one or more of the carrier and the resource element of the CSI-RS. In other words, the one or more of the carrier of the CSI-RS and the resource element may implicitly indicate the first polarization manner. In this embodiment of this application, time-frequency may be understood as a time domain resource and a frequency domain resource.

For example, the resource element of the CSI-RS indicates the first polarization manner of the terminal device. It is assumed that the network device configures in advance a correspondence between the resource elements of the CSI-RS and a plurality of polarization manners for the terminal device, as shown in Table 8, and if the network device determines, in any one of the foregoing manners, that the first indication information indicates that the polarization manner of the terminal device is left hand circular polarization, the network device may indicate the first indication information by using a frequency f0+300 of the CSI-RS.

**Table 8**

| CSI-RS index | Indicated polarization manner |
|---|---|
| Frequency f0+100 | Left hand circular polarization and right hand circular polarization cross polarization multiplexing |
| Frequency f0+200 | Right hand circular polarization |
| Frequency f0+300 | Left hand circular polarization |

For another example, it is assumed that the network device configures in advance a correspondence between the resource elements of the CSI-RS and a plurality of polarization manners for the terminal device, as shown in Table 9, and if the network device determines, in any one of the foregoing manners, that the first indication information indicates that the polarization manner of the terminal device is left hand circular polarization, the network device may implement the first indication information by using a frequency range f0+300~400 of the CSI-RS.

**Table 9**

| CSI-RS index | Indicated polarization manner |
|---|---|
| Frequency range f0+100∼200 | Left hand circular polarization and right hand circular polarization cross polarization multiplexing |
| Frequency range f0+200∼300 | Right hand circular polarization |
| Frequency range f0+300∼400 | Left hand circular polarization |

With reference to the examples corresponding to Table 8 and Table 9, it can be learned that when the resource unit indicates the first polarization manner, a frequency may be used to indicate the first polarization manner, or a frequency range may be used to indicate the first polarization manner. This is not limited herein.

With reference to the foregoing implementation of carrying the first indication information, it can be learned that one or more bits in the terminal-level information may be used to carry the first indication information, and values of the one or more bits in the terminal-level information may be used to indicate the first polarization manner of the terminal device. For how to use the one or more bits in the terminal-level information to carry the first indication information, the following separately describes several possible implementations.

Manner 9: Two bits in the terminal-level information are used to carry the first indication information. The two bits may indicate the first polarization manner of the terminal device in an indication manner shown in Table 10. That the polarization manner of the terminal device is unchanged may mean that the polarization manner of the terminal device is the default polarization manner of the cell, or the polarization manner of the terminal device remains unchanged. This is not limited herein.

**Table 10**

| Value of bits carrying first indication information | Indication |
|---|---|
| 00 | The downlink polarization manner of the terminal device is unchanged. |
| 01 | The downlink polarization manner of the terminal device is left hand circular polarization. |
| 10 | The downlink polarization manner of the terminal device is right hand circular polarization. |
| 11 | The downlink polarization manner of the terminal device is left hand circular polarization and right hand circular polarization cross polarization multiplexing. |

In Table 10, the value of the bits carrying the first indication information may indicate the first downlink polarization manner of the terminal device. For example, when the value of the bits carrying the first indication information is 01, it indicates that the downlink polarization manner of the terminal device is left hand circular polarization. In this case, an uplink polarization manner of the terminal device is not indicated, and it may be considered that the uplink polarization manner of the terminal device is the same as the downlink polarization manner. In other words, in Table 10, the value of the bits carrying the first indication information may implicitly indicate the first uplink polarization manner of the terminal device. For example, when the value of the bits carrying the first indication information is 01, it indicates that the downlink polarization manner of the terminal device is left hand circular polarization, and implicitly indicates that an uplink polarization manner of the terminal device is left hand circular polarization.

Alternatively, two bits may be used to indicate the downlink polarization manner of the terminal device, and another two bits may be used to indicate an uplink polarization manner of the terminal device. For the two bits indicating the downlink polarization manner of the terminal device, refer to Table 10, and the another two bits may indicate the first polarization manner of the terminal device in an indication manner shown in Table 11.

**Table 11**

| Value of bits carrying first indication information | Indication |
|---|---|
| 00 | An uplink polarization manner of a terminal device is |
| | unchanged. |
| 01 | The uplink polarization manner of the terminal device is left hand circular polarization. |
| 10 | The uplink polarization manner of the terminal device is right hand circular polarization. |
| 11 | The uplink polarization manner of the terminal device is left hand circular polarization and right hand circular polarization cross polarization multiplexing. |

It may be understood that Manner 9 may be applied to a process in which the network device determines the first indication information in Manner 2.

Manner 10: One bit in the terminal-level information is used to carry the first indication information. The bit may indicate the first polarization manner of the terminal device in an indication manner shown in Table 12.

**Table 12**

| Value of a bit carrying first indication information | Indication |
|---|---|
| 0 | A polarization manner of a terminal device is a first single polarization manner. |
| 1 | The polarization manner of the terminal device is cross polarization multiplexing corresponding to the first single polarization manner. |

The first single polarization manner is the single polarization manner scheduled by the network device to the terminal device, for example, left hand circular polarization. This is uniformly described herein. Details are not described below again. Cross polarization multiplexing corresponding to the first single polarization manner means that one of two orthogonal single polarization manners in cross polarization multiplexing is the first single polarization manner. This is uniformly described herein. Details are not described below again. For example, when the first single polarization manner is left hand circular polarization, cross polarization multiplexing corresponding to the first single polarization manner is left hand circular polarization and right hand circular polarization cross polarization multiplexing.

Manner 11: Two bits in the terminal-level information are used to carry the first indication information. The two bits may indicate the first polarization manner of the terminal device in an indication manner shown in Table 13.

**Table 13**

| Value of bits carrying first indication information | Indication |
|---|---|
| 00 | Both an uplink polarization manner and a downlink polarization manner of a terminal device are a first single polarization manner. |
| 01 | The uplink polarization manner of the terminal device is the first single polarization manner, and the downlink polarization manner of the terminal device is cross polarization multiplexing corresponding to the first single polarization manner. |
| 10 | The uplink polarization manner of the terminal device is cross polarization multiplexing corresponding to the first single polarization manner, and the downlink polarization manner of the terminal device is the first single polarization manner. |
| 11 | Both the uplink polarization manner and the downlink polarization manner of the terminal device are cross polarization multiplexing corresponding to the first single polarization manner. |

Manner 12: Two bits in the terminal-level information are used to carry the first indication information. The two bits may indicate the first polarization manner of the terminal device in an indication manner shown in Table 14.

**Table 14**

| Value of bits carrying first indication information | Indication |
|---|---|
| 00 | A downlink polarization manner of a terminal device is cross polarization multiplexing corresponding to a first single polarization manner, and an uplink polarization manner is the first single polarization manner. |
| 01 | The downlink polarization manner of the terminal device is the first single polarization manner, and the uplink polarization manner is cross polarization multiplexing corresponding to the first single polarization manner. |
| 10 | Both the uplink polarization manner and the downlink polarization manner of the terminal device are cross polarization multiplexing corresponding to the first single polarization manner. |
| 11 | Both the downlink polarization manner and the uplink polarization manner of the terminal device are the default polarization manner of the cell. |

It may be understood that Manner 10 to Manner 12 may be applied to a process in which the network device determines the first indication information in Manner 3, for example, Manner 3.1 to Manner 3.4.

It should be noted that the foregoing implementation of using one or more bits in the terminal-level information to carry the first indication information is merely an example, and is not limited herein. In actual application, the implementation may be adjusted based on a requirement, and an adjusted implementation is not enumerated herein.

In a possible implementation, the first indication information may indicate that a polarization manner corresponding to a first resource is the first polarization manner, and the first resource may include any one of a time-frequency domain resource, a time domain resource, and a frequency domain resource.

For example, the first resource includes the time-frequency domain resource. The UE specific RRC, MAC CE and DCI may be used to jointly indicate that the polarization manner corresponding to the first resource is the first polarization manner.

For example, the DCI may be used to indicate the time-frequency domain resource of the terminal device, and the UE-specific RRC may be used to indicate that the polarization manner corresponding to the time-frequency domain resource is the first polarization manner.

For another example, the DCI may be used to indicate the time-frequency domain resource of the terminal device, and the MAC CE may be used to indicate that the polarization manner corresponding to the time-frequency domain resource is the first polarization manner.

Certainly, physical resources that have different polarization directions but a same time-frequency may also be used as different physical resources, and are indicated by using any one of the UE specific RRC, MAC CE and DCI.

In other words, based on the first indication information, for one time-frequency domain resource, the network device may divide the time-frequency domain resource into time-frequency domain resources corresponding to different polarization manners. For example, for an RE, the network device may divide the RE into an RE corresponding to left hand circular polarization and an RE corresponding to right hand circular polarization, and schedule the RE corresponding to left hand circular polarization and the RE corresponding to right hand circular polarization to same UE or different UE. In this way, the network device can flexibly schedule resources to different REs in time domain, frequency domain, and a polarization manner domain, thereby improving scheduling flexibility and spectral efficiency, and meeting different service requirements.

When the first resource includes the time domain resource or the frequency domain resource, an indication manner of the first indication information is similar. Details are not described herein again.

A figure shows an example. FIG. 7 is a schematic diagram of resource mapping in a beam with a combination of polarization manners according to this embodiment of this application. As shown in FIG. 7, each grid in a coordinate system in FIG. 7 represents one RE. The network device may allocate, by using radio resource management (radio resource management, RRM), LHCP and RHCP corresponding to a same RE to same UE, or LHCP and RHCP corresponding to a same RE to different UE. For example, in FIG. 7, an RE (denoted as an RE 1) numbered 1 and an RE (denoted as an RE 2) numbered 2 have a same time-domain location and a same frequency-domain location, but a polarization manner corresponding to the RE 1 is left hand circular polarization, and a polarization manner corresponding to the RE 2 is right hand circular polarization. The RE 1 is scheduled to UE 2, and the RE 2 is scheduled to UE 5. Scheduling of another RE in FIG. 7 is similar to that of the RE 1 and the RE 2. Details are not described herein again.

It should be noted that the foregoing uses a minimum unit RE of resource scheduling as an example for description. In an actual system, a granularity of resource scheduling may be greater than an RE, for example, an RE block (block) or an RE group (group). Details are not described herein again.

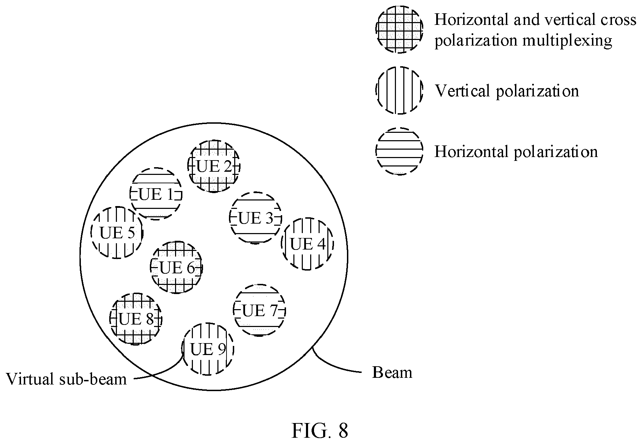

FIG. 8 is a schematic diagram of virtual sub-beams formed in a beam by using RRM in a unit of UE in space according to this embodiment of this application. As shown in FIG. 8, it can be seen that the virtual sub-beams with different physical resources may be scheduled for different UE in the beam by using RRM based on the first indication information. Time-frequency domain resources of these virtual sub-beams may be the same or different. The formed virtual sub-beams change with a resource scheduling process of the UE. In this way, in this embodiment of this application, the polarization manner domain (or a polarization domain for short) is added in time domain and frequency domain, and the resources are flexibly scheduled to different REs in time domain, frequency domain, and the polarization manner domain, thereby improving scheduling flexibility and spectral efficiency, and meeting different service requirements.

It should be noted that the network device (for example, a satellite) may simultaneously enable two orthogonally polarization directions for one beam, but may not indicate that all UE in a beam range uses cross polarization multiplexing.

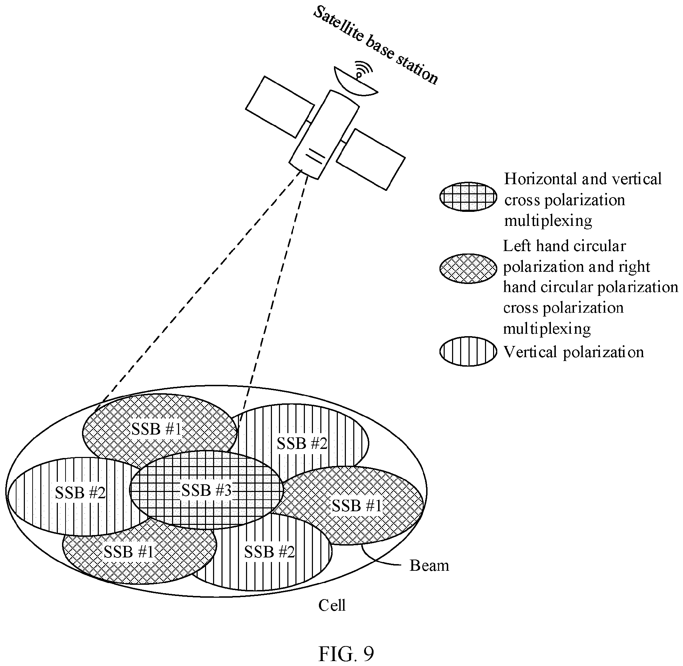

In addition, as shown in FIG. 9, different SSBs (or bandwidth parts (bandwidth parts, BWPs)) in the cell correspond to frequency domain resources that are not totally the same. Cross polarization multiplexing is used for at least one beam in the cell shown in FIG. 9. For example, a beam using horizontal and vertical cross polarization multiplexing is an SSB #3 in FIG. 9. In a coverage area of the beam represented by the SSB #3, if UE 1 works in horizontal and vertical cross polarization multiplexing, both a horizontal polarization resource and a vertical polarization resource of a resource block (resource block, RB) used by the UE 1 in the beam represented by the SSB #3 are occupied by the UE 1. For another UE, if UE 2 works in a horizontal polarization manner, a horizontal polarization manner of an RB used by the UE 2 in the beam represented by the SSB#3 is occupied by the UE 2, and a vertical polarization manner of the RB may be allocated to another UE (for example, UE 3). For polarization manners corresponding to the UE 1 to the UE 3 and indication manners of time-frequency domain resources, refer to the foregoing description in which the UE specific RRC, MAC CE and DCI are jointly used to indicate that the polarization manner corresponding to the first resource is the first polarization manner. In this way, the network device can implement the irregular UE-level virtual sub-beams in the same beam by using RRM based on the first indication information, so that the UE can use one RB in the cross polarization multiplexing manner, thereby improving the throughput. In addition, some UE can flexibly use a single polarization manner in cross polarization multiplexing to share an RB, thereby avoiding interference between UE and improving resource utilization.

Further, the first resource may include a first uplink resource and/or a first downlink resource. When the first resource includes the first uplink resource, the first indication information may indicate that a polarization manner corresponding to the first uplink resource of the terminal device is the first uplink polarization manner. When the first resource includes the first downlink resource, the first indication information indicates that a polarization manner corresponding to the first downlink resource of the terminal device is the first downlink polarization manner. When the first resource includes the first uplink resource and the first downlink resource, the first indication information may indicate that a polarization manner corresponding to the first uplink resource of the terminal device is the first uplink polarization manner and a polarization manner corresponding to the first downlink polarization manner is the first downlink polarization manner.

In the communication method shown in FIG. 6, the first indication information can be used to schedule the polarization manner of the terminal device and is carried in the terminal-level information, such as the RRC signaling, DCI, and MAC CE. In this way, the network device can schedule the polarization manner of the terminal device at the terminal level, that is, the network device can adjust a polarization manner of a terminal device, so that scheduling of the polarization manner of the terminal device is more flexible, and a scheduling granularity is finer, thereby improving spectral efficiency.

This application provides another embodiment, to schedule the polarization manner of the terminal device at the beam level.

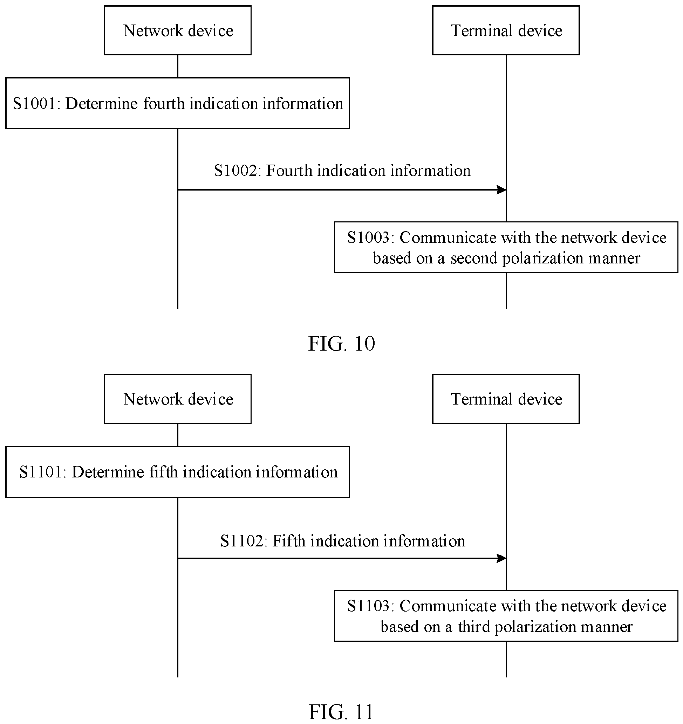

FIG. 10 is a schematic flowchart of a communication method according to this embodiment of this application. The communication method is applied to the foregoing communication system, and may be performed by the terminal device or the network device in the foregoing communication system. According to the communication method, the polarization manner of the terminal device can be scheduled at the beam level, that is, the network device can adjust the polarization manner of the terminal device in a beam, so that scheduling of the polarization manner of the terminal device is more flexible and a scheduling granularity is finer, thereby improving spectral efficiency. The method may include S1001 to S1003, which are sequentially provided below.

S1001: The network device determines fourth indication information.

The fourth indication information indicates a second polarization manner of a first beam. In other words, the fourth indication information may indicate that a polarization manner of a first beam is switched to a second polarization manner; or the fourth indication information may indicate that a first beam works in a second polarization manner; or the fourth indication information may indicate that a polarization manner of a first beam is a second polarization manner; or the fourth indication information may indicate that a polarization manner of the terminal device in a first beam is a second polarization manner. It should be noted that, unless otherwise specified, meanings to be expressed in the several manners of expressing the fourth indication information are consistent, and may be mixed. The first beam herein may be any beam in a beam set of the network device, and include an uplink beam and/or a downlink beam.

The second polarization manner may include any one of left hand circular polarization, right hand circular polarization, linear polarization, or cross polarization multiplexing. Linear polarization may include any one of horizontal polarization, vertical polarization, +45° polarization, and -45° polarization. Cross polarization multiplexing may include any one of horizontal and vertical cross polarization multiplexing, ±45° cross polarization multiplexing, and left hand circular polarization and right hand circular polarization cross polarization multiplexing.

S1002: The network device sends the fourth indication information to the terminal device in the first beam. Correspondingly, the terminal device in the first beam receives the fourth indication information from the network device.

S1003: The terminal device in the first beam communicates with the network device based on the second polarization manner.

That the terminal device in the first beam communicates with the network device based on the second polarization manner may be understood as that the terminal device in the first beam works in the second polarization manner, or is understood as that the terminal device in the first beam switches the polarization manner to the second polarization manner.

For example, if the second polarization manner, of the first beam, indicated by the fourth indication information is left hand circular polarization, the terminal device in the first beam may work in the left hand circular polarization manner, to implement communication with the network device. If the second polarization manner, of the first beam, indicated by the fourth indication information is left hand circular polarization and right hand circular polarization cross polarization multiplexing, the terminal device in the first beam may work in the left hand circular polarization and right hand circular polarization cross polarization multiplexing polarization manner, to implement communication with the network device.

That the network device determines the fourth indication information in S1001 may be implemented in the following Manner 13 to Manner 18, which are sequentially described below.

Manner 13: The network device determines the fourth indication information based on polarization manners supported by all terminal devices in the first beam.

Optionally, the network device may determine, from the polarization manners supported by all the terminal devices in the first beam, one polarization manner as the second polarization manner, and determine the fourth indication information.

Specifically, the network device may determine at least one polarization manner supported by all the terminal devices in the first beam, and determine one polarization manner from the at least one polarization manner as the second polarization manner.

In Manner 13, before determining the fourth indication information, the network device may further obtain the polarization manners supported by all the terminal devices in the first beam. The network device may sequentially obtain a polarization manner supported by each terminal device in the first beam, and then obtain the polarization manners supported by all the terminal devices in the first beam. For obtaining, by the network device, a polarization manner supported by one terminal device in the first beam, refer to step 1.1 and step 1.2. Details are not described herein again.

Manner 14: The network device determines the fourth indication information based on CSI of channels in different polarization manners measured by all terminal devices in the first beam.

Optionally, the network device may determine at least one available polarization manner based on the CSI of channels in the different polarization manners measured by all the terminal devices in the first beam; and then determine, from the at least one available polarization manner, one available polarization manner as the second polarization manner, and generate the fourth indication information.

In a possible implementation, if a twentieth condition is met, the network device may determine a polarization manner C as the available polarization manner. The twentieth condition includes: In a set of the different polarization manners measured by all the terminal devices in the first beam, channel quality corresponding to a polarization manner (denoted as the polarization manner C) with optimal channel quality is better than a fifth threshold.

In this way, the network device can determine, from the set of the different polarization manners measured by all the terminal devices in the first beam, a polarization manner with best CSI of a channel as the polarization manner of the first beam, thereby improving beam quality.

In Manner 14, before determining the fourth indication information, the network device may further obtain the CSI of the channels in the different polarization manners measured by all the terminal devices in the first beam. The network device may sequentially obtain CSI of a channel in a different polarization manner measured by each terminal device in the first beam, and then obtain the CSI of the channels in the different polarization manners measured by all the terminal devices in the first beam. For obtaining, by the network device, CSI of a channel in a different polarization manner measured by one terminal device in the first beam, refer to step 2.1 to step 2.3. Details are not described herein again.

Manner 15: The network device determines the fourth indication information based on service requirements of all terminal devices in the first beam.

Optionally, the network device may determine at least one available polarization manner based on the service requirements of all the terminal device in the first beam; and then determine, from the at least one available polarization manner, one available polarization manner as the second polarization manner, and generate the fourth indication information.

In a possible implementation, if a twenty-first condition is met, the network device may determine cross polarization multiplexing as the available polarization manner. The twenty-first condition may include: Throughputs of terminal devices whose proportion exceeds (or ≥) a second proportion in all the terminal devices in the first beam are greater than (or ≥) a throughput threshold. In this way, when the service requirement in the first beam is large, the network device can enable cross polarization multiplexing for the terminal device in the first beam, thereby improving a throughput of the terminal device in the first beam.

In another possible implementation, if a twenty-second condition is met, the network device may determine a single polarization manner as the available polarization manner. The twenty-second condition may include: Throughputs of terminal devices whose proportion exceeds (or ≥) a third proportion in all the terminal devices in the first beam are less than (or ≤) a throughput threshold. In this way, when the service requirement in the first beam is small, the network device can disable cross polarization multiplexing for the terminal device in the first beam, thereby reducing power consumption of the terminal device in the first beam.

In Manner 15, before determining the fourth indication information, the network device may further obtain the service requirements of all the terminal devices in the first beam. The network device may sequentially obtain a service requirement of each terminal device in the first beam, and then obtain the service requirements of all the terminal devices in the first beam.

Manner 16: The network device determines the fourth indication information based on polarization manners expected by all terminal devices in the first beam.

Optionally, the network device may determine at least one available polarization manner based on the polarization manners expected by all the terminal devices in the first beam; and then determine, from the at least one available polarization manner, one available polarization manner as the second polarization manner, and generate the fourth indication information.

That the network device determines the at least one available polarization manner based on the polarization manners expected by all the terminal devices in the first beam may be implemented in the following manner.

Manner 16.1: If a twenty-third condition is met, the network device may determine a polarization manner D as the available polarization manner. The twenty-third condition may include: Terminal devices whose proportion exceeds (or ≥) a fourth proportion in all the terminal devices in the first beam expect a same polarization manner (denoted as the polarization manner D).

In this way, the network device can use, in a set of the polarization manners expected by all the terminal devices in the first beam, the polarization manner expected by most terminal devices as the polarization manner of the first beam, thereby improving beam quality.

In Manner 16, before determining the fourth indication information, the network device may further obtain the polarization manners expected by all the terminal devices in the first beam. The network device may sequentially obtain a polarization manner expected by each terminal device in the first beam, and then obtain the polarization manners expected by all the terminal devices in the first beam.

Manner 17: The network device determines the fourth indication information based on a weather condition in a coverage area of the first beam.

Optionally, the network device may determine at least one available polarization manner based on the weather condition in the coverage area of the first beam; and then determine, from the at least one available polarization manner, one available polarization manner as the second polarization manner, and generate the fourth indication information.

That the network device determines the at least one available polarization manner based on the weather condition in the coverage area of the first beam may be implemented in the following manner.

Manner 17.1: If a twenty-fourth condition is met, the network device may determine a single polarization manner as the available polarization manner. The fourteenth condition may include: An average rainfall (snow) amount in the coverage area of the first beam is greater than (or ≥) a rainfall (snow) threshold, and/or an average cloud layer thickness is greater than (or ≥) a thickness threshold.

In this way, the network device can adjust the polarization manner of the first beam to the single polarization manner when the weather condition in the coverage area of the first beam is poor, thereby reducing signal interference and improving communication quality.

In Manner 17, before the network device determines the fourth indication information, Manner 17 may further include: The network device obtains the weather condition in the coverage area of the first beam. The network device may directly obtain meteorological information of a specific spatial scale in the beam coverage area.

Manner 18: The network device determines the fourth indication information based on crosstalk statuses between orthogonally polarized channels of all terminal devices in the first beam.

Optionally, the network device may determine at least one available polarization manner based on the crosstalk statuses between all the orthogonally polarized channels in the first beam; and then determine, by using one or more of the foregoing Manner 13 to Manner 17, one available polarization manner from the at least one available polarization manner as the second polarization manner, and generate the fourth indication information.

In a possible implementation, if a twenty-fifth is met, the network device may determine a single polarization manner as the available polarization manner, and determine cross polarization multiplexing as an unavailable polarization manner. The twenty-fifth condition may include: A crosstalk value between orthogonally polarized channels of terminal devices whose proportion exceeds (or ≥) a sixth proportion in all the terminal devices in the first beam is greater than (or ≥) a first crosstalk threshold. In this way, the network device can limit the polarization manner of the first beam to the single polarization manner when crosstalk between orthogonally polarized channels between most terminal devices and the network device in the first beam is severe, thereby reducing signal interference and improving communication quality.

In another possible implementation, if a twenty-sixth condition is met, the network device may determine cross polarization multiplexing as the available polarization manner. The twenty-sixth condition may include: A crosstalk value between orthogonally polarized channels of terminal devices whose proportion exceeds (or ≥) a seventh proportion in all the terminal devices in the first beam is less than (or ≤) a first crosstalk threshold. In this way, the network device can adjust the polarization manner of the first beam to cross polarization multiplexing when crosstalk between orthogonally polarized channels between most terminal devices and the network device in the first beam is not severe, thereby improving a throughput.

In Manner 18, before determining the fourth indication information, the network device may further obtain the crosstalk statuses between the orthogonally polarized channels between all the terminal devices and the network device in the first beam. The network device may sequentially obtain a crosstalk status between orthogonally polarized channels between each terminal device and the network device in the first beam, and then obtain the crosstalk statuses between the orthogonally polarized channels between all the terminal devices and the network device in the first beam.

It may be understood that Manner 18 may be implemented in combination with one or more of the foregoing Manners 13 to 17. For a related combination manner, refer to the following examples including Manner 18 in Example 14 to Example 26.

In some possible embodiments, when a trigger condition is met, the network device may determine the fourth indication information based on the trigger condition. The trigger condition may include any one of the twentieth condition to the twenty-sixth condition in Manner 14 to Manner 18, and the trigger condition may trigger the network device to schedule the polarization manner of the first beam. In other words, if any one of the twentieth condition to the twenty-sixth condition is met, the network device may determine the fourth indication information based on a process corresponding to the condition that is met, so as to schedule the polarization manner of the first beam.

In this way, the network device can discover a problem in the polarization manner of the first beam in time, and adjust the polarization manner of the first beam in time, so that scheduling of the polarization manner of the first beam is more flexible, and a scheduling granularity is finer, thereby improving spectral efficiency.

It may be understood that the foregoing Manner 13 to Manner 18 may be separately implemented, or may be implemented in combination. This is not limited in this embodiment of this application. A combination implementation of Manner 13 to Manner 15, Manner 17, and Manner 18 is described below by using several examples.

Example 3: When Manner 13, Manner 14, Manner 15, Manner 17, and Manner 18 are combined for implementation, the network device may determine, as the second polarization manner based on the CSI of the channels in the different polarization manners measured by all the terminal devices in the first beam, the service requirements of all the terminal devices in the first beam, the weather conditions between all the terminal devices and the network device in the first beam, and the crosstalk statuses between the orthogonally polarized channels of all the terminal devices in the first beam, one polarization manner from the polarization manners supported by all the terminal devices in the first beam, and determine the fourth indication information.

That the network device determines, as the second polarization manner based on the CSI of the channels in the different polarization manners measured by all the terminal devices in the first beam, the service requirements of all the terminal devices in the first beam, the weather conditions between all the terminal devices and the network device in the first beam, and the crosstalk statuses between the orthogonally polarized channels of all the terminal devices in the first beam, one polarization manner from the polarization manners supported by all the terminal devices in the first beam may include: The network device determines at least one available polarization manner (denoted as a first set) based on the CSI of the channels in the different polarization manners measured by all the terminal devices in the first beam; the network device determines at least one available polarization manner (denoted as a second set) based on the service requirements of all the terminal devices in the first beam; the network device determines at least one available polarization manner (denoted as a third set) based on the weather conditions between all the terminal devices and the network device in the first beam; the network device determines at least one available polarization manner (denoted as a fourth set) based on the crosstalk statuses between the orthogonally polarized channels of all the terminal devices in the first beam; and the network device uses, in polarization manners included in the first set to the fifth set, one of the polarization manners supported by all the terminal devices in the first beam as the second polarization manner.

The network device may determine the at least one available polarization manner based on different information (including any one of the CSI of the channels in the different polarization manners measured by all the terminal devices in the first beam, the service requirements of all the terminal devices in the first beam, the weather conditions between all the terminal devices and the network device in the first beam, and the crosstalk statuses between the orthogonally polarized channels of all the terminal devices in the first beam). For details, refer to the process of determining the at least one available polarization manner by the network device in the foregoing Manner 14 to Manner 18. Details are not described herein again.

In other words, when the foregoing plurality of manners are implemented in combination, the network device may separately determine a plurality of polarization manner sets based on the different information, and use, as the second polarization manner, one of the polarization manners supported by all the terminal devices in the first beam, in the polarization manners included in the plurality of polarization manner sets.

Example 4: When Manner 13 and Manner 14 are combined for implementation, the network device may determine, based on the CSI of the channels in the different polarization manners measured by all the terminal devices in the first beam, a polarization manner from the polarization manners supported by all the terminal devices in the first beam, as the second polarization manner, and determine the fourth indication information.

It may be understood that, when Manner 1 to Manner 3, Manner 5, and Manner 6 are combined for implementation, a plurality of manners may be randomly selected for combination implementation. For a specific implementation process, refer to the foregoing examples. Examples are not provided herein one by one.

With reference to the foregoing descriptions of Manner 13 to Manner 18, it can be learned that the network device may determine the fourth indication information based on one or more of the polarization manners supported by all the terminal devices in the first beam, the channel state information of the channels in the different polarization manners measured by all the terminal devices in the first beam, the service requirements of all the terminal devices in the first beam, the polarization manners expected by all the terminal devices in the first beam, the weather conditions between all the terminal devices and the network device in the first beam, and the crosstalk statuses between all the orthogonally polarized channels in the first beam. In other words, the fourth indication information may be determined based on one or more of the following: the polarization manners supported by all the terminal devices in the first beam, the channel state information of the channels in the different polarization manners measured by all the terminal devices in the first beam, the service requirements of all the terminal devices in the first beam, the polarization manners expected by all the terminal devices in the first beam, the weather conditions between all the terminal devices and the network device in the first beam, or the crosstalk statuses between all the orthogonally polarized channels in the first beam.

It should be understood that, in Manner 13 to Manner 18, the network device may determine, with reference to a plurality of types of information, a polarization manner that is more appropriate for all the terminal devices in the first beam, and schedule the polarization manner for all the terminal devices in the first beam by using the fourth indication information. This can enable, in one aspect, all the terminal devices in the first beam to work in a better polarization manner, improve communication quality, and reduce power consumption, in another aspect, scheduling of the polarization manner for all the terminal devices in the first beam can be more flexible, and a scheduling granularity is finer, thereby improving spectral efficiency.

Optionally, the fourth indication information may further indicate duration of the second polarization manner.

The duration of the second polarization manner may be understood as a time length in which the polarization manner of the first beam lasts for the second polarization manner. The duration of the second polarization manner may also be referred to as a timer of the second polarization manner. When the timer expires, the first beam may be restored to a default polarization manner.

In this way, the network device can indicate the duration in which all the terminal devices in the first beam work in the second polarization manner. After the duration indicated by the fourth indication information expires, all the terminal devices in the first beam can be restored to the previous polarization manner. Therefore, the network device may no longer need to indicate, by using one piece of indication signaling, the terminal device in the first beam to restore to the previous polarization manner, thereby reducing signaling overheads. This can further improve flexibility of scheduling the polarization manner of the terminal device.

For an implementation in which the fourth indication information indicates the duration of the second polarization manner, refer to the description of the "implementation in which the first indication information indicates the duration of the first polarization manner" in the method embodiment shown in FIG. 6, for example, Manner 7 and Manner 8. Details are not described herein again.

Optionally, the network device may broadcast timer configuration information. The timer configuration information may include a correspondence between at least one timer index and at least one timer, and the timer indicates the duration of the second polarization manner. For example, the network device may send the timer configuration information to all the terminal devices in a cell by using an SIB.

For an implementation of the timer configuration information, refer to the description of the "implementation of the timer configuration information" in the method embodiment shown in FIG. 6. Details are not described herein again.

Optionally, the fourth indication information may include an SSB index, and the SSB index corresponds to the second polarization manner.

SSB indexes configured by the network device in the first beam are consistent. In this way, when receiving the fourth indication information, each terminal device in the first beam can determine, based on the correspondence between the SSB index and the second polarization manner, that the fourth indication information indicates that the polarization manner of the first beam is the second polarization manner, so that the network device can switch the polarization manner of the first beam to the second polarization manner, that is, the polarization manner of the terminal device in the first beam can be switched to the second polarization manner, and a polarization manner of a terminal device in a beam can be scheduled at a beam level.

Specifically, the network device may configure in advance a correspondence between at least one SSB index and at least one polarization manner for all the terminal devices in the cell. For example, the network device configures in advance the correspondence between the at least one SSB index and the at least one polarization manner for all the terminal devices in the cell as follows: An even-numbered SSB index indicates that a first polarization manner is left hand circular polarization, and an odd-numbered SSB index indicates that the first polarization manner is right hand circular polarization. Then, the network device may configure the SSB index corresponding to the first beam to 1, and send the fourth indication information to the terminal device in the first beam, where the SSB index included in the fourth indication information is an SSB 1, to indicate that the polarization manner of the terminal device in the first beam is switched to right hand circular polarization.

Optionally, the fourth indication information may be carried in any one of RRC, DCI, or a MAC CE. This is not limited herein.

Optionally, the fourth indication information may include a BWP index, and the BWP index corresponds to the second polarization manner.

For an implementation in which the BWP index corresponds to the second polarization manner, refer to the foregoing implementation in which the SSB index corresponds to the second polarization manner. Details are not described herein again.

Optionally, the fourth indication information may include a CSI-RS time-frequency location, and the CSI-RS time-frequency location corresponds to the second polarization manner.

For an implementation in which the CSI-RS time-frequency location corresponds to the second polarization manner, refer to the foregoing implementation in which the SSB index corresponds to the second polarization manner. Details are not described herein again.

Optionally, the fourth indication information may include a CSI-RS measurement identifier (measurement identifier), and the CSI-RS measurement identifier corresponds to the second polarization manner. The measurement identifier may also be referred to as an identifier (identifier) for short. This is not limited herein.

For an implementation in which the CSI-RS measurement identifier corresponds to the second polarization manner, refer to the foregoing implementation in which the SSB index corresponds to the second polarization manner. Details are not described herein again.

Optionally, the communication method shown in FIG. 10 may further include: The network device sends a first mapping relationship to the terminal device. The first mapping relationship may include a mapping relationship between at least one SSB index and at least one polarization manner, or the first mapping relationship may include a mapping relationship between at least one CSI-RS time-frequency location and at least one polarization manner.

In actual application, the correspondence between the SSB index and the second polarization manner may be adjusted based on a requirement. For example, an SSB 3 indicates the second polarization manner at a first moment, and an SSB 4 indicates the second polarization manner after a period of time. This is not limited in this embodiment of this application.

The first mapping relationship may be carried in SIB signaling.

In the communication method shown in FIG. 10, the fourth indication information can be used to schedule the polarization manner of the terminal device and is carried in the beam-level information, such as a reference signal. In this way, the network device can schedule the polarization manner of the terminal device at the beam level, that is, the network device can adjust a polarization manner of a terminal device in a beam, so that scheduling of the polarization manner of the terminal device is more flexible, and a scheduling granularity is finer, thereby improving spectral efficiency.

This application provides still another embodiment, to schedule the polarization manner of the terminal device at the cell level.

FIG. 11 is a schematic flowchart 11 of a communication method according to this embodiment of this application. The communication method is applied to the foregoing communication system, and may be performed by the terminal device or the network device in the foregoing communication system. According to the communication method, the polarization manner of the terminal device can be scheduled at the cell level, that is, the network device can adjust the polarization manner of the terminal device in the cell. The method may include S1101 to S1103, which are sequentially provided below.

S1101: The network device determines fifth indication information.

The fifth indication information indicates a third polarization manner of a first cell. In other words, the fifth indication information may indicate that a polarization manner of a first cell is switched to a third polarization manner; or the fifth indication information may indicate that a first cell works in a third polarization manner; or the fifth indication information may indicate that a polarization manner of a first cell is a third polarization manner. It should be noted that, unless otherwise specified, meanings to be expressed in the several manners of expressing the fifth indication information are consistent, and may be mixed. The first cell herein may be a cell of the network device.

The third polarization manner may include any one of left hand circular polarization, right hand circular polarization, linear polarization, or cross polarization multiplexing. Linear polarization may include any one of horizontal polarization, vertical polarization, +45° polarization, and -45° polarization. Cross polarization multiplexing may include any one of horizontal and vertical cross polarization multiplexing, ±45° cross polarization multiplexing, and left hand circular polarization and right hand circular polarization cross polarization multiplexing.

S1102: The network device sends the fifth indication information to the terminal device in the first cell. Correspondingly, the terminal device in the first cell receives the fifth indication information from the network device.

S1103: The terminal device in the first cell communicates with the network device in the third polarization manner.

That the terminal device in the first cell communicates with the network device in the third polarization manner may be understood as that the terminal device in the first cell works in the third polarization manner, or is understood as that the terminal device in the first cell switches a polarization manner to the third polarization manner.

For example, if the third polarization manner indicated by the fifth indication information is left hand circular polarization, the terminal device in the first cell may work in the left hand circular polarization manner, to implement communication with the network device. If the third polarization manner indicated by the fifth indication information is left hand circular polarization and right hand circular polarization cross polarization multiplexing, the terminal device in the first cell may work in the left hand circular polarization and right hand circular polarization cross polarization multiplexing polarization manner, to implement communication with the network device.

In S1101, that the network device determines the fifth indication information may be implemented in the following Manner 19 to Manner 24.

Manner 19: The network device determines the fifth indication information based on polarization manners supported by all terminal devices in the first cell.

Manner 20: The network device determines the fifth indication information based on CSI of channels in different polarization manners measured by all terminal devices in the first cell.

In Manner 20, the network device can determine, from a set of the different polarization manners measured by all the terminal devices in the first cell, a polarization manner with best CSI of a channel as the polarization manner of the first cell, thereby improving cell communication quality.

Manner 21: The network device determines the fifth indication information based on service requirements of all terminal devices in the first cell.

In Manner 21, when the service requirement in the first cell is large, the network device can enable cross polarization multiplexing for the terminal device in the first cell, thereby improving a throughput of the terminal device in the first cell. In addition, when the service requirement in the first cell is small, the network device can disable cross polarization multiplexing for the terminal device in the first cell, thereby reducing power consumption of the terminal device in the first cell.

Manner 22: The network device determines the fifth indication information based on polarization manners expected by all terminal devices in the first cell.

In Manner 22, the network device can use, in a set of the polarization manners expected by all the terminal devices in the first cell, a polarization manner expected by most terminal devices as the polarization manner of the first cell, thereby improving cell communication quality.

Manner 23: The network device determines the fifth indication information based on weather conditions between all terminal devices and the network device in the first cell.

In Manner 23, the network device may adjust the polarization manner of the first cell to a single polarization manner when weather conditions between most terminal devices and the network device in the first cell are poor, thereby reducing signal interference and improving communication quality.

Manner 24: The network device determines the fifth indication information based on crosstalk statuses between orthogonally polarized channels of all terminal devices in the first cell.

In Manner 24, the network device can limit the polarization manner of the first cell to the single polarization manner when crosstalk between orthogonally polarized channels between most terminal devices and the network device in the first cell is severe, thereby reducing signal interference and improving communication quality. In addition, the network device can adjust the polarization manner of the first cell to cross polarization multiplexing when crosstalk between orthogonally polarized channels between most terminal devices and the network device in the first cell is not severe, thereby improving a throughput. For a specific implementation of determining the fifth indication information in Manner 19 to Manner 24, refer to that of determining the fourth indication information in the foregoing Manner 13 to Manner 18. A difference lies in that the fourth indication information is determined based on a related parameter in a beam range, and the fifth indication information is determined based on a related parameter in a cell range. Details are not described herein. For example, for an implementation process of Manner 20, refer to the foregoing Manner 14. The "first beam" in Manner 14 is replaced with the "first cell", the "second polarization manner" is replaced with the "third polarization manner", and the "fourth indication information" is replaced with the "fifth indication information".

In some possible embodiments, when a trigger condition is met, the network device may determine the fifth indication information based on the trigger condition. The trigger condition may include any one in the foregoing Manner 20 to Manner 24, and the trigger condition may trigger the network device to schedule the polarization manner of the first cell. In other words, if any condition in Manner 20 to Manner 24 is met, the network device may determine the fifth indication information based on a process corresponding to the condition that is met, so as to schedule the polarization manner of the first cell.

It may be understood that the foregoing Manner 19 to Manner 24 may be separately implemented, or may be implemented in combination. This is not limited in this embodiment of this application. Similarly, for a specific example, refer to the foregoing Examples 3 and 4. Details are not described herein again.

With reference to the foregoing descriptions of Manner 19 to Manner 24, it can be learned that the network device may determine the fifth indication information based on one or more of the polarization manners supported by all the terminal devices in the first cell, the channel state information of the channels in the different polarization manners measured by all the terminal devices in the first cell, the service requirements of all the terminal devices in the first cell, the polarization manners expected by all the terminal devices in the first cell, the weather conditions between all the terminal devices and the network device in the first cell, and the crosstalk statuses between all the orthogonally polarized channels in the first cell. In other words, the fifth indication information may be determined based on one or more of the following: the polarization manners supported by all the terminal devices in the first cell, the channel state information of the channels in the different polarization manners measured by all the terminal devices in the first cell, the service requirements of all the terminal devices in the first cell, the polarization manners expected by all the terminal devices in the first cell, the weather conditions between all the terminal devices and the network device in the first cell, or the crosstalk statuses between all the orthogonally polarized channels in the first cell.

It should be understood that, in Manner 19 to Manner 24, the network device may determine, with reference to a plurality of types of information, a polarization manner that is more appropriate for all the terminal devices in the first cell, and schedule the polarization manner for all the terminal devices in the first cell by using the fifth indication information. This can enable, in one aspect, all the terminal devices in the first cell to work in a better polarization manner, thereby improving communication quality, reducing power consumption, and improving spectral efficiency.

Optionally, the fifth indication information may further indicate duration of the third polarization manner.

The duration of the third polarization manner may be understood as a time length in which the polarization manner of the first cell lasts for the third polarization manner. The duration of the third polarization manner may also be referred to as a timer of the third polarization manner. When the timer expires, the first cell may be restored to a default polarization manner.

In this way, the network device can indicate the duration in which all the terminal devices in the first cell work in the third polarization manner. After the duration indicated by the fifth indication information expires, all the terminal devices in the first cell can be restored to a previous polarization manner. Therefore, the network device may no longer need to indicate, by using one piece of indication signaling, the terminal device in the first cell to restore to the previous polarization manner, thereby reducing signaling overheads. This can further improve flexibility of scheduling the polarization manner of the terminal device.

For an implementation in which the fifth indication information indicates the duration of the third polarization manner, refer to the description of the "implementation in which the first indication information indicates the duration of the first polarization manner" in the method embodiment shown in FIG. 6, for example, Manner 7 and Manner 8. Details are not described herein again.

Optionally, the network device may broadcast timer configuration information. The timer configuration information may include a correspondence between at least one timer index and at least one timer, and the timer indicates the duration of the third polarization manner. For example, the network device may send the timer configuration information to all the terminal devices in the cell by using an SIB.

For an implementation of the timer configuration information, refer to the description of the "implementation of the timer configuration information" in the method embodiment shown in FIG. 6. Details are not described herein again.

In this embodiment of this application, the fifth indication information may be carried in cell-level information.

The cell-level information may be understood as information sent by the network device to a terminal device in a cell. Except the terminal device in the cell, another terminal device cannot successfully decode the terminal-level information. The fifth indication information is carried in the cell-level information, and indicates that a device scheduled by using the fifth indication information is the terminal device in the cell.

Optionally, the cell-level information may be an SIB. In other words, the fifth indication information may be carried in an SIB.

Optionally, one or more bits in the SIB may be used to carry the fifth indication information. Values of the one or more bits in the SIB may be used to indicate the third polarization manner. The following separately describes several possible implementations.

Example 5: Four bits in the SIB are used to carry the fifth indication information. The four bits may indicate the third polarization manner in an indication manner shown in Table 15.

**Table 15**

| | | | |
|---|---|---|---|
| SIBx field, where x may be any value from 0 to 14 | Uplink/Downlink | Value | Indication |
| | Downlink | 00 | A third downlink polarization manner is left hand circular polarization. |
| | | 01 | The third downlink polarization manner is right hand circular polarization. |
| | | 10 | The third downlink polarization manner is left hand circular polarization and right hand circular polarization cross polarization multiplexing. |
| | | 11 | Reserved |
| | Uplink | 00 | The third uplink polarization manner is left hand circular polarization. |
| | | 01 | The third uplink polarization manner is right hand circular polarization. |
| | | 10 | The third uplink polarization manner is left hand circular polarization and right hand circular polarization cross polarization multiplexing. |
| | | 11 | Reserved |

A format of an SIBx message (message) in Example 5 may be shown as follows:

```
          SIBx message
          -- ASN1 START (-- ASN1START)
          -- TAG-MEAS-CONFIG-START (-- TAG-MEAS-CONFIG-START)
          SIBx (SIBx):: = Sequence (sequence) {
          Downlink Polarization (DL Polarization) manner ENUMERATED
 (ENUMERATED) f left hand circular polarization (LHCP), right hand circular polarization
 (RHCP), and left hand circular polarization and
right hand circular polarization cross polarization
 multiplexing (LHCP&RHCP Multiplexing)} ,
          Uplink Polarization (UL Polarization) manner ENUMERATED
 (ENUMERATED) f left hand circular polarization (LHCP), right hand circular polarization
 (RHCP), and left hand circular polarization and
right hand circular polarization cross polarization
 multiplexing (LHCP&RHCP Multiplexing)}
          ...
          }
          -- TAG-MEAS-CONFIG-STOP (-- TAG-MEAS-CONFIG-STOP)
          -- ASN1 STOP (-- ASN1 STOP)
```

Example 6: Three bits in the SIB are used to carry the fifth indication information. The three bits may indicate the third polarization manner in an indication manner shown in Table 16. In Table 16, x1 and x2 in an SIBx1 and an SIBx2 are different. When the SIB does not include an SIBx2 field, an uplink polarization manner is implicitly indicated to be the same as a downlink polarization manner.

**Table 16**

| | | | |
|---|---|---|---|
| SIBx1 field, where x1 may be any value from 0 to 14 | Uplink/Downlink | Value | Indication |
| | Downlink | 00 | A third downlink polarization manner is left hand circular polarization. |
| | | 01 | The third downlink polarization manner is right hand circular polarization. |
| | | 10 | The third downlink polarization manner is left hand circular polarization and right hand circular polarization cross polarization multiplexing. |
| | | 11 | Reserved |
| SIBx2 field, where x2 may be any value from 0 to 14 | Uplink | 0 | Cross opposite to a current downlink polarization direction of the terminal device. |
| | | 1 | The third uplink polarization manner is left hand circular polarization and right hand circular polarization cross polarization multiplexing. |

A format of an SIBx message in Example 6 may be shown as follows:

```
          SIBx message
          -- ASN1START (-- ASN1START)
          -- TAG-MEAS-CONFIG-START (-- TAG-MEAS-CONFIG-START)
          SIBx (SIBx) ::= Sequence (Sequence) {
          Downlink Polarization (DL Polarization) manner ENUMERATED
 (ENUMERATED) f left hand circular polarization (LHCP), right hand circular polarization
 (RHCP), and left hand circular polarization and
 right hand circular polarization cross polarization
 multiplexing (LHCP&RHCP Multiplexing)},
          Uplink polarization (UL Polarization) manner ENUMERATED
 (ENUMERATED) {cross (cross) opposite to the downlink polarization direction, and left hand
 circular polarization and right hand circular polarization cross polarization multiplexing
 (LHCP&RHCP Multiplexing)}
          }
          -- TAG-MEAS-CONFIG-STOP (-- TAG-MEAS-CONFIG-STOP)
          -- ASN1 STOP (-- ASN1 STOP)
```

Example 7: Four bits in the SIB are used to carry the fifth indication information. The four bits may indicate the third polarization manner in an indication manner shown in Table 17.

**Table 17**

| | | |
|---|---|---|
| SIBx field, where x is any value from 0 to 14 | Value (4 bits) | Indication |
| | 0000 | A third polarization manner includes downlink left hand circular polarization, and uplink left hand circular polarization. |
| | 0001 | The third polarization manner includes downlink left hand circular polarization, and uplink right hand circular polarization. |
| | 0010 | The third polarization manner includes downlink left hand circular polarization, and uplink left hand circular polarization and right hand circular polarization cross polarization multiplexing. |
| | 0011 | The third polarization manner includes downlink right hand circular polarization, and uplink left hand circular polarization. |
| | 0100 | The third polarization manner includes downlink right hand |
| | | circular polarization, and uplink right hand circular polarization. |
| | 0101 | The third polarization manner includes downlink right hand circular polarization, and uplink left hand circular polarization and right hand circular polarization cross polarization multiplexing. |
| | 0110 | The third polarization manner includes downlink left hand circular polarization and right hand circular polarization cross polarization multiplexing, and uplink left hand circular polarization. |
| | 0111 | The third polarization manner includes downlink left hand circular polarization and right hand circular polarization cross polarization multiplexing, and uplink right hand circular polarization. |
| | 1000 | The third polarization manner includes downlink left hand circular polarization and right hand circular polarization cross polarization multiplexing, and uplink left hand circular polarization and right hand circular polarization cross polarization multiplexing. |

A format of an SIBx message in Example 7 may be shown as follows:

```
          SIBx message
          -- ASN1START (-- ASN1START)
          -- TAG-MEAS-CONFIG-START (-- TAG-MEAS-CONFIG-START)
          SIBx (SIBx) ::= Sequence (Sequence) {
          Polarization (DL Polarization) manner ENUMERATED (ENUMERATED)
 {downlink left hand circular polarization (LHCP),
 uplink left hand circular polarization (LHCP),
 downlink left hand circular polarization (LHCP),
 uplink right hand circular polarization (RHCP),
 downlink left hand circular polarization (LHCP),
uplink left hand circular polarization and right
 hand circular polarization cross polarization
multiplexing (LHCP&RHCP Multiplexing),
 downlink right hand circular polarization (LHCP),
 uplink left hand circular polarization (LHCP),
 downlink right hand circular polarization (LHCP),
uplink right hand circular polarization (RHCP),
 downlink right hand circular polarization (LHCP),
uplink left hand circular polarization and right
 hand circular polarization cross polarization
multiplexing (LHCP&RHCP Multiplexing),
 downlink left hand circular polarization and
right hand circular polarization cross polarization
 multiplexing (LHCP&RHCP Multiplexing), uplink
left hand circular polarization (LHCP),
 downlink left hand circular polarization and
right hand circular polarization cross polarization
 multiplexing (LHCP&RHCP Multiplexing), uplink
right hand circular polarization (RHCP),
 downlink left hand circular polarization and
 right hand circular polarization cross polarization
 multiplexing (LHCP&RHCP Multiplexing), and uplink
left hand circular polarization and right
 hand circular polarization cross polarization
 multiplexing (LHCP&RHCP Multiplexing) }, ...
          }
          -- TAG-MEAS-CONFIG-STOP (-- TAG-MEAS-CONFIG-STOP)
          -- ASN1 STOP (-- ASN1 STOP)
```

Optionally, it can be seen that the four bits in Table 22 can further indicate more polarization manners, as shown in Table 18 below.

**Table 18**

| | | |
|---|---|---|
| SIBx field, where x is any value from 0 to 14 | Value (4 bits) | Indication |
| | 1000 | A third polarization manner includes downlink left hand circular polarization, and uplink left hand circular polarization. |
| | 1001 | The third polarization manner includes downlink left hand circular polarization, and uplink right hand circular polarization. |
| | 1010 | The third polarization manner includes downlink left hand circular polarization, and uplink left hand circular polarization and right hand circular polarization cross polarization multiplexing. |
| | 1011 | The third polarization manner includes downlink right hand circular polarization, and uplink left hand circular polarization. |
| | 1100 | The third polarization manner includes downlink right hand circular polarization, and uplink right hand circular polarization. |
| | 1101 | The third polarization manner includes downlink right hand circular polarization, and uplink left hand circular polarization and right hand circular polarization cross polarization multiplexing. |
| | 1110 | The third polarization manner includes downlink left hand circular polarization and right hand circular polarization cross polarization multiplexing, and uplink left hand circular polarization. |
| | 1111 | The third polarization manner includes downlink left hand circular polarization and right hand circular polarization cross polarization multiplexing, and uplink right hand circular polarization. |

In the communication method shown in FIG. 11, the fifth indication information can be used to schedule the polarization manner of the terminal device and is carried in the cell-level information, such as the SIB. In this way, the network device can schedule the polarization manner of the terminal device at the cell level, that is, the network device can adjust a polarization manner of a terminal device in a cell, so that scheduling of the polarization manner of the terminal device is more flexible.

The communication methods shown in FIG. 6, FIG. 10, and FIG. 11 may be separately implemented, or may be implemented in combination. This is not limited herein.

This application provides yet another embodiment, so that a network device sends a polarization manner of a neighboring cell to the terminal device, thereby accelerating neighboring cell handover of the terminal device.

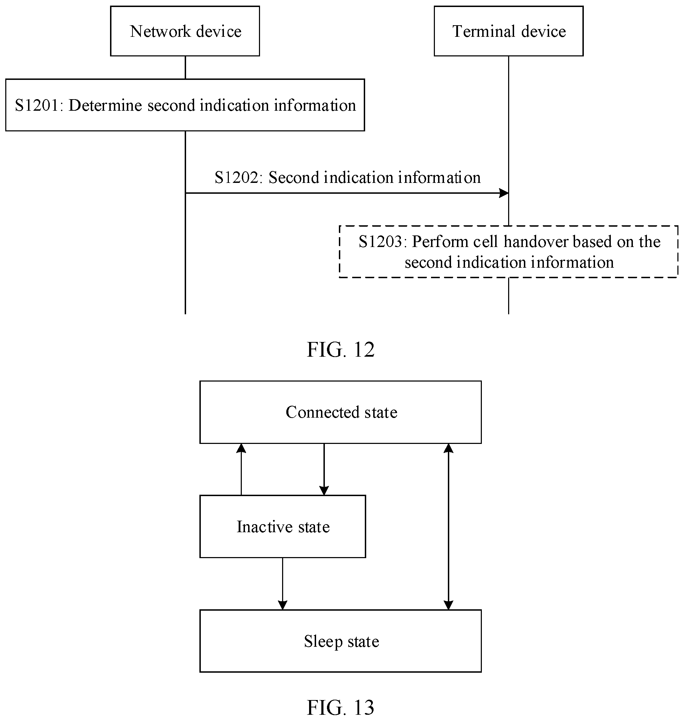

In some possible embodiments, to accelerate cell handover, embodiments of this application further provide a communication method. FIG. 12 is a schematic flowchart 4 of the communication method according to this embodiment of this application. The method may include S1201 to S1203, which are sequentially described below.

S1201: The network device determines second indication information.

The second indication information indicates the polarization manner of the neighboring cell of a cell in which the terminal device is located. In other words, the second indication information indicates the polarization manner for signal measurement of the neighboring cell of the cell in which the terminal device is located.

The polarization manner of the neighboring cell may include one or more of left hand circular polarization, right hand circular polarization, linear polarization, or cross polarization multiplexing. The cell in which the terminal device is located may have one or more neighboring cells. When the cell in which the terminal device is located has one neighboring cell, the polarization manner of the neighboring cell includes any one of left hand circular polarization, right hand circular polarization, linear polarization, or cross polarization multiplexing. When the cell in which the terminal device is located has a plurality of neighboring cells, the polarization manners of the neighboring cells include one or more of left hand circular polarization, right hand circular polarization, linear polarization, or cross polarization multiplexing.

The second indication information may also be referred to as indication information of the polarization manner of the neighboring cell. This is not limited herein.

Optionally, a manner in which the network device determines the second indication information may include: The network device determines the cell in which the terminal device is located; and obtains a polarization manner of at least one neighboring cell around the cell in which the terminal device is located, and generates the second indication information. In other words, the second indication information may indicate a polarization manner of at least one neighboring cell around the cell in which the terminal device is located.

Optionally, the second indication information may be carried in terminal-level information or cell-level information. The terminal-level information may include DCI, a MAC CE, RRC, or the like, and the cell-level information may include an SIB.

Optionally, the second indication information further indicates a polarization manner of a neighboring cell of a cell in which the terminal device in a first status is located, the first status includes a connected state or an inactive state, and the second indication information is carried in the terminal-level information.

For example, the second indication information is carried in UE-specific RRC. FIG. 13 is a schematic diagram of RRC status switching according to this embodiment of this application. Refer to FIG. 13. The terminal device may be in the following several states: the connected state, the inactive state, and an idle state. The connected state may be denoted as RRC _connected, the inactive state may be denoted as RRC_inactive, and the idle state may be denoted as RRC_idle. The terminal device may switch between different states.

For the terminal device in the connected state, the second indication information may be carried in RRC reconfiguration (RRCReconfiguration). The network device may send RRCReconfiguration to the terminal device, where RRCReconfiguration indicates a polarization manner of the neighboring cell of the cell in which the terminal device in the connected state is located, that is, may indicate the polarization manner used when the terminal device measures signal quality of the neighboring cell during cell handover.

For the terminal device in the inactive state, the second indication information may be carried in RRC resume (RRCResume). The network device may send RRCResume to the terminal device, where RRCResume indicates a polarization manner of a neighboring cell of a cell in which the terminal device in the inactive state is located, that is, may indicate the polarization manner used when the terminal device in the inactive state measures signal quality of the neighboring cell during cell handover and is switched to the connected state.

When the second indication information is carried in RRCReconfiguration or RRCResume, the second indication information may be, for example, an RRC information element (radio resource control information element, RRC IE) carried in RRCReconfiguration or RRCResume. Specifically, the second indication information may be an SSB frequency (ssbFrequency) field in a measurement object new radio (MeasObjectNR) in the RRC IE, and the ssbFrequency field may indicate the polarization manner of the neighboring cell of the cell in which the terminal device is located.

During implementation, the network device may configure, for the terminal device in advance, a correspondence between a reference signal (reference signal, RS) measurement frequency of the neighboring cell in the ssbFrequency field and the polarization manner of the neighboring cell, and then send the RS measurement frequency of the neighboring cell to the terminal device in the ssbFrequency field, to indicate the polarization manner of the neighboring cell of the cell in which the terminal device is located. The RS herein may be an SSB or a CSI-RS. This is not limited herein.

The network device may configure, for the terminal device in a polarization configuration (polarCongfig) field, the correspondence between the RS measurement frequency of the neighboring cell in the ssbFrequency field and the polarization manner of the neighboring cell. For example, Table 19 shows a correspondence between an RS measurement frequency of a neighboring cell in an ssbFrequency field and a polarization manner of the neighboring cell. Refer to Table 19. If the polarization manner of the neighboring cell of the cell in which the terminal device is located is left hand circular polarization, the network device may send, to the terminal device in the ssbFrequency field, the RS measurement frequency F0 of the neighboring cell, to indicate that the polarization manner of the neighboring cell of the cell in which the terminal device is located is left hand circular polarization. In Table 19, an object is a to-be-measured object, and the to-be-measured object may be a cell or a beam. This is uniformly described herein, and is not limited below.

**Table 19**

| Object (object) | RS measurement frequency of a neighboring cell in an ssbFrequency field | Indication |
|---|---|---|
| To-be-measured object 0 | F0 | A measured polarization manner of the to-be-measured object 0 includes left hand circular polarization, and right hand circular polarization. |
| To-be-measured obj ect 1 | F1 | A measured polarization manner of the to-be-measured object 1 includes none. |
| To-be-measured object 2 | F2 | A measured polarization manner of the to-be-measured object 2 includes left hand circular polarization and right hand circular polarization cross polarization multiplexing. |

When configuring the correspondence between the RS measurement frequency of the neighboring cell in the ssbFrequency field and the polarization manner of the neighboring cell for the terminal device, the network device may further add or delete a correspondence. For example, in Table 19, the network device may delete, from Table 19 by using a polar removal list (polarToRemoveList), the correspondence of "right hand circular polarization" indicated by "F0". The network device may add, by using a polar addition list (polarToAddList), a correspondence between an RS measurement frequency of a neighboring cell and a polarization manner of the neighboring cell to Table 19. Refer to a correspondence between "F1" and "right hand circular polarization" in the following Table 20.

**Table 20**

| Object (object) | RS measurement frequency of a neighboring cell in an ssbFrequency field | Indication |
|---|---|---|
| To-be-measured object 0 | F0 | A measured polarization manner of the to-be-measured object 0 includes left hand circular polarization. |
| To-be-measured obj ect 1 | F1 | A measured polarization manner of the to-be-measured object 1 includes right hand circular polarization. |
| To-be-measured object 2 | F2 | A measured polarization manner of the to-be-measured object 2 includes left hand circular polarization and right hand circular polarization cross polarization multiplexing. |

In this way, based on the second indication information, the terminal device in the connected state or the inactive state can obtain in advance the polarization manner of the neighboring cell, that is, can obtain in advance the polarization manner used when the signal quality of the neighboring cell is used. In this case, during cell handover, the terminal device can measure the signal quality of the neighboring cell based on the polarization manner of the neighboring cell indicated by the second indication information, and implement cell handover. This can improve a speed and precision of measuring a signal of the neighboring cell by the terminal device, quickly and accurately feed back a measurement result, improve a cell handover success rate, reduce a probability of initiating cell reselection due to a radio link failure (radio link failure, RLF), avoid requesting a polarization manner of the neighboring cell from the network device again during the handover, and accelerate cell handover.

Optionally, the second indication information further indicates a polarization manner of a neighboring cell of a cell in which the terminal device in a second status is located, the second status includes an inactive state or an idle state, and the second indication information is carried in cell-level information.

Refer to FIG. 13, for the terminal device in the inactive state or the idle state, the second indication information may be carried in a SIB, and an SIB index (SIB X) may indicate the polarization manner of the neighboring cell of the cell in which the terminal device is located. A value of "X" in the SIB X may be any one of 0 to 14. With development of communication technologies, X may be more values. A value of X is not limited in this embodiment of this application. For example, an SIB 4 or an SIB 11 may indicate the polarization manner of the neighboring cell of the cell in which the terminal device is located.

For example, the polarization manner of the neighboring cell of the cell in which the terminal device is located may be indicated by using a measurement idle carrier list new radio (measIdleCarrierListNR) in the SIB 11 or an inter frequency carrier frequency list (interFreqCarrierFreqList) in the SIB 4.

During implementation, measIdleCarrierListNR in the SIB 11 or interFreqCarrierFreqList in the SIB 4 may be used to indicate a measurement frequency of an RS (including a CSI-RS and an SSB) of the neighboring cell, and the measurement frequency corresponds to the to-be-measured cell. A polarization indication field is added to a measIdleConfigSIB field or another field in the SIB 11, or a polarization indication field is added to the SIB 4, to indicate the polarization manner. The polarization indication field may indicate a list including added and removed polarization manners, or may be an arrangement group of different polarization measurement manners indicated by using a separate field.

The current cell may obtain, based on the second indication information, polarization and RS information of the neighboring cell through an Xn interface between core networks or gNodeBs or in a manner of internal communication of the gNodeB, to indicate, to UE in different RRC states covered by the current cell, how to measure the signal quality of the neighboring cell.

In this way, based on the second indication information, the terminal device in the inactive state or the idle state can obtain the polarization manner of the neighboring cell in advance, that is, can obtain, in advance, the polarization manner used when the signal quality of the neighboring cell is measured. In this case, during cell reselection, the terminal device can measure the signal quality of the neighboring cell based on the polarization manner of the neighboring cell indicated by the second indication information, and then implement cell reselection. This can improve a cell reselection success rate, avoid requesting the polarization manner of the neighboring cell from the network device again during reselection, and accelerate cell reselection.

S1202: The network device sends the second indication information to the terminal device. Correspondingly, the terminal device receives the second indication information from the network device.

Optionally, after S1202, the communication method shown in FIG. 12 may further include the following step:
S1203: When performing cell handover, the terminal device performs cell handover based on the second indication information.

In S1201 to S1203, based on the second indication information, the terminal device can obtain the polarization manner of the neighboring cell in advance, that is, can obtain, in advance, the polarization manner used when the signal quality of the neighboring cell is measured. In this case, during cell handover, the terminal device can measure the signal quality of the neighboring cell based on the polarization manner of the neighboring cell indicated by the second indication information, and then implement cell handover. This can improve a cell handover success rate, avoid requesting the polarization manner of the neighboring cell again from the network device during handover, and accelerate cell handover.

This application provides still yet another embodiment, so that a network device sends a polarization manner of an adjacent beam to the terminal device, thereby accelerating adjacent beam handover of the terminal device.

To accelerate beam handover, embodiments of this application further provide a communication method. FIG. 14 is a schematic flowchart 5 of the communication method according to this embodiment of this application. The method may include S1401 to S1403, which are sequentially described below.

S1401: The network device determines third indication information.

The third indication information indicates the polarization manner of the adj acent beam of a beam on which the terminal device is located. In other words, the third indication information indicates the polarization manner for signal measurement on the adjacent beam of the beam on which the terminal device is located.

The polarization manner of the adjacent beam may include one or more of left hand circular polarization, right hand circular polarization, linear polarization, or cross polarization multiplexing. The beam on which the terminal device is located may have one or more adjacent beams. When the beam on which the terminal device is located has one adjacent beam, the polarization manner of the adjacent beam includes any one of left hand circular polarization, right hand circular polarization, linear polarization, or cross polarization multiplexing. When the beam on which the terminal device is located has a plurality of adjacent beams, the polarization manners of the adjacent beams include one or more of left hand circular polarization, right hand circular polarization, linear polarization, or cross polarization multiplexing.

The third indication information may also be referred to as indication information of the polarization manner of the adjacent beam. This is not limited herein.

Optionally, a manner in which the network device determines the third indication information may include: The network device determines the beam on which the terminal device is located; and obtains a polarization manner of at least one adjacent beam around the beam on which the terminal device is located, and generates the third indication information. In other words, the third indication information may indicate a polarization manner of at least one adjacent beam around the beam on which the terminal device is located.

Optionally, the third indication information may be carried in DCI, a MAC CE, or RRC. This is not limited herein. The third indication information may be carried in a DCI format, a MAC CE index, or an RRC IE.

For example, the third indication information is carried in the RRC IE.

For example, the third indication information may be added to CSI-MeasConfig in the RRC IE. In this manner, one piece of the third indication information may indicate polarization manners of a plurality of adjacent beams. Bits are reduced.

For another example, the third indication information may be added to CSI-SSB-ResourceSet in the RRC IE.

For still another example, the third indication information may be added to NZP-CSI-RS-Resource or NZP-CSI-RS-ResourceSet.

During application, the third indication information may further indicate that information indicated by the third indication information takes effect; or the third indication information may further indicate that information indicated by the third indication information does not take effect, and the network device may indicate, by using other information (for example, RRC, DCI, or a MAC CE), that the information indicated by the third indication information takes effect. This is not limited herein.

S1402: The network device sends the third indication information to the terminal device. Correspondingly, the terminal device receives the third indication information from the network device.

Optionally, after S1402, the communication method shown in FIG. 14 may further include the following step:
S1403: When performing beam handover, the terminal device performs beam handover based on the third indication information.

In S1401 to S1403, based on the third indication information, the terminal device can obtain the polarization manner of the adjacent beam in advance, that is, can obtain, in advance, the polarization manner used when the signal quality of the adjacent beam is measured. Therefore, during beam handover, the terminal device can measure the signal quality of the adjacent beam based on the polarization manner of the adj acent beam indicated by the third indication information, and then implement beam handover. This can improve a beam handover success rate, avoid requesting a polarization manner of the adjacent beam again from the network device during handover, and accelerate beam handover.

This application provides a further embodiment, so that a terminal device actively requests a network device to schedule a polarization manner of the terminal device.

FIG. 15 is a schematic flowchart 6 of a communication method according to this embodiment of this application. The method may include S1501 to S1503, which are sequentially described below.

S1501: The terminal device determines sixth indication information.

The sixth indication information indicates a fourth polarization manner expected (or desired) by the terminal device. In other words, the sixth indication information may indicate that the terminal device desires to switch a polarization manner to a fourth polarization manner; or the sixth indication information may indicate that the terminal device desires to work in a fourth polarization manner; or the sixth indication information may indicate that a polarization manner desired by the terminal device is a fourth polarization manner. It should be noted that, unless otherwise specified, meanings to be expressed in the several manners of expressing the sixth indication information are consistent, and may be mixed.

The fourth polarization manner may include any one of left hand circular polarization, right hand circular polarization, linear polarization, or cross polarization multiplexing.

S1502: The terminal device sends the sixth indication information to the network device. Correspondingly, the network device receives the sixth indication information from the terminal device.

S1503: The network device schedules the polarization manner of the terminal device based on the sixth indication information.

For an implementation of S1503, refer to the foregoing Manner 4. Details are not described herein again.

That the terminal device determines the sixth indication information in S1501 may be implemented in the following Manner 25 to Manner 29, which are sequentially described below.

Manner 25: The terminal device determines the sixth indication information based on a polarization manner supported by the terminal device.

Manner 26: The terminal device determines the sixth indication information based on CSI of channels in different polarization manners measured by the terminal device.

In Manner 26, when channel quality in one polarization manner is poorer than channel quality in another polarization manner, the polarization manner with better channel quality may be used as the fourth polarization manner, so that the terminal device applies to the network device for switching to the polarization manner with the better channel quality, thereby improving communication efficiency. In Manner 26, when a service requirement of the terminal device is large and channel quality of polarization multiplexing is good, the terminal device may further apply to the network device for enabling polarization multiplexing, thereby improving a throughput of the terminal device. In Manner 26, if in two orthogonally polarization manners (denoted as A and B) currently used by the terminal device, channel quality of A is poor, the terminal device may apply to the network device for working in B, where channel quality of B is better, thereby improving communication efficiency of the terminal device.

Manner 27: The terminal device determines the sixth indication information based on a service requirement of the terminal device.

In Manner 27, when the service requirement of the terminal device is large, the terminal device may apply to the network device for enabling polarization multiplexing, thereby improving a throughput of the terminal device. When the service requirement of the terminal device is small, the terminal device may apply to the network device for disabling polarization multiplexing, thereby further reducing power consumption of the terminal device.

Manner 28: The terminal device determines the sixth indication information based on weather information.

In Manner 28, when the terminal device works in cross polarization multiplexing, and weather on a signal propagation path between the network device and the terminal device is poor, the terminal device may apply to the network device for working in a single polarization manner (for example, left hand circular polarization), thereby reducing signal interference and improving communication quality.

Manner 29: The terminal device determines the sixth indication information based on a crosstalk status between orthogonally polarized channels.

In Manner 29, when crosstalk between the orthogonally polarized channels between the network device and the terminal device is severe, the terminal device may apply to the network device for limiting a polarization manner to a single polarization manner, thereby reducing signal interference and improving communication quality. When crosstalk between the orthogonally polarized channels between the network device and the terminal device is not severe, the terminal device may apply to the network device for adjusting a polarization manner to cross polarization multiplexing, thereby improving a throughput.

For a specific implementation of determining the sixth indication information in the foregoing Manner 25 to Manner 29, refer to that of determining the first indication information in the foregoing Manners 1, 2, 3, 5, and 6. A difference lies in that the first indication information is determined by the network device, and the sixth indication information is determined by the terminal device. Details are not described herein.

In some possible embodiments, when a trigger condition is met, the terminal device may determine the sixth indication information based on the trigger condition. The trigger condition may include any one of the foregoing Manner 25 to Manner 29, and the trigger condition may trigger the terminal device to apply to the network device for scheduling the polarization manner of the terminal device. In other words, if the trigger condition is met, the terminal device may determine the sixth indication information based on a process corresponding to the condition that is met, and then apply to the network device for scheduling the polarization manner of the terminal device.

In this way, the terminal device can discover a problem in the polarization manner of the terminal device in time, and apply to the network device in time for adjusting the polarization manner of the terminal device, so that scheduling of the polarization manner of the terminal device is more flexible, thereby improving spectral efficiency.

It may be understood that the foregoing Manner 25 to Manner 29 may be separately implemented, or may be implemented in combination. This is not limited in this embodiment of this application. Similarly, for a specific example, refer to the foregoing Examples 3 and 4. Details are not described herein again. With reference to the foregoing descriptions of Manner 25 to Manner 29, it can be learned that the terminal device may determine the sixth indication information based on one or more of the polarization manner supported by the terminal device, the CSI of the channels in the different polarization manners measured by the terminal device, the service requirement of the terminal device, the polarization manner expected by the terminal device, the weather condition between the terminal devices, and the crosstalk status between the orthogonally polarized channels. In other words, the sixth indication information may be determined based on one or more of the following: the polarization manner supported by the terminal device, the CSI of the channels in the different polarization manners measured by the terminal device, the service requirement of the terminal device, the polarization manner expected by the terminal device, the weather condition between the terminal devices, or the crosstalk status between the orthogonally polarized channels.

It should be understood that, in Manner 25 to Manner 29, the terminal device may determine, with reference to a plurality of types of information, a polarization manner that is more appropriate for the terminal device, and apply to the network device by using the sixth indication information for scheduling the polarization manner for the terminal device. This can enable, in one aspect, the terminal device to work in a better polarization manner, improve communication quality, and reduce power consumption, in another aspect, scheduling of the polarization manner for the terminal device can be more flexible, and a scheduling granularity is finer, thereby improving spectral efficiency.

Optionally, the sixth indication information may further indicate duration of the fourth polarization manner.

The duration of the fourth polarization manner may be understood as a time length in which the terminal device expects to continuously work in the fourth polarization manner. The duration of the fourth polarization manner may also be referred to as a timer of the fourth polarization manner. When the timer expires, the terminal device may restore a default polarization manner of a cell broadcast by the network device.

In this way, the terminal device can apply to the network device for the duration in which the terminal device works in the fourth polarization manner. After the duration indicated by the sixth indication information expires, the terminal device can restore to a previous polarization manner. Therefore, the network device may no longer need to indicate, by using one piece of indication signaling, the terminal device to restore to the previous polarization manner. This can reduce signaling overheads, avoid that the network device waits for a long time for feedback of the terminal device on the indication signaling, and further improve flexibility of scheduling the polarization manner of the terminal device.

For an implementation in which the sixth indication information indicates the duration of the fourth polarization manner, refer to the description of the "implementation in which the first indication information indicates the duration of the first polarization manner" in the method embodiment shown in FIG. 6, for example, Manner 7 and Manner 8. Details are not described herein again.

Optionally, when a twenty-seventh condition is met, the terminal device may determine cross polarization multiplexing as the fourth polarization manner; and the terminal device may further obtain first service requirement time of the terminal device, and determine the sixth indication information based on the first service requirement time. The sixth indication information indicates that the polarization manner expected by the terminal device is the fourth polarization manner (namely, cross polarization multiplexing), and the sixth indication information further indicates the duration of the fourth polarization manner. The duration of the fourth polarization manner may be greater than (or ≥) the first service requirement time.

The twenty-seventh condition may include: A current polarization manner of the terminal device is a single polarization manner, and a throughput of the terminal device is greater than (or ≥) a first throughput threshold. The first service requirement time is time in which the throughput of the terminal device is continuously greater than (or ≥) the first throughput threshold. For example, it is assumed that if time in which the throughput of the terminal device is continuously greater than the first throughput threshold in a future period of time is 10s, the first service requirement time is 10s. It indicates that a service throughput of the terminal device in the future 10s is large.

For example, the polarization manners supported by the terminal device include a left hand circular polarization manner, a right hand circular polarization manner, and left hand circular polarization and right hand circular polarization cross polarization multiplexing. If the polarization manner of the terminal device is the left hand circular polarization manner, and the throughput of the terminal device is greater than the first throughput threshold (that is, the twenty-seventh condition is met), the terminal device may determine that left hand circular polarization and right hand circular polarization cross polarization multiplexing is the fourth polarization manner. The terminal device may further obtain the first service requirement time of the terminal device. It is assumed that the first service requirement time is 10s, the terminal device may determine the sixth indication information based on the first service requirement time, where the sixth indication information indicates that the polarization manner expected by the terminal device is left hand circular polarization and right hand circular polarization cross polarization multiplexing, and the sixth indication information further indicates that the duration in which the terminal device expects to work in left hand circular polarization and right hand circular polarization cross polarization multiplexing is 10s.

In this way, after the duration indicated by the sixth indication information expires, the terminal device can return from cross polarization multiplexing to the single polarization manner, so that the terminal device automatically disables cross polarization multiplexing when the first service requirement time of the terminal device ends, thereby reducing power consumption and releasing an air interface resource. In addition, the network device may no longer need to indicate, by using one piece of indication signaling, the terminal device to restore to the previous polarization manner. This can reduce signaling overheads, and avoid that the network device waits for a long time for feedback of the terminal device on the indication signaling.

Optionally, when a twenty-eighth condition is met, the terminal device may determine that a single polarization manner is the fourth polarization manner; and the terminal device may further obtain second service requirement time of the terminal device, and determine the sixth indication information based on the second service requirement time. The sixth indication information indicates that the polarization manner expected by the terminal device is the fourth polarization manner (namely, the single polarization manner), and the sixth indication information further indicates the duration of the fourth polarization manner. The duration of the fourth polarization manner may be greater than (or ≥) the second service requirement time.

The twenty-eighth condition may include: A current polarization manner of the terminal device is cross polarization multiplexing, and a throughput of the terminal device is less than (or ≤) a third throughput threshold. The second service requirement time is time in which the throughput of the terminal device is continuously less than (or ≤) the third throughput threshold. For example, it is assumed that if time in which the throughput of the terminal device is continuously less than the first throughput threshold in a future period of time is 10s, the second service requirement time is 10s. It indicates that a service throughput of the terminal device in the future 10s is small.

For example, the polarization manners supported by the terminal device include a left hand circular polarization manner, a right hand circular polarization manner, and left hand circular polarization and right hand circular polarization cross polarization multiplexing. If the polarization manner of the terminal device is left hand circular polarization and right hand circular polarization cross polarization multiplexing, and the throughput of the terminal device is less than the third throughput threshold (that is, the twenty-eighth is met), the terminal device may determine that the left hand circular polarization manner is the fourth polarization manner. The terminal device may further obtain the second service requirement time of the terminal device. It is assumed that the second service requirement time is 10s, the terminal device may determine the sixth indication information based on the second service requirement time, where the sixth indication information indicates that the polarization manner expected the terminal device is the left hand circular polarization manner, and the sixth indication information further indicates that the duration in which the terminal device expects to work in the left hand circular polarization manner is 10s.

In this way, after the duration indicated by the sixth indication information expires, the terminal device can return from the single polarization manner to cross polarization multiplexing, so that the terminal device automatically wakes up cross polarization multiplexing when the second service requirement time of the terminal device ends, thereby improving the throughput. In addition, the network device may no longer need to indicate, by using one piece of indication signaling, the terminal device to restore to the previous polarization manner. This can reduce signaling overheads, avoid that the network device waits for a long time for feedback of the terminal device on the indication signaling, and accelerate scheduling of the network device.

In this embodiment of this application, when the sixth indication information further indicates the duration of the fourth polarization manner, when receiving the sixth indication information, the network device may perform explicit acknowledge or implicit acknowledge on the sixth indication information, which is sequentially described below.

Explicit acknowledgment: The network device sends acknowledgment information (for example, an acknowledgment (acknowledgment, ACK) message or a negative acknowledgment (negative acknowledgment, NACK) message) to the terminal device, to indicate that the sixth indication information is received.

Implicit acknowledgment: When receiving the sixth indication information, the network device communicates with the terminal device in the fourth polarization manner indicated by the sixth indication information.

In this embodiment of this application, in a case of the explicit acknowledgment, start time of the duration of the fourth polarization manner is time at which the network device sends the acknowledgment information to the terminal device.

In a case of the implicit acknowledgment, for downlink, if the terminal device receives a data packet from the network device in the fourth polarization manner, it is considered that the network device performs implicit acknowledgment, and start time of the duration of the fourth polarization manner is time at which a first data packet from the network device is received in the fourth polarization manner; and for uplink, the terminal device sends a data packet (denoted as an uplink data packet) to the network device in the fourth polarization manner, if the terminal device receives acknowledgment information (for example, ACK or NACK) fed back by the network device for the uplink data packet, it is considered that the network device performs implicit acknowledgment, and start time of the duration of the fourth polarization manner is sending time of the uplink data packet corresponding to the acknowledgment information fed back by the network device for the uplink data packet.

In this embodiment of this application, the sixth indication information may be carried in any one of RRC signaling, a MAC CE, a CSI-RS, and uplink control information (uplink control information, UCI).

In FIG. 15, the terminal device can apply to the network device for adjusting the polarization manner. This can flexibly adjust the polarization manner of the terminal device, enable the terminal device to work in a better polarization manner, and improve spectral efficiency of the polarization manner of the terminal device.

In embodiments of this application, the communication methods shown in FIG. 6, FIG. 10 to FIG. 12, and FIG. 14 may be separately implemented, or may be implemented in combination. This is not limited herein.

It should be noted that the first polarization indication information to the fifth polarization indication information may be implemented in a same field, or may be implemented in different fields. This is not limited herein.

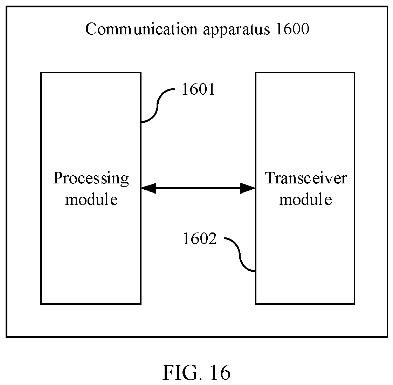

With reference to FIG. 6 to FIG. 15, the foregoing describes the communication methods provided in embodiments of this application in detail. The following describes, in detail with reference to FIG. 16, a communication apparatus configured to perform the communication methods provided in embodiments of this application.

As shown in FIG. 16, an embodiment of this application provides a communication apparatus 1600. The communication apparatus 1600 may be a terminal or a network device, may be an apparatus in the terminal device or the network device, or may be an apparatus that can be used together with the terminal device or the network device. In a possible implementation, the communication apparatus 1600 may include modules or units that are in a one-to-one correspondence with the methods/operations/steps/actions performed by the first communication apparatus or the second communication apparatus in the foregoing method embodiments. The unit may be implemented by a hardware circuit, software, or a combination of a hardware circuit and software. In a possible implementation, the communication apparatus 1600 includes a processing module 1601 and a transceiver module 1602. For ease of description, FIG. 16 shows only main components of the communication apparatus.

In some embodiments, the communication apparatus 1600 is applied to the communication system shown in FIG. 3, and performs functions of the network device in the communication methods shown in FIG. 6, FIG. 10 to FIG. 12, FIG. 13, and FIG. 15.

The processing module 1601 is configured to determine first indication information, where the first indication information is carried in terminal-level information, the first indication information indicates a first polarization manner of a first communication apparatus, and the first polarization manner includes any one of left hand circular polarization, right hand circular polarization, linear polarization, or cross polarization multiplexing. The transceiver module 1602 is configured to send the first indication information.

In some possible designs, the processing module 1601 is further configured to determine second indication information, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing. The transceiver module 1602 is further configured to send the second indication information.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information. Optionally, the cell-level information may be an SIB.

In a possible implementation, the first indication information may include a mapping relationship between a plurality of SSB indexes and a plurality of polarization manners.

In a possible implementation, the first indication information further indicates duration of the first polarization manner.

In a possible implementation, the first indication information is determined based on one or more of the following: a polarization manner supported by the first communication apparatus, CSI of channels in different polarization manners measured by the first communication apparatus, a service requirement of the first communication apparatus, a polarization manner expected by the first communication apparatus, a weather condition between the first communication apparatus and a second communication apparatus, or a crosstalk status between orthogonally polarized channels.

In a possible implementation, the terminal-level information may be RRC signaling.

Optionally, the terminal-level information may alternatively be any one of a MAC CE, a CSI-RS, DCI, or the like.

In a possible implementation, the first indication information may be one or more of a carrier of the CSI-RS and an RE, and the one or more of the carrier and the resource element indicate the first polarization manner.

In a possible implementation, the processing module 1601 is further configured to determine third indication information, where the third indication information indicates a polarization manner of an adj acent beam of a beam on which the first communication apparatus is located, and the polarization manner of the adjacent beam may include one or more of left hand circular polarization, right hand circular polarization, linear polarization, or cross polarization multiplexing. The transceiver module 1602 is further configured to send the third indication information.

In a possible implementation, the first indication information indicates a first polarization manner corresponding to a first resource of the first communication apparatus, and the first resource includes a time-frequency domain resource.

In some other embodiments, the communication apparatus 1600 is applied to the communication system shown in FIG. 3, and performs functions of the terminal device in the communication methods shown in FIG. 6, FIG. 10 to FIG. 12, FIG. 13, and FIG. 15.

The transceiver module 1602 is configured to receive first indication information from a second communication apparatus, where the first indication information indicates a first polarization manner of a first communication apparatus, the first polarization manner includes any one of left hand circular polarization, right hand circular polarization, linear polarization, or cross polarization multiplexing, and the first indication information is carried in terminal-level information. The processing module 1601 is configured to communicate with the second communication apparatus in the first polarization manner.

In a possible implementation, the transceiver module 1602 is further configured to receive second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information. Optionally, the cell-level information may be an SIB.

In a possible implementation, the first indication information may include a mapping relationship between a plurality of SSB indexes and a plurality of polarization manners.

In a possible implementation, the first indication information further indicates duration of the first polarization manner.

In a possible implementation, the first indication information is determined based on one or more of the following: a polarization manner supported by the first communication apparatus, channel state information of channels in different polarization manners measured by the first communication apparatus, a service requirement of the first communication apparatus, a polarization manner expected by the first communication apparatus, a weather condition between the first communication apparatus and the second communication apparatus, or a crosstalk status between orthogonally polarized channels.

In a possible implementation, the terminal-level information may be RRC signaling.

Optionally, the terminal-level information may alternatively be any one of a MAC CE, a CSI-RS, DCI, or the like.

In a possible implementation, the transceiver module 1602 is further configured to receive third indication information from the second communication apparatus, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing.

In a possible implementation, the first indication information indicates a first polarization manner corresponding to a first resource of the first communication apparatus, and the first resource includes a time-frequency domain resource.

In some still another embodiments, the communication apparatus 1600 is applied to the communication system shown in FIG. 3, and performs functions of the network device in the communication methods shown in FIG. 6, FIG. 10 to FIG. 12, FIG. 13, and FIG. 15.

The processing module 1601 is configured to determine fourth indication information, where the fourth indication information indicates a second polarization manner of a first beam, and the second polarization manner includes any one of left hand circular polarization, right hand circular polarization, linear polarization, or cross polarization multiplexing. The transceiver module 1602 is configured to send the fourth indication information.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the transceiver module 1602 is further configured to send a first mapping relationship, where the first mapping relationship includes a mapping relationship between at least one SSB index and at least one polarization manner, or the first mapping relationship includes a mapping relationship between at least one CSI-RS time-frequency location and at least one polarization manner.

In a possible implementation, the fourth indication information is carried in any one of RRC, DCI, or a MAC CE.

In a possible implementation, the processing module 1601 is further configured to determine second indication information, where the second indication information indicates a polarization manner of a neighboring cell of a cell in which a first communication apparatus is located, and the polarization manner of the neighboring cell may include one or more of left hand circular polarization, right hand circular polarization, linear polarization, or cross polarization multiplexing. The transceiver module 1602 is further configured to send the second indication information.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information.

In a possible implementation, the fourth indication information further indicates duration of the second polarization manner.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

In a possible implementation, the processing module 1601 is further configured to determine third indication information, where the third indication information indicates a polarization manner of an adj acent beam of a beam on which the first communication apparatus is located, and the polarization manner of the adjacent beam may include one or more of left hand circular polarization, right hand circular polarization, linear polarization, or cross polarization multiplexing. The transceiver module 1602 is further configured to send the third indication information.

In some yet another embodiments, the communication apparatus 1600 is applied to the communication system shown in FIG. 3, and performs functions of the terminal device in the communication methods shown in FIG. 6, FIG. 10 to FIG. 12, FIG. 13, and FIG. 15.

The transceiver module 1602 is configured to receive fourth indication information from a second communication apparatus, where the fourth indication information indicates a second polarization manner of a first beam, and the second polarization manner includes any one of left hand circular polarization, right hand circular polarization, linear polarization, or cross polarization multiplexing. The processing module 1601 is configured to communicate with the second communication apparatus based on the second polarization manner.

In a possible implementation, the fourth indication information includes an SSB index, and the SSB index corresponds to the second polarization manner; or the fourth indication information includes a CSI-RS time-frequency location, and the CSI-RS time-frequency location corresponds to the second polarization manner.

In a possible implementation, the transceiver module 1602 is further configured to receive second indication information from the second communication apparatus, where the second indication information indicates a polarization manner of a neighboring cell of a cell in which a first communication apparatus is located, and the polarization manner of the neighboring cell may include one or more of left hand circular polarization, right hand circular polarization, linear polarization, or cross polarization multiplexing.

In a possible implementation, the fourth indication information is carried in any one of RRC, DCI, or a MAC CE.

In a possible implementation, the transceiver module 1602 is further configured to receive second indication information from the second communication apparatus, where the second indication information indicates a polarization manner of a neighboring cell of a cell in which the first communication apparatus is located, and the polarization manner of the neighboring cell may include one or more of left hand circular polarization, right hand circular polarization, linear polarization, or cross polarization multiplexing.

Optionally, the second indication information further indicates a polarization manner of a neighboring cell of a cell in which the first communication apparatus in a first status is located, the first status may include a connected state or an inactive state, and the second indication information is carried in terminal-level information.

Optionally, the second indication information further indicates a polarization manner of a neighboring cell of a cell in which the first communication apparatus in a second status is located, the second status may include an inactive state or an idle state, and the second indication information is carried in cell-level information.

In a possible implementation, the fourth indication information further indicates duration of the second polarization manner.

In a possible implementation, the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

In a possible implementation, the transceiver module 1602 is further configured to receive third indication information, where the third indication information indicates a polarization manner of an adjacent beam of a beam on which the first communication apparatus is located, and the polarization manner of the adjacent beam may include one or more of left hand circular polarization, right hand circular polarization, linear polarization, or cross polarization multiplexing.

Optionally, the transceiver module 1602 may include a receiving module and a sending module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1601 executes the program or the instructions, the communication apparatus 1600 may perform a function of the terminal device or the network device in the communication method shown in any one of FIG. 6, FIG. 10 to FIG. 12, FIG. 13, and FIG. 15.

It should be understood that the processing module 1601 in the communication apparatus 1600 may be implemented by a processor or a processor-related circuit component, and may be a processor or a processing unit; and the transceiver module 1602 may be implemented by a transceiver or a transceiver-related circuit component, and may be a transceiver or a transceiver unit.

It should be noted that the communication apparatus 1600 may be a terminal device or a network device, or may be a chip (system) or another part or component disposed in the terminal device or the network device, or may be an apparatus including the terminal device or the network device. This is not limited in this application. The terminal device is configured to perform the communication method according to any one of the possible implementations in FIG. 6, FIG. 10 to FIG. 12, FIG. 13, and FIG. 15. The network device is configured to perform the communication method according to any one of the possible implementations in FIG. 6, FIG. 10 to FIG. 12, FIG. 13, and FIG. 15.

In addition, for technical effect of the communication apparatus 1600, refer to technical effect of the communication method shown in any one of FIG. 6, FIG. 10 to FIG. 12, FIG. 13, and FIG. 15. Details are not described herein again.

If the communication apparatus 1600 provided in this embodiment of this application is the chip, the transceiver module 1602 in the communication apparatus 1600 may separately correspond to input and output of the chip. For example, the receiving module in the transceiver module 1602 corresponds to input of the chip, and the sending module in the transceiver module 1602 corresponds to output of the chip. This is not limited in this application.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an ASIC, a system on chip (system on chip, SoC), a CPU, a network processor (network processor, NP), a digital signal processor (digital signal processor, DSP), a microcontroller (micro controller unit, MCU), a programmable controller (programmable logic device, PLD), or another integrated chip.

An embodiment of this application provides a communication system. The communication system includes one or more terminal devices and one or more network devices. The terminal device and the network device may be combined to perform the foregoing method embodiments. For a specific execution process, refer to the foregoing method embodiments. Details are not described herein again.

This application further provides a computer-readable storage medium. The computer-readable storage medium stores a computer program. When the computer-readable storage medium is executed by a computer, a function of any one of the foregoing method embodiments is implemented.

This application further provides a computer program product. When the computer program product is executed by a computer, functions of any one of the foregoing method embodiments are implemented.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor, or the like.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an, an EEPROM, or a flash memory. The volatile memory may be a RAM, and serves as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

In the specification, claims, and accompanying drawings of this application, the terms "first", "second", "third", and the like are intended to distinguish between different objects but do not limit a particular order.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first communication apparatus, second indication information from a second communication apparatus, wherein the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing; and
performing, by the first communication apparatus, signal measurement on the neighboring cell based on the second indication information.

2. The method according to claim 1, wherein the method further comprises:
receiving, by the first communication apparatus, fifth indication information from the second communication apparatus, wherein the fifth indication information indicates a third polarization manner of a first cell, and the third polarization manner comprises any one of left hand circular polarization, right hand circular polarization, linear polarization, or cross polarization multiplexing; and
communicating, by the first communication apparatus, with the second communication apparatus in the third polarization manner.

3. The method according to claim 2, wherein the method further comprises:
sending, by the first communication apparatus, sixth indication information to the second communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

4. A communication method, comprising:
determining, by a second communication apparatus, second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
sending, by the second communication apparatus, the second indication information.

5. The method according to claim 4, wherein the method further comprises:
determining, by the second communication apparatus, fifth indication information, wherein the fifth indication information indicates a third polarization manner of a first cell, and the third polarization manner comprises any one of left hand circular polarization, right hand circular polarization, linear polarization, or cross polarization multiplexing; and
sending, by the second communication apparatus, the fifth indication information.

6. The method according to claim 5, wherein the method further comprises:
receiving, by the second communication apparatus, sixth indication information from the first communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

7. The method according to any one of claims 1 to 6, wherein the second indication information further indicates a polarization manner of a neighboring cell of a cell in which the first communication apparatus in a first status is located, the first status comprises a connected state or an inactive state, and the second indication information is carried in terminal-level information.

8. The method according to claim 7, wherein the terminal-level information is radio resource control signaling.

9. The method according to claim 8, wherein the radio resource control signaling is radio resource control reconfiguration or radio resource control resume.

10. The method according to claim 9, wherein the second indication information is carried in a MeasConfig field or a MeasObjectNR field in the radio resource control reconfiguration or the radio resource control resume.

11. The method according to any one of claims 1 to 6, wherein the second indication information further indicates a polarization manner of a neighboring cell of a cell in which the first communication apparatus in a second status is located, the second status comprises an inactive state or an idle state, and the second indication information is carried in cell-level information.

12. The method according to claim 11, wherein the cell-level information is a system information block.

13. The method according to any one of claims 1 to 12, wherein the polarization manner of the neighboring cell comprises an uplink polarization manner of the neighboring cell and/or a downlink polarization manner of the neighboring cell.

14. The method according to claim 13, wherein the uplink polarization manner of the neighboring cell comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

15. The method according to claim 13, wherein the downlink polarization manner of the neighboring cell comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

16. The method according to claim 2 or 5, wherein the third polarization manner comprises a third uplink polarization manner and/or a third downlink polarization manner.

17. The method according to claim 16, wherein the third uplink polarization manner comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

18. The method according to claim 16, wherein the third downlink polarization manner comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

19. The method according to any one of claims 16 to 18, wherein the fifth indication information is carried in a system information block.

20. A communication method, comprising:
receiving, by a first communication apparatus, fourth indication information from a second communication apparatus, wherein the fourth indication information indicates a second polarization manner of a first beam, and the second polarization manner comprises any one of left hand circular polarization, right hand circular polarization, linear polarization, or cross polarization multiplexing; and
communicating, by the first communication apparatus, with the second communication apparatus based on the second polarization manner.

21. The method according to claim 20, wherein the method further comprises:
receiving, by the first communication apparatus, a first mapping relationship from the second communication apparatus, wherein the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

22. The method according to claim 20 or 21, wherein the method further comprises:
receiving, by the first communication apparatus, second indication information from the second communication apparatus, wherein the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing.

23. The method according to any one of claims 20 to 22, wherein the method further comprises:
receiving, by the first communication apparatus, third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing.

24. A communication method, comprising:
determining, by a second communication apparatus, fourth indication information, wherein the fourth indication information indicates a second polarization manner of a first beam, and the second polarization manner comprises any one of left hand circular polarization, right hand circular polarization, linear polarization, or cross polarization multiplexing; and
sending, by the second communication apparatus, the fourth indication information.

25. The method according to claim 24, wherein the method further comprises:
sending, by the second communication apparatus, a first mapping relationship, wherein the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

26. The method according to claim 24 or 25, wherein the method further comprises:
determining, by the second communication apparatus, second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
sending, by the second communication apparatus, the second indication information.

27. The method according to any one of claims 24 to 26, wherein the method further comprises:
determining, by the second communication apparatus, third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing; and
sending, by the second communication apparatus, the third indication information.

28. The method according to any one of claims 20 to 27, wherein the fourth indication information comprises an SSB index, and the SSB index corresponds to the second polarization manner; or
the fourth indication information comprises a CSI-RS time-frequency location, and the CSI-RS time-frequency location corresponds to the second polarization manner.

29. The method according to any one of claims 20 to 28, wherein the fourth indication information is carried in any one of radio resource control RRC, downlink control information DCI, or a media access control control element MAC CE.

30. The method according to claim 22 or 26, wherein the second indication information further indicates a polarization manner of a neighboring cell of a cell in which the first communication apparatus in a first status is located, the first status comprises a connected state or an inactive state, and the second indication information is carried in terminal-level information.

31. The method according to claim 22 or 26, wherein the second indication information further indicates a polarization manner of a neighboring cell of a cell in which the first communication apparatus in a second status is located, the second status comprises an inactive state or an idle state, and the second indication information is carried in cell-level information.

32. The method according to any one of claims 20 to 31, wherein the fourth indication information further indicates duration of the second polarization manner.

33. The method according to any one of claims 20 to 32, wherein the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

34. A first communication apparatus, comprising a transceiver module and a processing module, wherein
the transceiver module is configured to receive second indication information from a second communication apparatus, wherein the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing; and
the processing module is configured to perform signal measurement on the neighboring cell based on the second indication information.

35. The apparatus according to claim 34, wherein
the transceiver module is further configured to receive fifth indication information from the second communication apparatus, wherein the fifth indication information indicates a third polarization manner of a first cell, and the third polarization manner comprises any one of left hand circular polarization, right hand circular polarization, linear polarization, or cross polarization multiplexing; and
the processing module is further configured to communicate with the second communication apparatus in the third polarization manner.

36. The apparatus according to claim 35, wherein the transceiver module is further configured to send sixth indication information to the second communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

37. A second communication apparatus, comprising a transceiver module and a processing module, wherein
the processing module is configured to determine second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
the transceiver module is further configured to send the second indication information.

38. The apparatus according to claim 37, wherein
the processing module is further configured to determine fifth indication information, wherein the fifth indication information indicates a third polarization manner of a first cell, and the third polarization manner comprises any one of left hand circular polarization, right hand circular polarization, linear polarization, or cross polarization multiplexing; and
the transceiver module is further configured to send the fifth indication information.

39. The apparatus according to claim 38, wherein the transceiver module is further configured to receive sixth indication information from the first communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

40. The apparatus according to any one of claims 34 to 39, wherein the second indication information further indicates a polarization manner of a neighboring cell of a cell in which the first communication apparatus in a first status is located, the first status comprises a connected state or an inactive state, and the second indication information is carried in terminal-level information.

41. The apparatus according to claim 40, wherein the terminal-level information is radio resource control signaling.

42. The apparatus according to claim 41, wherein the radio resource control signaling is radio resource control reconfiguration or radio resource control resume.

43. The apparatus according to claim 42, wherein the second indication information is carried in a MeasConfig field or a MeasObjectNR field in the radio resource control reconfiguration or the radio resource control resume.

44. The apparatus according to any one of claims 34 to 39, wherein the second indication information further indicates a polarization manner of a neighboring cell of a cell in which the first communication apparatus in a second status is located, the second status comprises an inactive state or an idle state, and the second indication information is carried in cell-level information.

45. The apparatus according to claim 44, wherein the cell-level information is a system information block.

46. The apparatus according to any one of claims 34 to 45, wherein the polarization manner of the neighboring cell comprises an uplink polarization manner of the neighboring cell and/or a downlink polarization manner of the neighboring cell.

47. The apparatus according to claim 46, wherein the uplink polarization manner of the neighboring cell comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

48. The apparatus according to claim 46, wherein the downlink polarization manner of the neighboring cell comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

49. The apparatus according to claim 35 or 38, wherein the third polarization manner comprises a third uplink polarization manner and/or a third downlink polarization manner.

50. The apparatus according to claim 49, wherein the third uplink polarization manner comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

51. The apparatus according to claim 49, wherein the third downlink polarization manner comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, and downlink left hand circular polarization or right hand circular polarization cross polarization multiplexing.

52. The apparatus according to any one of claims 49 to 51, wherein the fifth indication information is carried in a system information block.

53. A first communication apparatus, comprising a transceiver module and a processing module, wherein
the transceiver module is configured to receive fourth indication information from a second communication apparatus, wherein the fourth indication information indicates a second polarization manner of a first beam, and the second polarization manner comprises any one of left hand circular polarization, right hand circular polarization, linear polarization, or cross polarization multiplexing; and
the processing module is configured to communicate with the second communication apparatus based on the second polarization manner.

54. The apparatus according to claim 53, wherein the transceiver module is further configured to receive a first mapping relationship from the second communication apparatus, and the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

55. The apparatus according to claim 53 or 54, wherein the transceiver module is further configured to receive second indication information from the second communication apparatus, the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing.

56. The apparatus according to any one of claims 53 to 55, wherein the transceiver module is further configured to receive third indication information, the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing.

57. A second communication apparatus, comprising a transceiver module and a processing module, wherein
the processing module is configured to determine fourth indication information, wherein the fourth indication information indicates a second polarization manner of a first beam, and the second polarization manner comprises any one of left hand circular polarization, right hand circular polarization, linear polarization, or cross polarization multiplexing; and
the transceiver module is configured to send the fourth indication information.

58. The apparatus according to claim 57, wherein the transceiver module is further configured to send a first mapping relationship, and the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

59. The apparatus according to claim 57 or 58, wherein
the processing module is further configured to determine second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
the transceiver module is further configured to send the second indication information.

60. The apparatus according to any one of claims 57 to 59, wherein
the processing module is further configured to determine third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing; and
the transceiver module is further configured to send the third indication information.

61. The apparatus according to any one of claims 53 to 60, wherein the fourth indication information comprises an SSB index, and the SSB index corresponds to the second polarization manner; or
the fourth indication information comprises a CSI-RS time-frequency location, and the CSI-RS time-frequency location corresponds to the second polarization manner.

62. The apparatus according to any one of claims 53 to 61, wherein the fourth indication information is carried in any one of radio resource control RRC, downlink control information DCI, or a media access control control element MAC CE.

63. The apparatus according to claim 55 or 59, wherein the second indication information further indicates a polarization manner of a neighboring cell of a cell in which the first communication apparatus in a first status is located, the first status comprises a connected state or an inactive state, and the second indication information is carried in terminal-level information.

64. The apparatus according to claim 55 or 59, wherein the second indication information further indicates a polarization manner of a neighboring cell of a cell in which the first communication apparatus in a second status is located, the second status comprises an inactive state or an idle state, and the second indication information is carried in cell-level information.

65. The apparatus according to any one of claims 53 to 64, wherein the fourth indication information further indicates duration of the second polarization manner.

66. The apparatus according to any one of claims 53 to 65, wherein the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

67. A communication apparatus, comprising a processor coupled to a memory, wherein the processor is configured to execute a computer program or instructions in the memory, so that the method according to any one of claims 1 to 33 is performed.

68. A computer-readable storage medium, comprising a computer program or instructions, wherein when the computer program or the instructions are run on a computer, the method according to any one of claims 1 to 33 is performed.

69. A computer program product, comprising a computer program or instructions, wherein when the computer program or the instructions are run on a computer, the method according to any one of claims 1 to 33 is performed.

70. A communication apparatus, configured to perform the method according to any one of claims 1 to 33.

71. A communication system, comprising the first communication apparatus according to any one of claims 34 to 36 and 40 to 52 and the second communication apparatus according to any one of claims 37 to 52; or comprising the first communication apparatus according to any one of claims 53 to 56 and 61 to 66 and the second communication apparatus according to any one of claims 57 to 66.

## Amended claims

### Amended claims under Art. 19.1 PCT

1. A communication method, comprising:
receiving, by a first communication apparatus, second indication information from a second communication apparatus, wherein the second indication information indicates a polarization manner of a neighboring cell of a cell in which the first communication apparatus in an inactive state is located, the polarization manner of the neighboring cell comprises one or more of left hand circular polarization, right hand circular polarization, linear polarization, or cross polarization multiplexing, and the second indication information is carried in terminal-level information; and
performing, by the first communication apparatus, signal measurement on the neighboring cell based on the second indication information.

2. The method according to claim 1, wherein the method further comprises:
receiving, by the first communication apparatus, fifth indication information from the second communication apparatus, wherein the fifth indication information indicates a third polarization manner of a first cell, and the third polarization manner comprises any one of left hand circular polarization, right hand circular polarization, linear polarization, or cross polarization multiplexing; and
communicating, by the first communication apparatus, with the second communication apparatus in the third polarization manner.

3. The method according to claim 2, wherein the method further comprises:
sending, by the first communication apparatus, sixth indication information to the second communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

4. A communication method, comprising:
determining, by a second communication apparatus, second indication information, wherein the second indication information indicates a polarization manner of a neighboring cell of a cell in which a first communication apparatus in an inactive state is located, and the polarization manner of the neighboring cell comprises one or more of left hand circular polarization, right hand circular polarization, linear polarization, or cross polarization multiplexing; and
sending, by the second communication apparatus, the second indication information, wherein the second indication information is carried in terminal-level information.

5. The method according to claim 4, wherein the method further comprises:
determining, by the second communication apparatus, fifth indication information, wherein the fifth indication information indicates a third polarization manner of a first cell, and the third polarization manner comprises any one of left hand circular polarization, right hand circular polarization, linear polarization, or cross polarization multiplexing; and
sending, by the second communication apparatus, the fifth indication information.

6. The method according to claim 5, wherein the method further comprises:
receiving, by the second communication apparatus, sixth indication information from the first communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

7. The method according to any one of claims 1 to 6, wherein the terminal-level information is radio resource control signaling.

8. The method according to claim 7, wherein the radio resource control signaling is radio resource control reconfiguration or radio resource control resume.

9. The method according to claim 8, wherein the second indication information is carried in a MeasConfig field or a MeasObjectNR field in the radio resource control reconfiguration or the radio resource control resume.

10. The method according to any one of claims 1 to 9, wherein the polarization manner of the neighboring cell comprises an uplink polarization manner of the neighboring cell and/or a downlink polarization manner of the neighboring cell.

11. The method according to claim 10, wherein the uplink polarization manner of the neighboring cell comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

12. The method according to claim 10, wherein the downlink polarization manner of the neighboring cell comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

13. The method according to claim 2 or 5, wherein the third polarization manner comprises a third uplink polarization manner and/or a third downlink polarization manner.

14. The method according to claim 13, wherein the third uplink polarization manner comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

15. The method according to claim 13, wherein the third downlink polarization manner comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, and downlink left hand circular polarization or right hand circular polarization cross polarization multiplexing.

16. The method according to any one of claims 13 to 15, wherein the fifth indication information is carried in a system information block.

17. A communication method, comprising:
receiving, by a first communication apparatus, fourth indication information from a second communication apparatus, wherein the fourth indication information indicates a second polarization manner of a first beam, and the second polarization manner comprises any one of left hand circular polarization, right hand circular polarization, linear polarization, or cross polarization multiplexing; and
communicating, by the first communication apparatus, with the second communication apparatus based on the second polarization manner.

18. The method according to claim 17, wherein the method further comprises:
receiving, by the first communication apparatus, a first mapping relationship from the second communication apparatus, wherein the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

19. The method according to claim 17 or 18, wherein the method further comprises:
receiving, by the first communication apparatus, second indication information from the second communication apparatus, wherein the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing.

20. The method according to any one of claims 17 to 19, wherein the method further comprises:
receiving, by the first communication apparatus, third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing.

21. A communication method, comprising:
determining, by a second communication apparatus, fourth indication information, wherein the fourth indication information indicates a second polarization manner of a first beam, and the second polarization manner comprises any one of left hand circular polarization, right hand circular polarization, linear polarization, or cross polarization multiplexing; and
sending, by the second communication apparatus, the fourth indication information.

22. The method according to claim 21, wherein the method further comprises:
sending, by the second communication apparatus, a first mapping relationship, wherein the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

23. The method according to claim 21 or 22, wherein the method further comprises:
determining, by the second communication apparatus, second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
sending, by the second communication apparatus, the second indication information.

24. The method according to any one of claims 21 to 23, wherein the method further comprises:
determining, by the second communication apparatus, third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing; and
sending, by the second communication apparatus, the third indication information.

25. The method according to any one of claims 17 to 24, wherein the fourth indication information comprises an SSB index, and the SSB index corresponds to the second polarization manner; or
the fourth indication information comprises a CSI-RS time-frequency location, and the CSI-RS time-frequency location corresponds to the second polarization manner.

26. The method according to any one of claims 17 to 25, wherein the fourth indication information is carried in any one of radio resource control RRC, downlink control information DCI, or a media access control control element MAC CE.

27. The method according to claim 19 or 23, wherein the second indication information further indicates a polarization manner of a neighboring cell of a cell in which the first communication apparatus in a first status is located, the first status comprises a connected state or an inactive state, and the second indication information is carried in terminal-level information.

28. The method according to claim 19 or 23, wherein the second indication information further indicates a polarization manner of a neighboring cell of a cell in which the first communication apparatus in a second status is located, the second status comprises an inactive state or an idle state, and the second indication information is carried in cell-level information.

29. The method according to any one of claims 17 to 28, wherein the fourth indication information further indicates duration of the second polarization manner.

30. The method according to any one of claims 17 to 29, wherein the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

31. A first communication apparatus, comprising a transceiver module and a processing module, wherein
the transceiver module is configured to receive second indication information from a second communication apparatus, wherein the second indication information indicates a polarization manner of a neighboring cell of a cell in which the first communication apparatus in an inactive state is located, the polarization manner of the neighboring cell comprises one or more of left hand circular polarization, right hand circular polarization, linear polarization, or cross polarization multiplexing, and the second indication information is carried in terminal-level information; and
the processing module is configured to perform signal measurement on the neighboring cell based on the second indication information.

32. The apparatus according to claim 31, wherein
the transceiver module is further configured to receive fifth indication information from the second communication apparatus, wherein the fifth indication information indicates a third polarization manner of a first cell, and the third polarization manner comprises any one of left hand circular polarization, right hand circular polarization, linear polarization, or cross polarization multiplexing; and
the processing module is further configured to communicate with the second communication apparatus in the third polarization manner.

33. The apparatus according to claim 32, wherein the transceiver module is further configured to send sixth indication information to the second communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

34. A second communication apparatus, comprising a transceiver module and a processing module, wherein
the processing module is configured to determine second indication information, wherein the second indication information indicates a polarization manner of a neighboring cell of a cell in which a first communication apparatus in an inactive state is located, and the polarization manner of the neighboring cell comprises one or more of left hand circular polarization, right hand circular polarization, linear polarization, or cross polarization multiplexing; and
the transceiver module is further configured to send the second indication information, wherein the second indication information is carried in terminal-level information.

35. The apparatus according to claim 34, wherein
the processing module is further configured to determine fifth indication information, wherein the fifth indication information indicates a third polarization manner of a first cell, and the third polarization manner comprises any one of left hand circular polarization, right hand circular polarization, linear polarization, or cross polarization multiplexing; and
the transceiver module is further configured to send the fifth indication information.

36. The apparatus according to claim 35, wherein the transceiver module is further configured to receive sixth indication information from the first communication apparatus, wherein the sixth indication information indicates a fourth polarization manner expected by the first communication apparatus, and the fourth polarization manner comprises any one of left hand circular polarization, right hand circular polarization, linear polarization, or cross polarization multiplexing.

37. The apparatus according to any one of claims 31 to 36, wherein the terminal-level information is radio resource control signaling.

38. The apparatus according to claim 37, wherein the radio resource control signaling is radio resource control reconfiguration or radio resource control resume.

39. The apparatus according to claim 38, wherein the second indication information is carried in a MeasConfig field or a MeasObjectNR field in the radio resource control reconfiguration or the radio resource control resume.

40. The apparatus according to any one of claims 31 to 39, wherein the polarization manner of the neighboring cell comprises an uplink polarization manner of the neighboring cell and/or a downlink polarization manner of the neighboring cell.

41. The apparatus according to claim 40, wherein the uplink polarization manner of the neighboring cell comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

42. The apparatus according to claim 40, wherein the downlink polarization manner of the neighboring cell comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

43. The apparatus according to claim 32 or 35, wherein the third polarization manner comprises a third uplink polarization manner and/or a third downlink polarization manner.

44. The apparatus according to claim 43, wherein the third uplink polarization manner comprises any one of uplink left hand circular polarization, uplink right hand circular polarization, uplink horizontal polarization, uplink vertical polarization, uplink +45° polarization, uplink -45° polarization, uplink horizontal and vertical cross polarization multiplexing, uplink ±45° cross polarization multiplexing, or uplink left hand circular polarization and right hand circular polarization cross polarization multiplexing.

45. The apparatus according to claim 43, wherein the third downlink polarization manner comprises any one of downlink left hand circular polarization, downlink right hand circular polarization, downlink horizontal polarization, downlink vertical polarization, downlink +45° polarization, downlink -45° polarization, downlink horizontal and vertical cross polarization multiplexing, downlink ±45° cross polarization multiplexing, or downlink left hand circular polarization and right hand circular polarization cross polarization multiplexing.

46. The apparatus according to any one of claims 43 to 45, wherein the fifth indication information is carried in a system information block.

47. A first communication apparatus, comprising a transceiver module and a processing module, wherein
the transceiver module is configured to receive fourth indication information from a second communication apparatus, wherein the fourth indication information indicates a second polarization manner of a first beam, and the second polarization manner comprises any one of left hand circular polarization, right hand circular polarization, linear polarization, or cross polarization multiplexing; and
the processing module is configured to communicate with the second communication apparatus based on the second polarization manner.

48. The apparatus according to claim 47, wherein the transceiver module is further configured to receive a first mapping relationship from the second communication apparatus, and the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

49. The apparatus according to claim 47 or 48, wherein the transceiver module is further configured to receive second indication information from the second communication apparatus, the second indication information indicates a polarization manner of a neighboring cell of a cell in which the first communication apparatus is located, and the polarization manner of the neighboring cell comprises one or more of left hand circular polarization, right hand circular polarization, linear polarization, or cross polarization multiplexing.

50. The apparatus according to any one of claims 47 to 49, wherein the transceiver module is further configured to receive third indication information, the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing.

51. A second communication apparatus, comprising a transceiver module and a processing module, wherein
the processing module is configured to determine fourth indication information, wherein the fourth indication information indicates a second polarization manner of a first beam, and the second polarization manner comprises any one of left hand circular polarization, right hand circular polarization, linear polarization, or cross polarization multiplexing; and
the transceiver module is configured to send the fourth indication information.

52. The apparatus according to claim 51, wherein the transceiver module is further configured to send a first mapping relationship, and the first mapping relationship comprises a mapping relationship between at least one synchronization signal and physical broadcast channel block SSB index and at least one polarization manner, or the first mapping relationship comprises a mapping relationship between at least one channel state information reference signal CSI-RS time-frequency location and at least one polarization manner.

53. The apparatus according to claim 51 or 52, wherein
the processing module is further configured to determine second indication information, wherein the second indication information indicates a polarization manner of a neighboring cell of a cell in which a first communication apparatus is located, and the polarization manner of the neighboring cell comprises one or more of left hand circular polarization, right hand circular polarization, linear polarization, or cross polarization multiplexing; and
the transceiver module is further configured to send the second indication information.

54. The apparatus according to claim 52 or 53, wherein
the processing module is further configured to determine third indication information, wherein the third indication information indicates a polarization manner of an adjacent beam of a beam on which the first communication apparatus is located, and the polarization manner of the adjacent beam comprises one or more of left hand circular polarization, right hand circular polarization, linear polarization, or cross polarization multiplexing; and
the transceiver module is further configured to send the third indication information.

55. The apparatus according to any one of claims 47 to 54, wherein the fourth indication information comprises an SSB index, and the SSB index corresponds to the second polarization manner; or
the fourth indication information comprises a CSI-RS time-frequency location, and the CSI-RS time-frequency location corresponds to the second polarization manner.

56. The apparatus according to any one of claims 47 to 54, wherein the fourth indication information is carried in any one of radio resource control RRC, downlink control information DCI, or a media access control control element MAC CE.

57. The apparatus according to claim 49 or 53, wherein the second indication information further indicates a polarization manner of a neighboring cell of a cell in which the first communication apparatus in a first status is located, the first status comprises a connected state or an inactive state, and the second indication information is carried in terminal-level information.

58. The apparatus according to claim 49 or 53, wherein the second indication information further indicates a polarization manner of a neighboring cell of a cell in which the first communication apparatus in a second status is located, the second status comprises an inactive state or an idle state, and the second indication information is carried in cell-level information.

59. The apparatus according to any one of claims 47 to 58, wherein the fourth indication information further indicates duration of the second polarization manner.

60. The apparatus according to any one of claims 47 to 59, wherein the fourth indication information is determined based on one or more of the following: polarization manners supported by all first communication apparatuses in the first beam, channel state information of channels in different polarization manners measured by all the first communication apparatuses in the first beam, service requirements of all the first communication apparatuses in the first beam, polarization manners expected by all the first communication apparatuses in the first beam, a weather condition in a coverage area of the first beam, or a crosstalk status between all orthogonally polarized channels in the first beam.

61. A communication apparatus, comprising a processor coupled to a memory, wherein the processor is configured to execute a computer program or instructions in the memory, so that the method according to any one of claims 1 to 30 is performed.

62. A computer-readable storage medium, comprising a computer program or instructions, wherein when the computer program or the instructions are run on a computer, the method according to any one of claims 1 to 30 is performed.

63. A computer program product, comprising a computer program or instructions, wherein when the computer program or the instructions are run on a computer, the method according to any one of claims 1 to 30 is performed.

64. A communication apparatus, configured to perform the method according to any one of claims 1 to 30.

65. A communication system, comprising the first communication apparatus according to any one of claims 31 to 33 and 37 to 46 and the second communication apparatus according to any one of claims 34 to 46; or comprising the first communication apparatus according to any one of claims 47 to 50 and 55 to 60 and the second communication apparatus according to any one of claims 51 to 60.
